# EUROPEAN PATENT APPLICATION

(11) **EP 4 742 690 A1**
(43) Date of publication of application: **13.05.2026**
(21) Application number: 24876238.7
(22) Date of filing: 13.08.2024
(51) Int. Cl.: H04N 23/63

(54) **PHOTOGRAPHING METHOD AND ELECTRONIC DEVICE**

(30) Priority: 11.10.2023 CN 202311315610
(71) Applicant: Honor Device Co., Ltd., Shenzhen, Guangdong 518040 (CN)
(72) Inventor: YI, Jie, Shenzhen, Guangdong 518040 (CN)
(74) Representative: Goddar, Heinz J.
(86) International application number: PCT/CN2024/111843
(87) International publication number: WO 2025/077418

(57) **Abstract**

Embodiments of this application provide an image shooting method and an electronic device. The method is applied to the electronic device. The electronic device includes a foldable screen, a front-facing camera, and a rear-facing camera. The foldable screen includes a first screen and a second screen. The front-facing camera and the first screen are on a same side, and the rear-facing camera and the first screen face away from each other. When the electronic device is in a folded state, the second screen and the rear-facing camera are on a same side. The method includes: when the electronic device is in a folded state, displaying a first image shooting preview interface through the first screen, where the first image shooting preview interface includes a first control and a second control, and the second control is used to control switching between the front-facing camera and the rear-facing camera; and in response to the first operation performed on the first control, controlling the first screen to be turned off, controlling the second screen to be turned on, and displaying a second image shooting preview interface through the second screen, where the second image shooting preview interface includes an image obtained by using the rear-facing camera. This method can implement a rear selfie and improve image shooting quality.

## Description

This application claims priority to Chinese Patent Application No. 202311315610.6, filed with the China National Intellectual Property Administration on October 11, 2023 and entitled "IMAGE SHOOTING METHOD AND ELECTRONIC DEVICE", which is incorporated herein by reference in its entirety.

### TECHNICAL FIELD

This application relates to the field of electronic technologies, and specifically, to an image shooting method and an electronic device.

### BACKGROUND

With gradually increasing requirements for display quality and portability of mobile phones, foldable screen mobile phones are increasingly popular among users.

The foldable screen mobile phone includes a front-facing camera and a rear-facing camera. Usually, when a selfie is taken by using the foldable screen mobile phone, only the front-facing camera can be used for image shooting, resulting in poor image shooting effect.

### SUMMARY

This application provides an image shooting method, an apparatus, an electronic device, a chip, a computer-readable storage medium, and a computer program product. This can improve selfie effect and improve user experience.

According to a first aspect, this application provides an image shooting method. The method is performed by an electronic device. The electronic device includes a foldable screen, a front-facing camera, and a rear-facing camera. The foldable screen includes a first screen and a second screen. The front-facing camera and the first screen are on a same side, and the rear-facing camera and the first screen face away from each other. When the electronic device is in an unfolded state, the first screen and the second screen are on a same side, or when the electronic device is in a folded state, the second screen and the rear-facing camera are on a same side. The method includes:
when the electronic device is in a folded state, the first screen is in a screen-on state, and the second screen is in a screen-off state, displaying a first image shooting preview interface through the first screen, where the first image shooting preview interface includes a first control and a second control, and the second control is used to control switching between the front-facing camera and the rear-facing camera; receiving a first operation performed by a user on the first control; and in response to the first operation, controlling the first screen to be turned off, controlling the second screen to be turned on, and displaying a second image shooting preview interface through the second screen, where the second image shooting preview interface includes an image obtained by using the rear-facing camera.

The electronic device may be an outward foldable screen device, for example, an outward foldable screen mobile phone. The first screen is also referred to as a primary screen, and the second screen is also referred to as a secondary screen. Optionally, the first screen and the first screen may be two parts of one foldable screen.

The first control is a rear selfie control, and the second control is a flip camera control. Optionally, a layout (namely, a selfie entry manner) of the first control and the second control may be a tiled manner, or a sliding manner. If the layout of the first control and the second control is a sliding manner, the first image shooting preview interface may be an interface brought up by the user through sliding. If the layout of the first control and the second control may be a tiled manner, the first image shooting preview interface is an interface that can be directly displayed without the user operation.

Optionally, the first image shooting preview interface may include an image obtained by using the rear-facing camera or an image obtained by using the front-facing camera. The second image shooting preview interface is an image shooting preview interface in a rear selfie scene. That is, a rear selfie scene may be accessed from a rear non-selfie scene in a folded state, or may be accessed from a front selfie scene in a folded state.

Optionally, the first operation may be an operation of tapping the first control on the first image shooting preview interface.

According to the image shooting method provided in the first aspect, when the electronic device is in a folded state, the first screen is in a screen-on state, and the second screen is in a screen-off state, the first image shooting preview interface is displayed. The first image shooting preview interface includes the first control. The user may trigger, by performing the first operation on the first control, an entry of a rear selfie function, that is, the first screen of the electronic device is turned off, the second screen is turned on, and the second image shooting preview interface in the rear selfie scene is displayed through the second screen. Because the second screen and the rear-facing camera are on the same side in a folded state, the user may capture, by using the rear-facing camera, a person or an object (that is, take a selfie) on a same side as the user, and view the first image shooting preview interface on the second screen, to help the user take a selfie. In addition, the second image shooting preview interface displays the image captured by using the rear-facing camera, that is, in the rear selfie scene, the image is obtained by using the rear-facing camera. Specifications, hardware configuration, and the like of the rear-facing camera are higher. The captured image has higher quality and better image shooting effect, improving user experience. In addition, the first image shooting preview interface includes both the first control and the second control. This helps the user select, as required, to tap the first control to access the rear selfie function or tap the second control to access the front selfie scene, meeting different requirements of the user in different scenes, and improving user experience.

In a possible implementation, displaying the first image shooting preview interface through the first screen includes: displaying a third image shooting preview interface through the first screen, where the third image shooting preview interface includes the second control; receiving a second operation on the second control performed by the user on the third image shooting preview interface; and in response to the second operation, displaying the first image shooting preview interface through the first screen.

The third image shooting preview interface does not include the first control.

Optionally, the second operation may be, for example, a sliding operation performed on the second control on the third image shooting preview interface.

In other words, in this implementation, the layout of the first control and the second control is a sliding manner. On the third image shooting preview interface, the second control is in a visible state, and the first control is in a hidden state. The user brings up the first control through the second operation, and displays the first image shooting preview interface.

Optionally, the third image shooting preview interface may include an image obtained by using the rear-facing camera, or may include an image obtained by using the front-facing camera. In other words, the third image shooting preview interface may be a preview interface of a rear non-selfie scene in a sliding selfie entry manner in a folded state, or may be a preview interface of a front selfie scene in a sliding selfie entry manner in a folded state.

In this implementation, the user can bring up the first control through the second operation, and can further select, as required, to tap the first control or the second control, facilitating use of the user and improving user experience. In addition, the second control is a control that is familiar to the user. When the user does not perform the second operation, the third image shooting preview interface does not display the first control, and displays only the second control. This meets a use habit of the user. Furthermore, due to a small quantity of controls, this facilitates control arrangement on the interface, avoids affecting another control operation performed by the user on the interface, and further improves user experience.

In a possible implementation, the third image shooting preview interface further includes an operation guide indicator, and the second operation is an operation performed on the second control, of sliding toward the operation guide indicator.

The operation guide indicator may be, for example, a double-headed arrow. The operation guide indicator can guide the user to perform the second operation, help the user understand a method for using a control, and improve user experience.

In a possible implementation, the operation guide indicator is displayed above the second control, and the second operation is a slide-up operation.

In this implementation, the second operation is the slide-up operation, and when interface layout space is limited, the second control can be simply and conveniently brought up through the slide-up operation. This facilitates a user operation and improves user experience.

In a possible implementation, the third image shooting preview interface further includes a camera setting control, and the method further includes: in response to a third operation performed by the user on the camera setting control, displaying a camera setting interface through the first screen, where the camera setting interface includes a first option, the first option is used to set a layout of the first control and the second control on an image shooting preview interface to a first manner or a second manner, and a current layout is the first manner; and displaying a fourth image shooting preview interface through the first screen in response to an operation of switching the layout to the second manner by using the first option and exiting the camera setting interface by the user, where the fourth image shooting preview interface includes the first control and the second control that are displayed in a tiled manner.

The first option is a selfie entry manner option. The first manner is a sliding manner, and the second manner is a tiled manner.

The fourth image shooting preview interface is an image shooting preview interface in a tiled selfie entry manner in a folded state. The fourth image shooting preview interface may include an image obtained by using the rear-facing camera or an image obtained by using the front-facing camera.

Optionally, the third operation may be, for example, an operation of tapping the camera setting control.

In this implementation, the user may autonomously switch, as required, a selfie entry manner by using the camera setting control, meeting use requirements of different users. This facilitates a user operation and improves user experience.

In a possible implementation, displaying the fourth image shooting preview interface through the first screen in response to the operation of switching the layout to the second manner by using the first option and exiting the camera setting interface by the user includes: displaying a first pop-up window in response to a fourth operation performed by the user on the first option, where the first pop-up window includes a second option corresponding to the first manner and a third option corresponding to the second manner, the second option is in a selected state, and the third option is in an unselected state; in response to a fifth operation performed by the user on the third option, displaying the second option in an unselected state, and displaying the third option in a selected state; and in response to closing the first pop-up window and exiting the camera setting interface by the user, displaying the fourth image shooting preview interface through the first screen.

The second option is a sliding option, and the third option is a tiled option.

The fourth operation may be, for example, an operation of tapping the first option. The fifth operation may be, for example, an operation of tapping the third option. The first pop-up window is a selfie entry manner setting pop-up window.

In this implementation, a status of an option is changed, so that the user can clearly learn of a currently selected layout, improving user experience.

In a possible implementation, displaying the first image shooting preview interface through the first screen includes: in response to starting a camera application in a folded state for the first time by the user, displaying the first image shooting preview interface, where the first image shooting preview interface further includes an image obtained by using the rear-facing camera and first guide information, where the first guide information is used to guide the user to take a selfie by using the rear-facing camera (that is, guide the user to use the rear selfie function).

In this implementation, the user starts the camera application in a folded state for the first time, and the electronic device displays the first guide information, to guide the user to use the rear selfie function. This helps the user understand a method for using the rear selfie function, and improves user experience.

In a possible implementation, the method further includes: in response to a sixth operation performed by the user on a blank area on the first image shooting preview interface, enabling the first guide information to disappear, and displaying a fifth image shooting preview interface through the first screen, where the fifth image shooting preview interface includes an image obtained by using the rear-facing camera, the second control, second guide information, and a sliding guide animation, and the second guide information and the sliding guide animation are used to guide the user to perform a sliding operation on the second control.

The sixth operation may be, for example, an operation of tapping the blank area on the first image shooting preview interface. The blank area is a location in which a control or guide information does not exist on the interface.

That is, when the rear non-selfie scene in a folded state is accessed for the first time in the camera application, the user may be guided, by using the second guide information and the sliding guide animation, to perform the sliding operation on the second control. This helps the user understand the rear selfie function and a manner for accessing the rear selfie function, helps the user access the rear selfie function, and thus improves selfie effect and user experience.

In a possible implementation, the method further includes: in response to a seventh operation performed by the user on the second control on the fifth image shooting preview interface, displaying a sixth image shooting preview interface through the first screen, where the sixth image shooting preview interface displays an image obtained by using the front-facing camera, the second control, the second guide information, and the sliding guide animation.

The seventh operation may be, for example, tapping the second control on the fifth image shooting preview interface.

That is, when the front selfie scene in a folded state is accessed for the first time in the camera application, the user may also be guided, by using the second guide information and the sliding guide animation, to perform the sliding operation on the second control. The camera application is in the front selfie scene, which indicates that the user is taking a selfie, and there is a high probability that the user uses the rear selfie function. Therefore, in this implementation, when the user accesses the front selfie scene in a folded state for the first time, the user is guided to perform the sliding operation to bring up the first control (namely, the rear selfie control). This helps the user understand the rear selfie function and a manner for accessing the rear selfie function, helps the user access the rear selfie function, and thus improves selfie effect and user experience.

In a possible implementation, displaying the first image shooting preview interface on the first screen includes: in response to an operation of starting a camera application by the user, displaying the first image shooting preview interface, where the first control and the second control are displayed on the first image shooting preview interface in a tiled manner.

In this implementation, the first control and the second control are displayed on the first image shooting preview interface in a tiled manner, and the user can intuitively see the controls, so that the user selects a rear selfie or a front selfie as required. This facilitates use and improves user experience.

In a possible implementation, the first image shooting preview interface includes an image obtained by using the rear-facing camera, and the method further includes: in response to an eighth operation performed by the user on the second control on the first image shooting preview interface, displaying a seventh image shooting preview interface, where the seventh image shooting preview interface includes an image obtained by using the front-facing camera, the first control, the second control, and a third control, and the first control and the second control are displayed on the seventh image shooting preview interface in a tiled manner; and in response to a ninth operation performed by the user on the third control, controlling the first screen to be turned off, controlling the second screen to be turned on, and displaying the second image shooting preview interface through the second screen.

The third control is a rear selfie switch.

Optionally, the eighth operation may be, for example, an operation of tapping the second control on the first image shooting preview interface. The ninth operation may be an operation of tapping the third control on the first image shooting preview interface.

In this implementation, the user may access the front selfie scene in a folded state by using the second control. A layout of the first control and the second control on a preview interface of the front selfie scene in a folded state is the same as that on a preview interface of the rear non-selfie scene in a folded state, and is also a tiled manner. This facilitates use and improves user experience.

In addition, the seventh image shooting preview interface further includes the third control, and the user may directly tap the third control to access the rear selfie function. This facilitates a user operation and improves user experience.

In a possible implementation, the method further includes: if it is detected that ambient light luminance is less than a preset threshold, displaying first guide information on the seventh image shooting preview interface, where the first guide information is used to guide the user to take a selfie by using the rear-facing camera.

If the ambient light luminance is less than the preset threshold, it indicates that the electronic device is in a low light environment.

In the front selfie scene, if the electronic device is in a low light environment, selfie effect is worse. Therefore, in this implementation, the user is guided, by using the first guide information, to take a selfie image with better effect by using the rear selfie function, improving user experience.

Optionally, the first guide information may be displayed only when the user has not used the rear selfie function, to avoid disturbance to the user.

In a possible implementation, controlling the first screen to be turned off, controlling the second screen to be turned on, and displaying the second image shooting preview interface through the second screen, in response to the first operation includes: in response to the first operation, displaying a first flip guide interface through the first screen, where the first flip guide interface is used to guide the user to flip the electronic device; and after the first flip guide interface is displayed for first preset duration, controlling the first screen to be turned off, controlling the second screen to be turned on, and displaying the second image shooting preview interface through the second screen.

In this implementation, when the rear selfie function is accessed, before screen switching is controlled, the first flip guide interface is first displayed, to guide the user to flip the electronic device. This helps the user learn of a manner for using the rear selfie function, and improves user experience.

Optionally, when displaying the first flip guide interface on the second screen, the electronic device may shield touch functions of the first screen and the second screen, that is, the user shields the touch functions of the first screen and the second screen within preset duration (for example, 3s) after performing the first operation. This can avoid affecting accessing the rear selfie function due to an accidental touch of the user, and improve user experience.

In a possible implementation, an image shooting mode in the second image shooting preview interface is the same as an image shooting mode in the first image shooting preview interface.

For example, on the first image shooting preview interface, if an image shooting mode selected by the user is a portrait mode, an image shooting mode in the second image shooting preview interface is also a portrait mode. This can inherit a selection of the user and improve user experience. Certainly, after accessing the rear selfie function, the user may alternatively switch the image shooting mode to another mode as required.

In a possible implementation, the second image shooting preview interface further includes third guide information, and the third guide information is used to guide the user to look at the rear-facing camera.

The third guide information is eye gaze guide information.

In this implementation, the user is guided, by using the third guide information, to look at the rear-facing camera, so that effect of an obtained rear selfie image is better.

Optionally, the third guide information may be displayed only when the user uses the rear selfie function for the first time, to reduce disturbance to the user.

In a possible implementation, the electronic device further includes a flash, the flash and the rear-facing camera are disposed on a same side, the second image shooting preview interface further includes a flash switch, and the method further includes: in response to an operation performed by the user on the flash switch, displaying an eighth image shooting preview interface through the second screen, where the eighth image shooting preview interface includes an image obtained by using the rear-facing camera and a fourth control; and in response to an operation performed by the user on the fourth control, controlling the flash to always remain on, and controlling screen luminance of the second screen to be increased.

In this implementation, when the rear selfie function is enabled, super strong fill light is supported. During use of the rear selfie function, the user may enable a super strong fill light function through one tap on the fourth control, improving rear selfie effect.

In a possible implementation, the second image shooting preview interface includes a fifth control and a sixth control, and after displaying the second image shooting preview interface through the second screen, the method further includes: in response to an operation performed by the user on the fifth control or the sixth control, displaying a second flip guide interface through the second screen, where the second flip guide interface is used to guide the user to flip the electronic device; and after the second flip guide interface is displayed for second preset duration, controlling the second screen to be turned off, controlling the first screen to be turned on, and displaying a ninth image shooting preview interface through the first screen, where the ninth image shooting preview interface includes an image obtained by using the rear-facing camera and the second control.

Optionally, the fifth control may be, for example, a primary screen switching control. The sixth control may be a rear selfie exit control.

In this implementation, after accessing the rear selfie function, the user may exit the function through one tap on the fifth control or the sixth control. This facilitates an operation and use of the user and improves user experience. In addition, when the rear selfie function is exited, before screen switching is controlled, the second flip guide interface is first displayed, to guide the user to flip the electronic device. This helps the user learn of a manner for exiting the rear selfie function, and improves user experience.

In a possible implementation, after controlling the second screen to be turned off, controlling the first screen to be turned on, and displaying the ninth image shooting preview interface through the first screen, the method further includes: if a first function has not been enabled, displaying a second pop-up window through the first screen, where the second pop-up window is used for the user to select whether to enable the first function.

Optionally, the first function may be a flip-to-wake function.

In this implementation, when the user has not enabled the first function, after the user exits the rear selfie function, the user is queried, by using the second pop-up window, whether to enable the first function. In this way, for a user who does not frequently use the camera setting control, and is not familiar with a camera function, this helps the user learn of the first function in time, and helps the user enable the first function.

Optionally, the second pop-up window may be displayed after the user uses the rear selfie function for the first time.

In a possible implementation, after displaying the second pop-up window, the method further includes: in response to enabling the first function by using the second pop-up window by the user, closing the second pop-up window, and displaying the ninth image shooting preview interface; and in response to flipping the electronic device by the user, controlling the first screen to be turned off, controlling the second screen to be turned on, and displaying the second image shooting preview interface through the second screen.

In other words, in this implementation, after the user enables the flip-to-wake function, the user may access the rear selfie function by flipping the electronic device without performing an operation like tapping the rear selfie control on the interface, to quickly and conveniently access the rear selfie function. This improves intelligence of the electronic device and user experience.

In a possible implementation, after the controlling the first screen to be turned off, controlling the second screen to be turned on, and displaying the second image shooting preview interface through the second screen, in response to flipping the electronic device by the user, includes: in response to flipping the electronic device by the user, controlling the second screen to be turned off, controlling the first screen to be turned on, and displaying the ninth image shooting preview interface through the first screen.

In this implementation, the user may exit the rear selfie function by flipping the electronic device without performing an operation like tapping the primary screen switching control or the rear selfie exit control on the interface, to quickly and conveniently exit the rear selfie function. This improves intelligence of the electronic device and user experience.

In a possible implementation, after controlling the second screen to be turned off, controlling the first screen to be turned on, and displaying the ninth image shooting preview interface through the first screen, the method further includes: if the layout of the first control and the second control on the image shooting preview interface has not been switched, displaying a third pop-up window through the first screen, where the third pop-up window is used for the user to select whether to switch the layout.

In this implementation, when the user has not switched the layout (namely, the selfie entry manner), the user is guided to switch the layout. In this way, for a user who does not frequently use the camera setting control, and is not familiar with a camera function, this helps the user learn in time that the layout is switchable, helps the user directly switch the layout, and helps the user use the rear selfie function.

Optionally, the third pop-up window may be displayed after the rear selfie function is used by the user for the second time. In this case, the third pop-up window and the first pop-up window in the foregoing embodiment can be displayed successively, to avoid affecting user experience due to simultaneously displaying a plurality of pop-up windows to the user.

In a possible implementation, after displaying the third pop-up window through the first screen, the method further includes: displaying the first guide information in response to switching the layout to the second manner by the user by using the third pop-up window, where the first guide information is used to guide the user to take a selfie by using the rear-facing camera.

In this implementation, after the user switches the layout, the first guide information is displayed, to guide the user to use the rear selfie function, improving user experience.

Optionally, the first guide information may be displayed only when the user switches the layout for the first time, to reduce disturbance to the user.

In a possible implementation, the method further includes: when the second image shooting preview interface is displayed on the second screen, in response to unfolding the electronic device to an unfolded state by the user, controlling the first screen to be turned on, and displaying a tenth image shooting preview interface jointly through the first screen and the second screen, where the tenth image shooting preview interface includes an image obtained by using the front-facing camera.

The tenth image shooting preview interface is an interface of the front selfie scene in an unfolded state.

In this implementation, during use of the rear selfie function, the user unfolds the foldable screen mobile phone to an unfolded state, which indicates that the user needs to take a selfie in an unfolded state. Therefore, directly accessing the front image shooting scene in an unfolded state is highly likely to meet a use requirement of the user, and user experience is improved.

In a possible implementation, the first image shooting preview interface displays an image obtained by using the front-facing camera; and displaying the first image shooting preview interface through the first screen includes: when the electronic device is in an unfolded state, and the tenth image shooting preview interface is displayed jointly through the first screen and the second screen, in response to folding the electronic device to a folded state by the user, controlling the first screen to be turned on, controlling the second screen to be turned off, and displaying the first image shooting preview interface through the first screen.

In other words, in this implementation, the first image shooting preview interface is the interface of the front selfie scene in a folded state, and the tenth image shooting preview interface is the interface of the front selfie scene in an unfolded state.

In this implementation, in the front selfie scene in an unfolded state, the mobile phone is directly folded, and the foldable screen mobile phone accesses the front selfie scene in a folded state in response to the user operation. Then, the user may access the rear selfie function by tapping the rear selfie control or using a flip-to-wake manner.

In a possible implementation, the method further includes: when the second image shooting preview interface is displayed on the second screen, in response to a tenth operation performed by the user on the first screen, exiting the camera application to a background; controlling the second screen to be turned off, and controlling the first screen to be turned on; in response to an eleventh operation performed by the user on the first screen, controlling the camera application to run in a foreground, and displaying a first flip guide interface through the first screen; and after the first flip guide interface is displayed for first preset duration, controlling the first screen to be turned off, controlling the second screen to be turned on, and displaying the second image shooting preview interface through the second screen.

The tenth operation is the operation of exiting the camera application to the background, and may be, for example, tapping a home page key in a three-key navigation bar, sliding up from the bottom of a screen, or sliding up a specific distance from the bottom of the screen and pausing to access a multi-task interface. The user taps an interface thumbnail of another task (application) on the multi-task interface. The eleventh operation is an operation of causing the camera application to rerun in the foreground, for example, may be an operation of tapping a camera application icon.

In this implementation, if the user exits the camera application to the background application, the electronic device may keep a memory of running the camera application. When the user re-starts the camera application, the rear selfie function continues to run. In this way, the user does not need to repeat the operation to access the rear selfie function. This simplifies the user operation and improves user experience.

In a possible implementation, the second image shooting preview interface includes a seventh control, where the seventh control includes a thumbnail, and the method further includes: when the second image shooting preview interface is displayed on the second screen, in response to tapping the seventh control by the user, displaying the first interface through the second screen, where the first interface includes an image corresponding to the thumbnail.

The seventh control is a thumbnail of an image captured by the user on the image shooting preview interface. The first interface is an image preview interface in a folded state.

In this implementation, during use of the rear selfie function, the user may view the captured image by using an image thumbnail on the second image shooting preview interface. The image can be displayed through the second screen. In this way, the user may view the image at any time without exiting the rear selfie function. This facilitates use of the user and improves user experience.

In a possible implementation, the method further includes: when the first interface is displayed on the second screen, in response to unfolding the electronic device to an unfolded state by the user, controlling the first screen to be turned on, and displaying the second interface jointly through the first screen and the second screen, where the second interface includes the image corresponding to the thumbnail.

The second interface is an image preview interface in an unfolded state.

In this implementation, when the rear selfie function is not exited, during viewing of the image through the second screen, if the user unfolds the electronic device to an unfolded state, the electronic device displays the image jointly through the first screen and the second screen. In other words, when viewing the image through the second screen, the user may unfold the foldable screen at any time, to simultaneously display the image through the first screen and the second screen, that is, a large image preview is supported. This facilitates use of the user and improves user experience.

According to a second aspect, this application provides an apparatus. The apparatus is included in an electronic device, and the apparatus has a function of implementing behavior of the electronic device in the first aspect and the possible implementations of the first aspect. The function can be implemented by hardware, or can be implemented by executing corresponding software by hardware. The hardware or software includes one or more modules or units corresponding to the foregoing function, for example, a receiving module or unit, or a processing module or unit.

According to a third aspect, this application provides an electronic device. The electronic device includes a processor, a memory, and an interface. The processor, the memory, and the interface cooperate with each other, so that the electronic device performs any method in the technical solutions of the first aspect.

According to a fourth aspect, this application provides a chip that includes a processor. The processor is configured to read and execute a computer program stored in a memory, to perform the method according to the first aspect or any one of the possible implementations of the first aspect.

Optionally, the chip further includes the memory, and the memory is connected to the processor by using a circuit or a wire.

Further, optionally, the chip further includes a communication interface.

According to a fifth aspect, this application provides a computer-readable storage medium. The computer-readable storage medium stores a computer program. When the computer program is executed by a processor, the processor is enabled to perform any method in the technical solutions of the first aspect.

According to a sixth aspect, this application provides a computer program product. The computer program product includes computer program code. When the computer program code is run on an electronic device, the electronic device is enabled to perform any method in the technical solutions of the first aspect.

### BRIEF DESCRIPTION OF DRAWINGS

FIG. 1 is a front view and a back view of an example of a foldable screen mobile phone 10 in an unfolded state according to an embodiment of this application;
FIG. 2 is a front view and a back view of an example of a foldable screen mobile phone 10 in a standing state according to an embodiment of this application;
FIG. 3 is a diagram of an example of a structure of a foldable screen mobile phone 10 in a folded state according to an embodiment of this application;
FIG. 4A and FIG. 4B are a diagram of an example of a photo shooting scene when a foldable screen mobile phone 10 is in an unfolded state according to an embodiment of this application;
FIG. 5A to FIG. 5C are a diagram of an example of a photo shooting scene when a foldable screen mobile phone 10 is in a folded state according to an embodiment of this application;
FIG. 6 is a diagram of an example of a structure of an electronic device 100 according to an embodiment of this application;
FIG. 7 is a diagram of an example of a software architecture of an electronic device 100 according to an embodiment of this application;
FIG. 8A to FIG. 8C are a diagram of an example of interface changes for a sliding selfie entry according to an embodiment of this application;
FIG. 9 is a diagram of an example of an interface of a tiled selfie entry according to an embodiment of this application;
FIG. 10A to FIG. 10F are a diagram of an example of interface changes for switching a selfie entry manner according to an embodiment of this application;
FIG. 11A to FIG. 11D are a diagram of an example of interface changes for setting a flip-to-wake function according to an embodiment of this application;
FIG. 12A to FIG. 12C are a diagram of an example of interface changes for accessing a rear selfie function according to an embodiment of this application;
FIG. 13A to FIG. 13C are a diagram of an example of interface changes for exiting a rear selfie function according to an embodiment of this application;
FIG. 14A to FIG. 14D are a diagram of an example of interface changes in a process of accessing a rear selfie function by using a rear selfie switch according to an embodiment of this application;
FIG. 15A to FIG. 15C are a diagram of an example of interface changes for accessing and exiting a rear selfie by using a flip-to-wake function according to an embodiment of this application;
FIG. 16A to FIG. 16D are a diagram of an example of an interface in a process of using a camera application in a folded state for the first time according to an embodiment of this application;
FIG. 17A to FIG. 17D are a diagram of an example of interface changes for using a front selfie function in a folded state for the first time according to an embodiment of this application;
FIG. 18 is a diagram of an example of a use guide interface present after switching a selfie entry manner for the first time according to an embodiment of this application;
FIG. 19 is a diagram of an example of a use guide interface of a front selfie in a low light environment according to an embodiment of this application;
FIG. 20 is a diagram of an example of an eye gaze guide interface according to an embodiment of this application;
FIG. 21 is a diagram of an example of an interface for querying whether to enable a flip-to-wake function according to an embodiment of this application;
FIG. 22A to FIG. 22D are a diagram of an example of an interface for guiding to switch a selfie entry manner according to an embodiment of this application;
FIG. 23A to FIG. 23E are a diagram of an example of interface changes for using super strong fill light according to an embodiment of this application;
FIG. 24A to FIG. 24D are a diagram of an example of interface changes for exiting a camera application in a process of accessing a rear selfie function according to an embodiment of this application;
FIG. 25A and FIG. 25B are a diagram of an example of interface changes for unfolding a mobile phone in a process of using a rear selfie function according to an embodiment of this application;
FIG. 26A to FIG. 26D are a diagram of an example of interface changes for viewing an image in a process of using a rear selfie function according to an embodiment of this application;
FIG. 27A to FIG. 27C are a diagram of an example of interface changes of a foldable mobile phone in an unfolded state for front image shooting according to an embodiment of this application;
FIG. 28A to FIG. 28C are a diagram of a structure of an example of a foldable screen mobile phone 20 according to an embodiment of this application; and
FIG. 29A to FIG. 29C are a diagram of an example of interface changes based on an inward foldable screen mobile phone accessing a rear selfie function according to an embodiment of this application.

### DESCRIPTION OF EMBODIMENTS

The following describes technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first", "second", and "third" mentioned below are merely intended for a purpose of description, and shall not be understood as an indication or implication of relative importance or implicit indication of the number of indicated technical features. Therefore, a feature limited by "first", "second", or "third" may explicitly or implicitly include one or more of the features.

Reference to "an embodiment", "some embodiments", or the like described in this specification of this application indicates that one or more embodiments of this application include a specific feature, structure, or characteristic described with reference to the embodiments. Therefore, statements "in one embodiment", "in some embodiments", "in some other embodiments", "in other embodiments", and the like in different places in this specification of this application do not necessarily refer to the same embodiment, but mean that "one or more but not all embodiments", unless otherwise specially emphasized in other ways. The terms "include", "comprise", and "have", and variants thereof all mean "include but are not limited to", unless otherwise specifically emphasized in another manner.

A foldable screen mobile phone is mainly classed into an outward foldable screen mobile phone and an inward foldable screen mobile phone. Both the outward foldable screen mobile phone and the inward foldable screen mobile phone may include the following states: a folded state, a standing state, and an unfolded state. The standing state means a state between a folded state and an unfolded state. The outward foldable screen mobile phone and the inward foldable screen mobile phone each include a foldable screen. In an unfolded state, the foldable screen is in an unfolded state. When the outward foldable screen mobile phone is in an unfolded state, and a foldable screen faces a user, if the mobile phone is folded toward a side away from the user (referred to as outward folding), a status of the outward foldable screen mobile phone changes to a standing state, and if the mobile phone continues to be folded outward, and a status changes to a folded state. When the inward foldable screen mobile phone is in an unfolded state, and a foldable screen faces a user, if the mobile phone is folded toward a side close to the user (referred to as inward folding), a status of the outward foldable screen mobile phone changes to a standing state, and if the mobile phone continues to be folded inward, and a status changes to a folded state.

In embodiments of this application, an image shooting method is mainly described by using an outward foldable screen mobile phone as an example. For ease of understanding, a structure of the outward foldable screen mobile phone is first described.

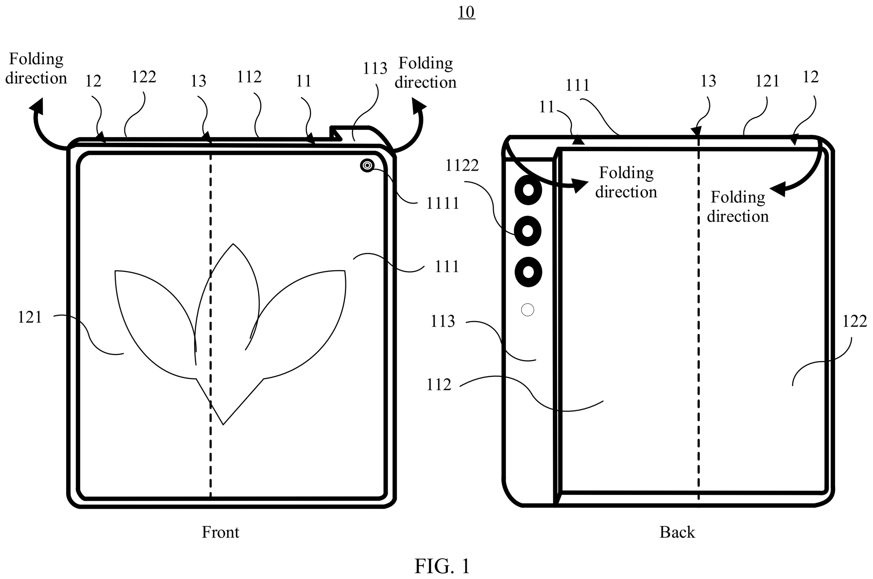

For example, FIG. 1 shows a front view and a back view of an example of a foldable screen mobile phone 10 in an unfolded state, and the foldable screen mobile phone 10 is an outward foldable screen mobile phone. As shown in FIG. 1, the foldable screen mobile phone 10 includes a first mechanical part 11, a second mechanical part 12, and a connection component 13 (located at a location shown by a dashed line in FIG. 1) that connects the first mechanical part 11 and the second mechanical part 12. The first mechanical part 11 and the second mechanical part 12 implement flip folding by using the connection component 13.

The first mechanical part 11 may include a main display screen (briefly referred to as a primary screen, also referred to as a first screen) 111, a first back housing 112, and a protrusion part 113. A front-facing camera 1111 is disposed on the primary screen 111. The first back housing 112 and the protrusion part 113 are disposed on a back of the primary screen 111. A rear-facing camera 1122 may be disposed on the protrusion part 113.

The second mechanical part 12 may include a secondary display screen (briefly referred to as a secondary screen, also referred to as a second screen) 121 and a second back housing 122. The second back housing 122 is disposed on a back of the secondary screen 121.

During use, an included angle between the first mechanical part 11 and the second mechanical part 12 is changed by using the connection component 13, to implement a plurality of states of the foldable screen mobile phone 10. It may be understood that the secondary screen 121 and the primary screen 111 may be essentially an integrally formed flexible display screen (namely, a foldable screen). When the foldable screen mobile phone 10 is folded by using the connection component 13, the connection component 13 divides a screen into the primary screen 111 and the secondary screen 121, where the primary screen 111 and the rear-facing camera are on a same side of the connection component.

As shown in FIG. 1, when the included angle between the first mechanical part 11 and the second mechanical part 12 is approximately 180°, the foldable screen mobile phone 10 is in an unfolded state. In this case, a surface of the first back housing 112 of the first mechanical part 11 and a surface of the second back housing 122 of the second mechanical part 12 are approximately on a same plane. A surface of the primary screen 111 and a surface of the secondary screen 121 are approximately on a same plane, that is, the primary screen 111 and the secondary screen 121 are on a same side. In an unfolded state, an outgoing light direction of the primary screen 111 and an outgoing light direction of the secondary screen 121 are the same as an incoming light direction of the rear-facing camera. In an unfolded state, the foldable screen mobile phone 10 simultaneously displays, through the primary screen 111 and the secondary screen 121, to-be-displayed content. Optionally, in an unfolded state, the primary screen 111 and the secondary screen 121 may jointly display an interface of a same application, or may display interfaces of different applications in a split-screen manner.

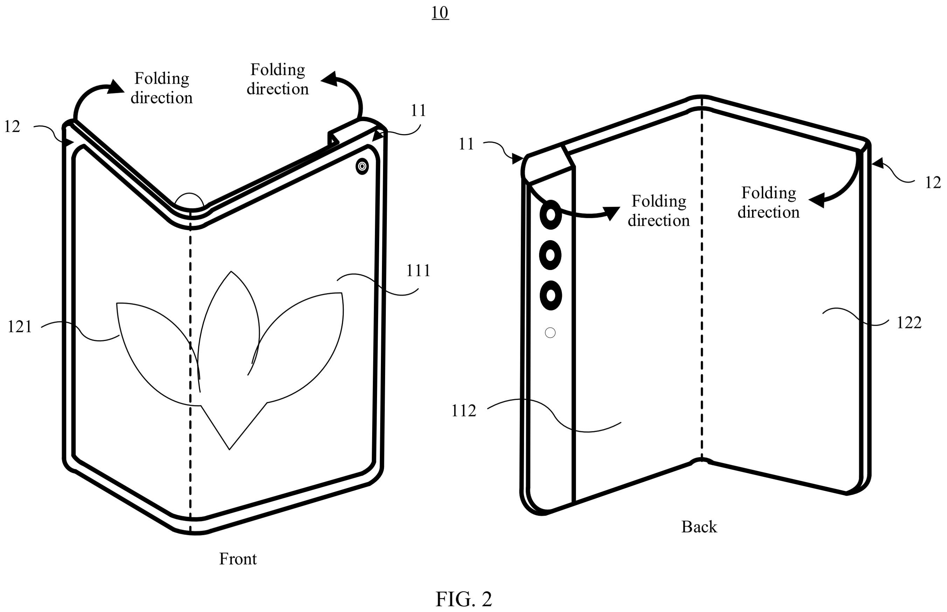

When the foldable screen mobile phone 10 is in the unfolded state shown in FIG. 1, and the primary screen 111 and the secondary screen 121 are simultaneously turned on, a user may gradually fold the foldable screen mobile phone 10 outward (in a direction shown by an arrow in FIG. 1), so that the foldable screen mobile phone 10 is in a standing state, as shown in FIG. 2.

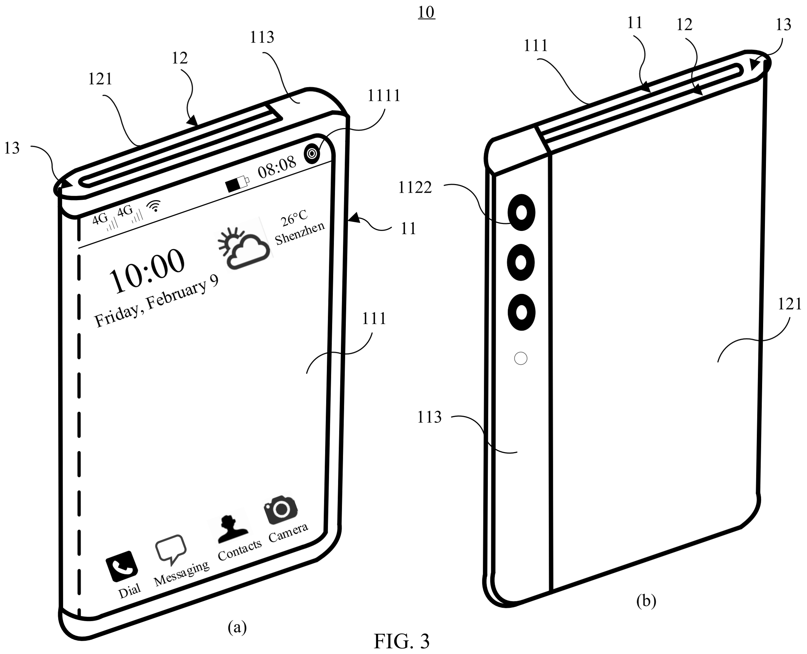

When the foldable screen mobile phone 10 is in a standing state, if the included angle between the first mechanical part 11 and the second mechanical part 12 is greater than 45°, the primary screen and the secondary screen are simultaneously turned on, as shown in FIG. 2. When the included angle between the first mechanical part 11 and the second mechanical part 12 gradually decreases to approximately 45°, the secondary screen 121 is turned off, and only the primary screen 111 is in a screen-on state, and displays to-be-displayed content. During subsequent folding, only the primary screen 111 is always turned on, until the included angle between the first mechanical part 11 and the second mechanical part 12 is approximately 0° and a folded state shown in FIG. 3 is presented.

As shown in (a) and (b) in FIG. 3, when the foldable screen mobile phone 10 is in a folded state, the surface of the secondary screen 121 of the second mechanical part 12 and a surface of the protrusion part 113 of the first mechanical part 11 are approximately on a same plane. In this case, the secondary screen 121 and the rear-facing camera 1122 are on a same side. In a folded state, the outgoing light direction of the secondary screen 121 is opposite to the incoming light direction of the rear-facing camera 1122.

In a folded state, the foldable screen mobile phone 10 displays, through the primary screen 111, to-be-displayed content. The secondary screen 121 does not display the content, and may be in a screen-off state. It should be noted that, when being in a screen-off state, the secondary screen 121 does not receive a touch operation. Therefore, in a folded state, the user performs a touch operation through the primary screen 111.

Status changes of a screen and the like in a process in which the foldable screen mobile phone 10 gradually unfolds from a folded state to an unfolded state is reverse of those in a process of folding from an unfolded state to a folded state. Details are not described again.

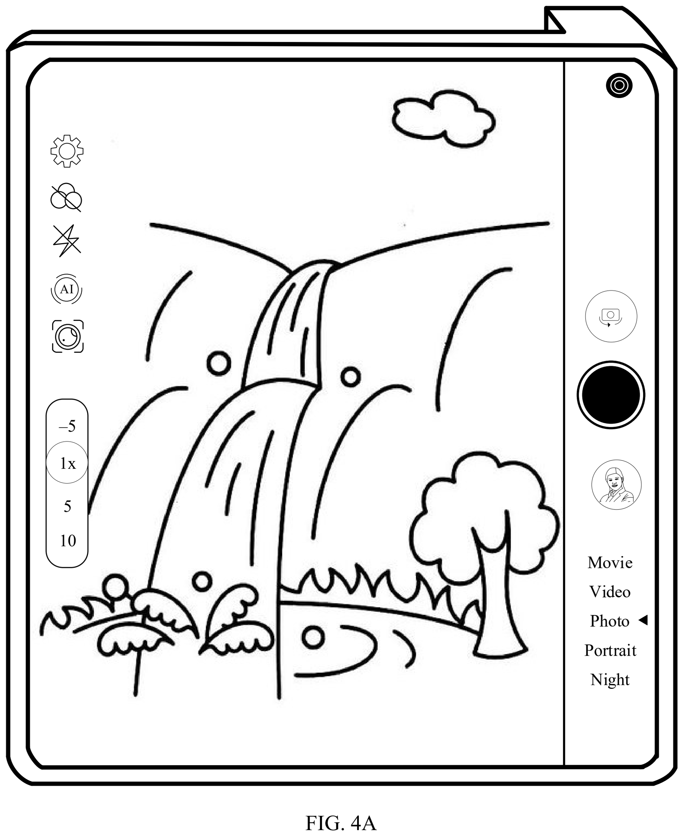

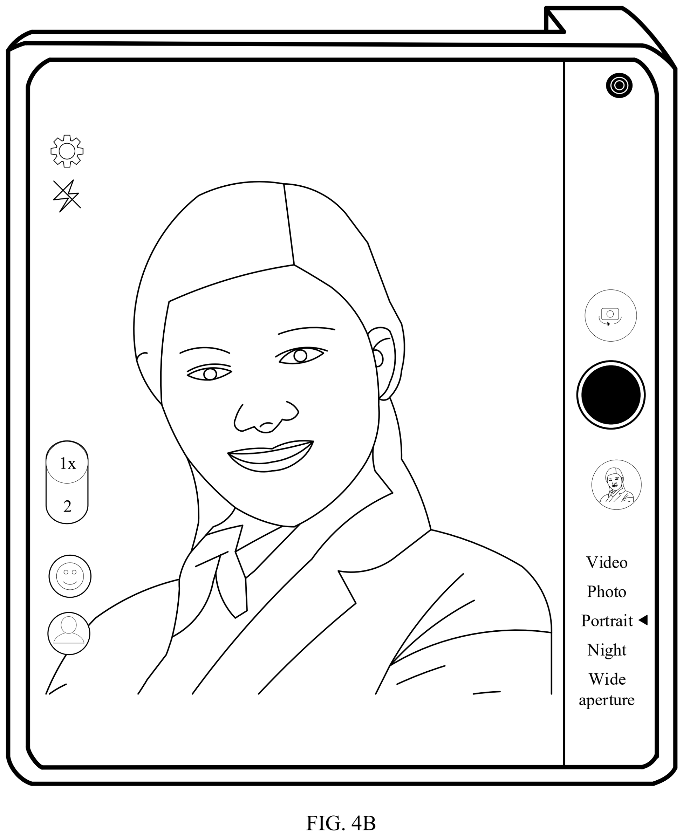

With support of a structure of the foldable screen mobile phone 10 described in FIG. 1 to FIG. 3, in a photo shooting scene, when the foldable screen mobile phone 10 is in the unfolded state shown in FIG. 1, the user may capture a surrounding person or object by using the rear-facing camera 1122, and a captured image may be simultaneously displayed through the primary screen 111 and the secondary screen 121. As shown in FIG. 4A, this image shooting scene is also referred to as a rear non-selfie scene in an unfolded state. In addition, when the foldable screen mobile phone 10 is in the unfolded state shown in FIG. 1, the user may further use the front-facing camera 1111 to take a selfie. A captured image may be simultaneously displayed through the primary screen 111 and the secondary screen 121, as shown in FIG. 4B. This image shooting scene is also referred to as a front selfie scene in an unfolded state.

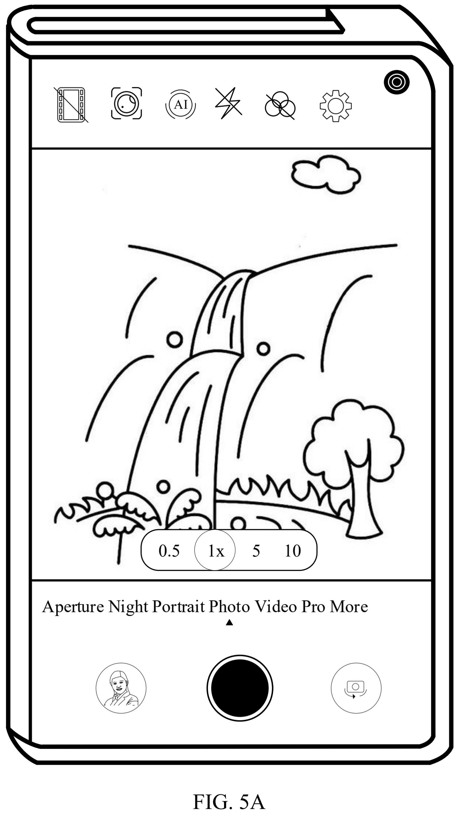

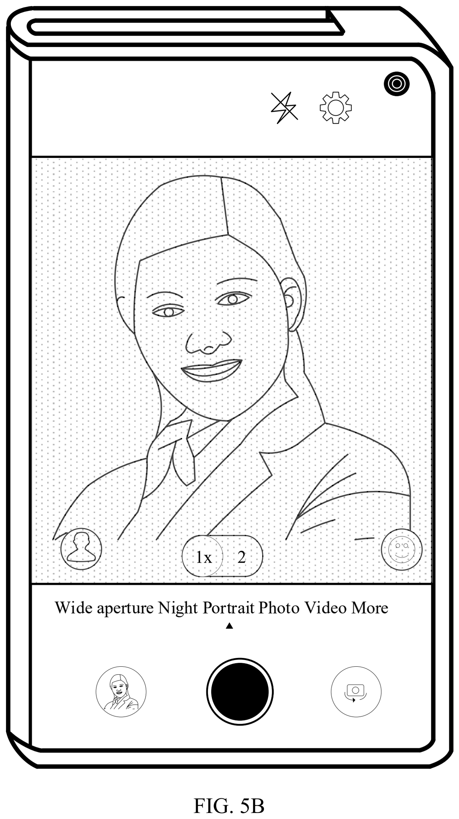

When the foldable screen mobile phone 10 is in the folded state shown in FIG. 3, the user may capture a surrounding person or object by using the rear-facing camera 1122, and a captured image is displayed through the primary screen 111, as shown in FIG. 5A. This image shooting scene is also referred to as a rear non-selfie scene in a folded state. When the foldable screen mobile phone 10 is in the folded state shown in FIG. 3, the user may further use the front-facing camera 1111 to take a selfie. A captured image is displayed through the primary screen 111, as shown in FIG. 5B. This image shooting scene is also referred to as a front selfie scene in a folded state.

However, specifications of the front-facing camera of the mobile phone are usually low, and quality and effect of the obtained image captured by using the front-facing camera are poor.

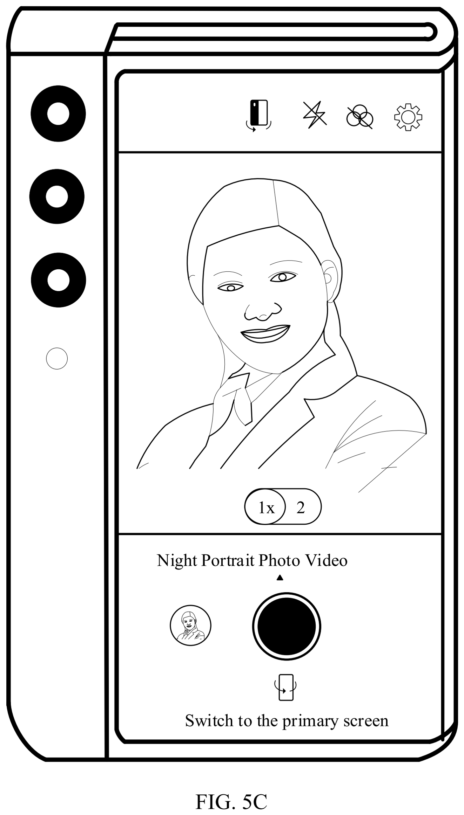

In view of this, an embodiment of this application provides an image shooting method. In a case in which the foldable screen mobile phone is in a folded state, when the user captures by using the foldable screen mobile phone, a rear selfie (also referred to as super selfie) function is provided for the user. After the rear selfie function is enabled, the mobile phone starts the rear-facing camera 1122 to capture an image, and the secondary screen 121 is turned on. In this case, through the secondary screen 121, the user can control image shooting and view the captured image. This can improve image shooting quality and effect of a selfie, and improve image shooting experience of the user. In embodiments of this application, a scene captured by using the rear selfie function may be referred to as a rear selfie scene. An image shooting preview interface in the rear selfie scene may be shown in FIG. 5C.

It may be understood that the image shooting method provided in this embodiment of this application may be applied to any electronic device equipped with a foldable screen and a camera application, and is not limited to a foldable screen mobile phone. In embodiments of this application, a foldable screen mobile phone is used as an example for description.

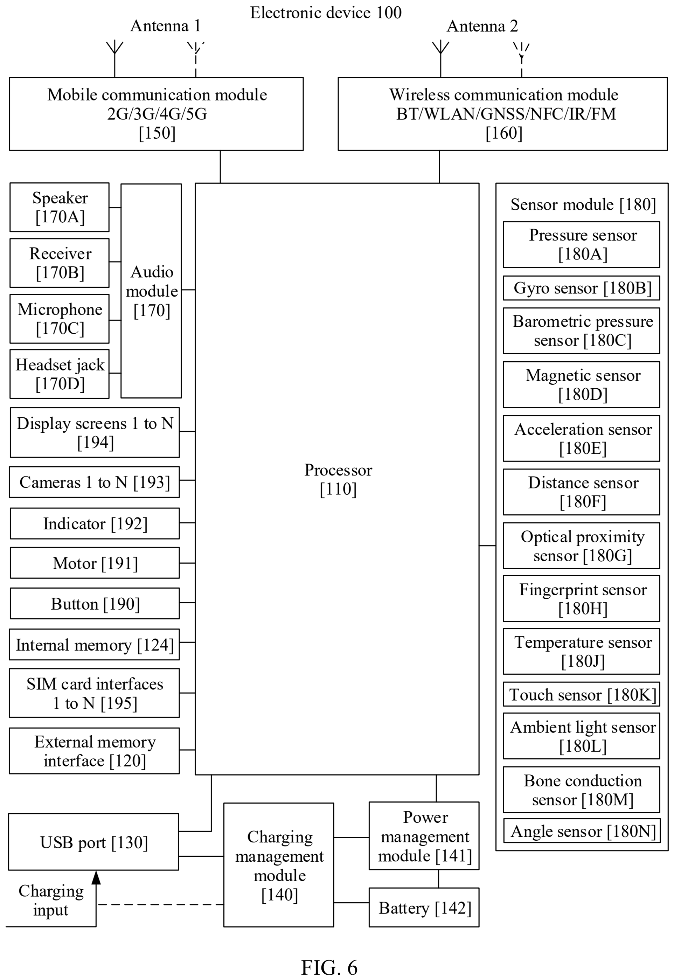

For example, FIG. 6 is a diagram of a structure of an electronic device 100 according to an embodiment of this application.

The electronic device 100 may include a processor 110, an external memory interface 120, an internal memory 124, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, an angle sensor 180N, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to reuse the instructions or data, the processor 110 may directly call the instructions or data from the memory. This avoids repeated access, reduces wait time of the processor 110, and improves system efficiency.

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculation for graphic rendering.

The display screen 194 is configured to display an image, a video, and the like. The display screen 194 includes a display panel. In some embodiments, the electronic device 100 may include 1 or N display screens 194, and N is a positive integer greater than 1. In embodiments of this application, N may be equal to 2, that is, the electronic device 100 may include two display screens 194: a primary screen and a secondary screen. The primary screen and the secondary screen may be connected as a whole, and are made of a flexible material.

The electronic device 100 may implement an image shooting function through the camera 193, the ISP, the video codec, the GPU, the display screen 194, the application processor and the like.

The ISP is configured to process data fed back by the camera 193. For example, during image shooting, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, luminance, and skin tone of the image. The ISP may further optimize parameters such as exposure and a color temperature of an image shooting scene. In some embodiments, the ISP may be disposed in the camera 193.

The camera 193 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) photoelectric transistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like an RGB format or a YUV format. In some embodiments, the electronic device 100 may include one or N cameras 193, where N is a positive integer greater than 1. In embodiments of this application, N may be equal to 2, that is, the electronic device 100 may include two cameras: a front-facing camera, and a rear-facing camera. The front-facing camera is disposed on the primary screen, and the rear-facing camera is disposed on the protrusion part.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 124 may be configured to store computer-executable program code. The executable program code includes instructions. The processor 110 runs the instructions stored in the internal memory 124, to perform various function applications of the electronic device 100 and data processing.

The angle sensor 180N is configured to detect the included angle between the first mechanical part and the second mechanical part, to determine, based on the included angle, whether a status of the electronic device is a folded state or an unfolded state, to control a status of the primary screen and a status of the secondary screen.

The gyro sensor 180B may be configured to determine a moving posture of the electronic device 100. The magnetic sensor 180D includes a Hall sensor. The electronic device 100 may detect opening and closing of a flip cover by using the magnetic sensor 180D. The acceleration sensor 180E may detect accelerations in various directions (usually on three axes) of the electronic device 100. The distance sensor 180F is configured to measure a distance. The electronic device 100 may measure the distance in an infrared manner or a laser manner. In some embodiments, in an image shooting scene, the electronic device 100 may use the distance sensor 180F for ranging, to implement quick focusing.

In embodiments of this application, one or more of a gyro sensor 180B, a magnetic sensor 180D, an acceleration sensor 180E, a distance sensor 180F, and the like cooperate to implement flip detection on the electronic device 100, that is, detect whether the electronic device is flipped.

The ambient light sensor 180L is configured to sense ambient light luminance. The electronic device 100 may adaptively adjust luminance of the display screen 194 based on the sensed ambient light luminance. The ambient light sensor 180L may also be configured to automatically adjust white balance during image shooting. In embodiments of this application, in the front selfie scene, surrounding ambient luminance may be detected by using the ambient light sensor 180L, to determine whether to display rear selfie guide information.

The touch sensor 180K is also referred to as a touch panel. The touch sensor 180K may be disposed on the display screen 194, and the touch sensor 180K and the display screen 194 constitute a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided through the display screen 194. In some other embodiments, the touch sensor 180K may also be disposed on a surface of the electronic device 100 at a position different from that of the display screen 194.

The foregoing describes a hardware system of the electronic device 100 in detail, and the following describes a software system of the electronic device 100. The software system may use a layered architecture, an event-driven architecture, a microkernel architecture, a microservice architecture, or a cloud architecture. The layered architecture is used as an example in this embodiment of this application to describe an example of the software system of the electronic device 100.

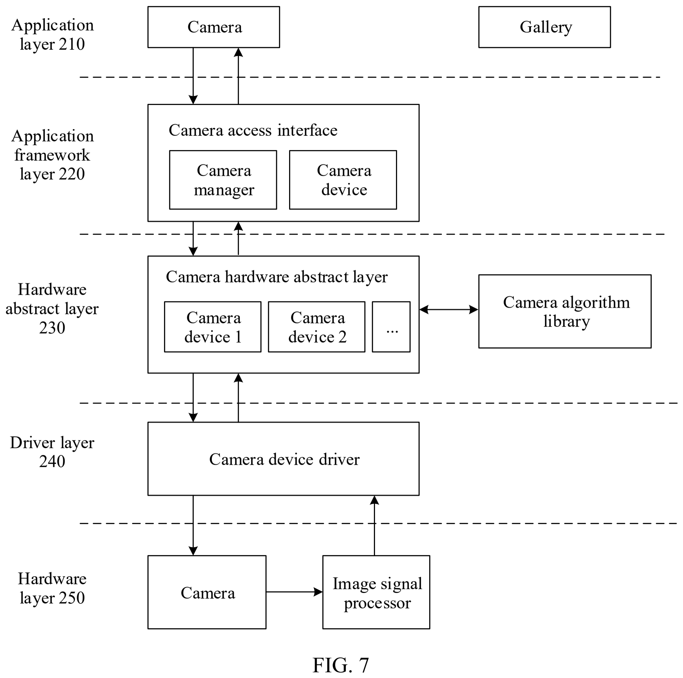

As shown in FIG. 7, a software system using a layered architecture is divided into several layers, and each layer has a clear role and task. The layers communicate with each other through software interfaces. In some embodiments, the software system may be divided into four layers: an application layer 210, an application framework layer 220, a hardware abstract layer 230, and a driver layer 240 from top to bottom. In addition, for ease of description, FIG. 7 further shows a hardware layer 250 of the electronic device.

The application layer 210 may include applications such as camera and gallery, and may further include applications such as calendar, phone, map, navigation, WLAN, Bluetooth, music, video, and messaging.

The application framework layer 220 provides an application access interface and a programming framework for applications of the application layer 210.

For example, the application framework layer 220 includes a camera access interface. The camera access interface is configured to provide a camera image shooting service through a camera manager and a camera device.

The camera manager at the application framework layer 220 is configured to manage the camera. The camera manager may obtain a parameter of the camera, for example, determine a working status and the like of the camera.

The camera device in the application framework layer 220 is configured to provide a data access interface between different camera devices and camera managers.

The hardware abstract layer 230 is configured to abstract hardware. For example, the hardware abstract layer 230 may include a camera hardware abstract layer and another hardware device abstract layer. The camera hardware abstract layer may include a camera device 1, a camera device 2, and the like. The camera hardware abstract layer may be connected to a camera algorithm library, and the camera hardware abstract layer may call an algorithm in the camera algorithm library.

The driver layer 240 is configured to provide drivers for different hardware devices. For example, the driver layer may include a camera driver. A digital signal processor driver and a graphics processing unit driver.

The hardware layer 250 may include a sensor, an image signal processor, a digital signal processor, a graphics processing unit, and another hardware device. The sensor may include a sensor 1, a sensor 2, and the like, and may also include a time of flight (time of flight, TOF) sensor and a multi-spectral sensor.

The following describes an example of a working process of the software system of the electronic device 100 with reference to a photo shooting scene.

When the user performs a tap operation on the touch sensor 180K corresponding to an image shooting control, after a camera APP is woken through the tap operation, all camera devices of the camera hardware abstract layer are called by using a camera access interface. For example, the camera hardware abstract layer determines that a current zoom ratio is between a zoom ratio range of [0.6, 0.9]. In this case, an instruction for calling a wide-angle camera may be delivered to a camera device driver, and simultaneously the camera algorithm library starts to load a preset algorithm.

After the sensor at the hardware layer is called, for example, after a sensor 1 in the wide-angle camera is called, the sensor 1 obtains an original image, and sends the original image to the image signal processor for preliminary processing such as registration. The preliminarily processed image is returned to the hardware abstract layer through the camera device driver, and is then processed by using the preset algorithm in the camera algorithm library to obtain a captured image (namely, a photo). The obtained image is sent back to the camera application for display and storage through the camera hardware abstract layer and the camera access interface.

It should be noted that the foregoing process describes a working process of the software system present after the user taps the image shooting control. In an image shooting preview scene, a working process in which the software system of the electronic device obtains an image is similar to the foregoing process. A difference lies in that the user does not tap the image shooting control. Therefore, the image may not be stored, and displayed only on the image shooting preview interface.

The following specifically describes the image shooting method provided in an embodiment of this application by using an example in which the electronic device is an outward foldable screen mobile phone with reference to an application scene and accompanying drawings.

For ease of understanding, several terms in the following embodiments are first described.

### 1. Enable a function

In embodiments of this application, when the foldable screen mobile phone has a specific function, enabling the function means turning on a switch of the function, so that the foldable screen mobile phone can use the function. After a specific function is enabled, it means that the function is in an enabled state, or an on state, or that the function is enabled. It may be understood that some functions, for example, a smile capture function of the camera application, may be in an on state by turning on switches. However, some functions remain in an on state, and do not need to be enabled or disabled, for example, an image shooting function, a rear selfie function, and a flip camera function of the camera.

### 2. Disable a function

In embodiments of this application, when the foldable screen mobile phone has a specific function, disabling the function means turning off a switch of the function, so that the foldable screen mobile phone cannot use the function. After a specific function is disabled, it means that the function is in a disabled state, or that the function is enabled.

### 3. Access a function

In embodiments of this application, accessing a specific function means starting to use the function through a user operation or an automatic trigger of the foldable screen mobile phone when the foldable screen mobile phone has enabled the function. Accessing a function also means enabling a function, starting a function or the like.

### 4. Exit a function

In embodiments of this application, exiting a specific function means stopping using the function through a user operation or an automatic trigger of the foldable screen mobile phone when the foldable screen mobile phone has enabled the function.

During implementation of this application, the camera application in the foldable screen mobile phone has the rear selfie function. The user may take a selfie by using the rear-facing camera to improve quality and effect of an obtained selfie image. The following describes a related process based on a use phase of the rear selfie function with reference to an application scene.

### I. Selfie entry manner

### 1. Introduction to a selfie entry manner

In embodiments of this application, a selfie function may include a front selfie function and a rear selfie function. A selfie entry is an entry of the front selfie function and/or an entry of the rear selfie function. In a specific embodiment, the entry of the front selfie function may be a flip camera control (also referred to as a second control), and the entry of the rear selfie function may be a rear selfie control (also referred to as a first control). The selfie entry manner means a display manner (also referred to as a layout) of the entry of the front selfie function and the entry of the rear selfie function. Therefore, the selfie entry manner is essentially a display manner of the flip camera control and the rear selfie control.

Optionally, there may be a plurality of selfie entry manners, for example, a sliding manner (also referred to as a first manner), and a tiled manner (also referred to as a second manner). Descriptions are separately provided below with reference to the accompanying drawings.

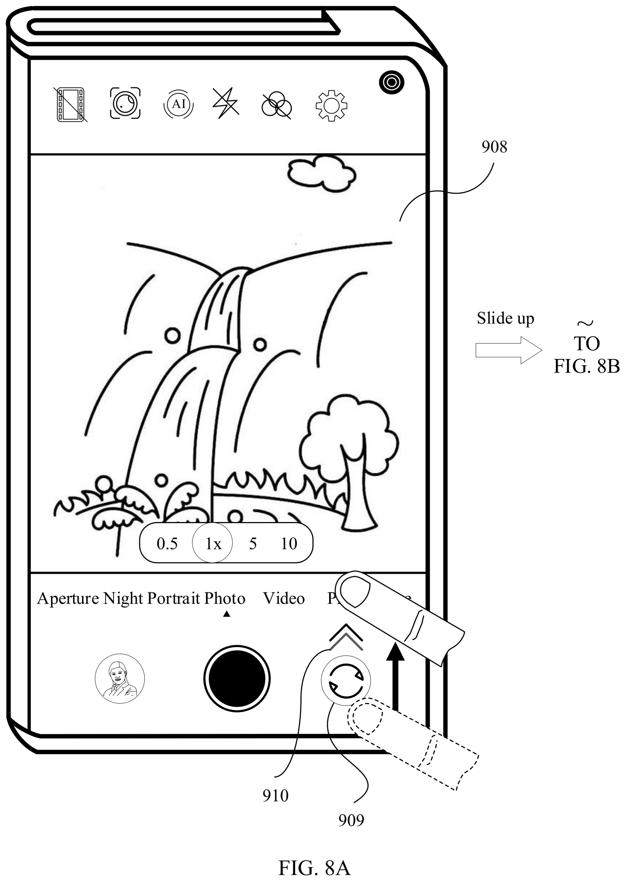

For example, FIG. 8A to FIG. 8C are a diagram of an example of interface changes for a sliding selfie entry according to an embodiment of this application. As shown in FIG. 8A, the foldable screen mobile phone is in a folded state, and the secondary screen is in a screen-off state. When the selfie entry manner is a sliding manner, after the camera application is started, the foldable screen mobile phone obtains an image by using the rear-facing camera, and displays an image shooting preview interface 908 through the primary screen. The image shooting preview interface 908 includes the image obtained by using the rear-facing camera, and the sliding selfie entry is displayed on the image shooting preview interface 908. In other words, the image shooting preview interface 908 is a preview interface of the rear non-selfie scene in the sliding selfie entry manner in a folded state.

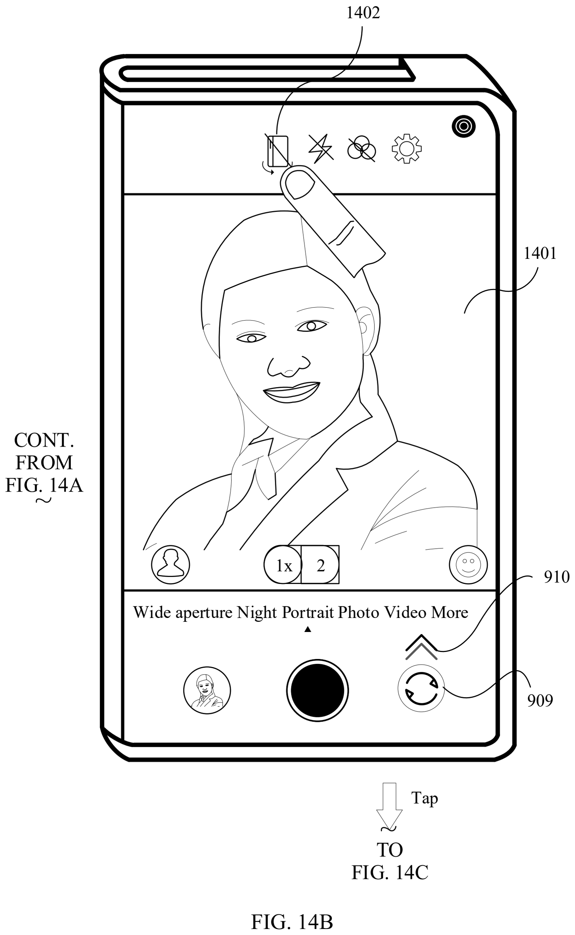

The sliding selfie entry may also be referred to as a sliding quick menu, and includes a flip camera control 909 and a sliding indication arrow 910. The flip camera control 909 is used by a user to control switching between the rear-facing camera and a front-facing camera. The user taps the flip camera control 909, and the foldable screen mobile phone flips a camera to access a front selfie scene in a folded state. An image is obtained by using the front-facing camera, and a corresponding image shooting preview interface is displayed through the primary screen. The front selfie scene is a scene in which image shooting is performed by using the front-facing camera. For the image shooting preview interface of the front selfie scene in a folded state, refer to in FIG. 14B in a subsequent embodiment.

The sliding indication arrow 910 is used to prompt the user to perform a sliding operation, to bring up a rear selfie control. In some embodiments, the sliding indication arrow 910 may be continuously displayed with animation effect, to inform the user that the sliding operation is possible herein. In some other embodiments, the sliding indication arrow 910 may alternatively be displayed with animation effect only in a preset scene, and may be statically displayed in another scene. For example, in a folded state, when the user switches from the front selfie scene to a rear non-image shooting scene, or the user switches from the rear non-image shooting scene to the front selfie scene, the sliding indication arrow 910 is displayed with animation effect.

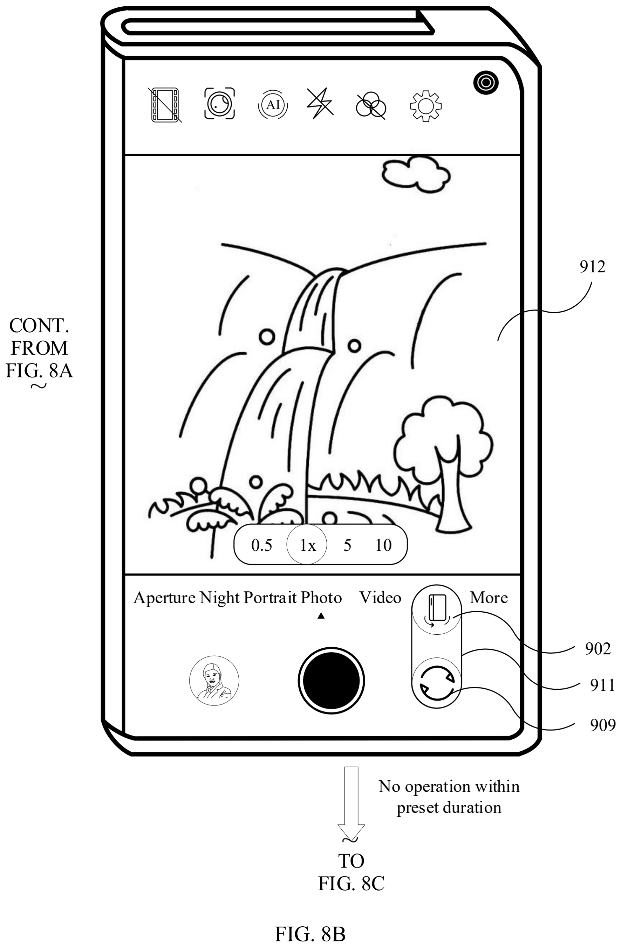

The user may slide toward the sliding indication arrow 910 (that is, slide upward) from the flip camera control 909. The foldable screen mobile phone brings up the rear selfie control 902 in response to the user operation. Specifically, the foldable screen mobile phone displays an image shooting preview interface 912, as shown in FIG. 8B. The image shooting preview interface 912 includes a first capsule 911. The first capsule 911 includes the rear selfie control 902 and the flip camera control 909. A change process from FIG. 8A to FIG. 8B is similar to expanding the sliding quick menu to bring up the hidden rear selfie control 902, so that the flip camera control 909 and the rear selfie control 902 are simultaneously displayed on the interface.

The user may select, as required, to tap the rear selfie control 902 to access a rear selfie function, or tap the flip camera control 909 to access a front selfie function. A process of accessing the rear selfie function is further described in the following embodiment.

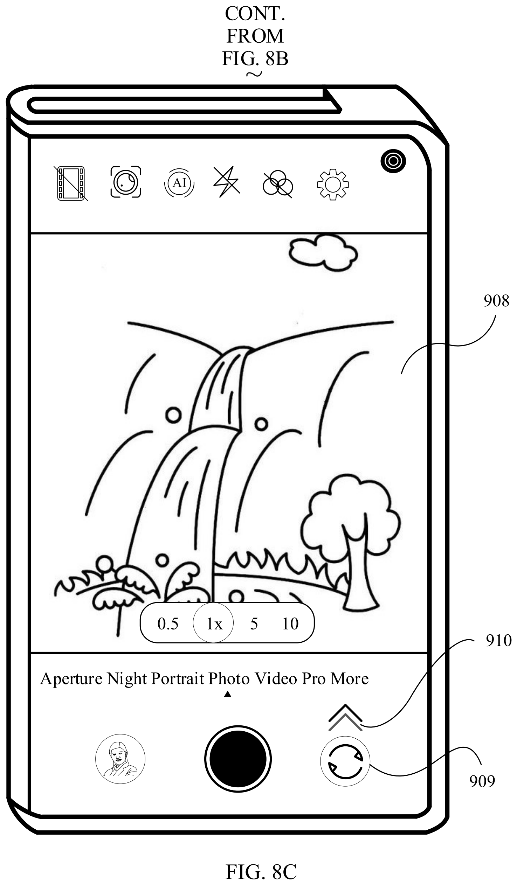

If the first capsule 911 is displayed for preset duration, the user taps neither the rear selfie control 902 nor the flip camera control 909, that is, the user has not performed an operation on the first capsule 911 within the preset duration, the sliding quick menu retracts, the rear selfie control 902 is hidden, and the interface is restored to the image shooting preview interface 908, as shown in FIG. 8C.

In this implementation, the user can bring up the rear selfie control through sliding, and can further select, as required, to take a rear selfie or a front selfie. This facilitates use of the user and improves user experience. In addition, the flip camera control is a control that is familiar to the user. When the user does not perform a slide-up gesture, the rear selfie control is not displayed on the interface, and only the flip camera control and the sliding indication arrow are displayed. This meets a use habit of the user. Furthermore, due to a small quantity of controls, this facilitates control arrangement on the interface, avoids affecting another control operation performed by the user on the interface, and further improves user experience.

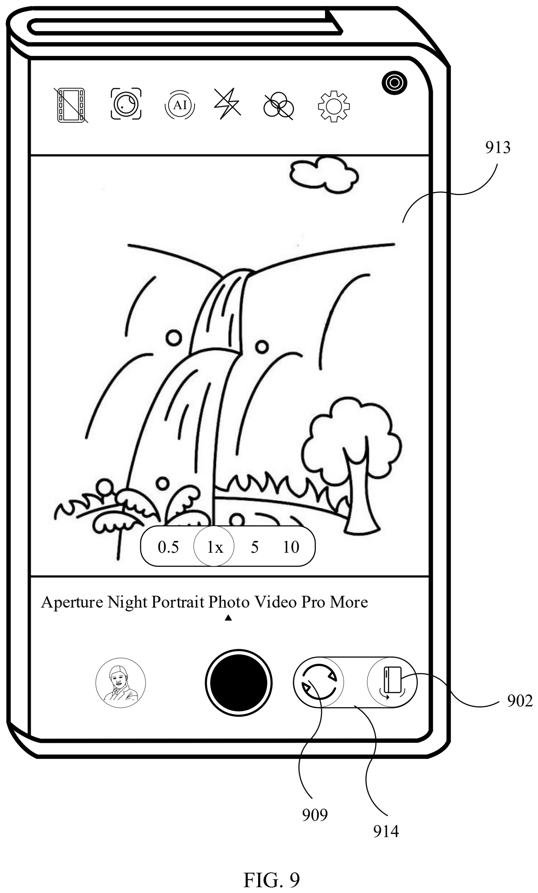

For example, FIG. 9 is a diagram of an example of an interface of a tiled selfie entry according to an embodiment of this application. As shown in FIG. 9, the foldable screen mobile phone is in a folded state, and the secondary screen is in a screen-off state. When the selfie entry manner is a tiled manner, after the camera application is started, the foldable screen mobile phone obtains an image by using the rear-facing camera, and displays an image shooting preview interface 913 through the primary screen. The image shooting preview interface 913 includes the image obtained by using the rear-facing camera. The image shooting preview interface 913 further includes a second capsule 914. The flip camera control 909 and the rear selfie control 902 are displayed in the second capsule 914 in a tiled manner. The user may select, as required, to tap the rear selfie control 902 to access a rear selfie function, or tap the flip camera control 909 to access the front selfie scene in a folded state.

In other words, the image shooting preview interface 913 is a preview interface of a rear non-selfie scene in a tiled selfie entry in a folded state.

In this implementation, the rear selfie control 902 and the flip camera control 909 are displayed on the interface in a tiled manner. The user can visually view the control. This helps the user select the rear selfie or the front selfie as required, facilitates use, and improves user experience.

The image shooting preview interface 908 and the image shooting preview interface 913 are also collectively referred to as a ninth image shooting preview interface.

### 2. Switch the selfie entry manner

Optionally, the selfie entry manner set by default at delivery of the foldable screen mobile phone may be a sliding manner. The user may switch the selfie entry manner as required. In an embodiment, a user may switch the selfie entry manner through camera setting.

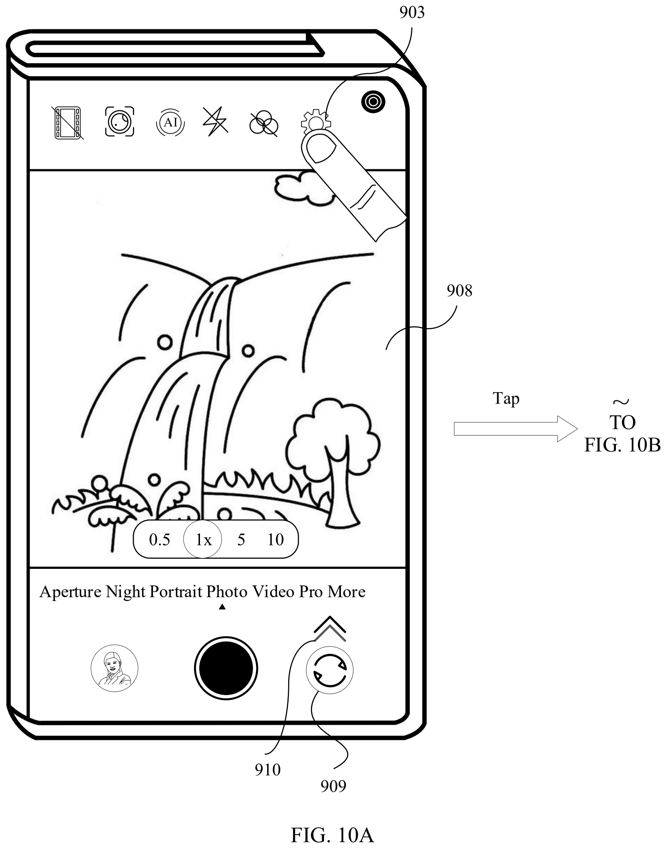

For example, FIG. 10A to FIG. 10F are a diagram of an interface change in a manner for switching a selfie entry according to an embodiment of this application. An example in which the foldable screen mobile phone is in a folded state and a current selfie entry manner is a sliding manner is used. After the camera application is started, the image shooting preview interface 908 is displayed through the primary screen, where the image shooting preview interface 908 includes an image obtained by using the rear-facing camera, and the image shooting preview interface 908 includes a flip camera control 909 and a sliding indication arrow (also referred to as an operation guide indicator) 910, as shown in FIG. 10A.

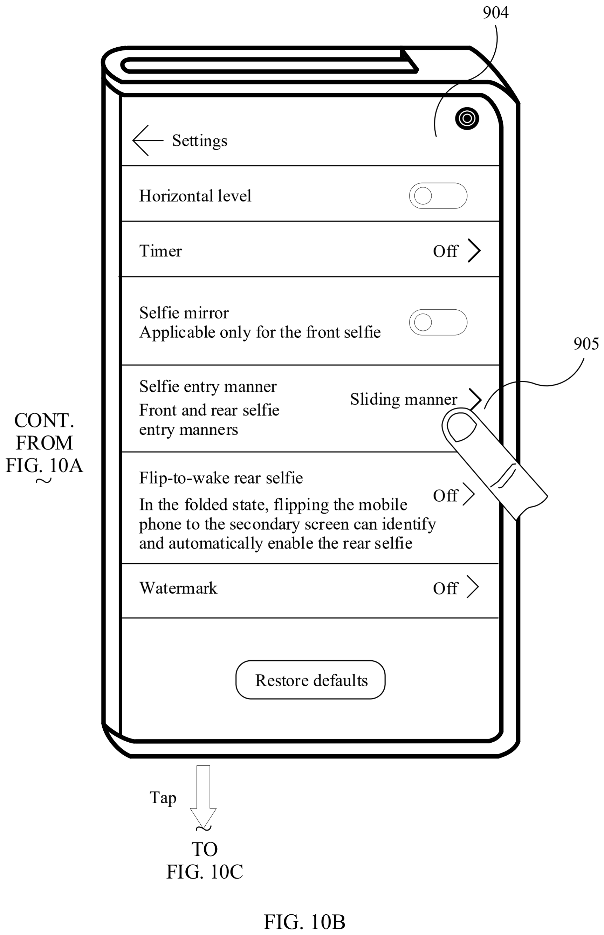

The image shooting preview interface 908 further includes a camera setting control 903. The user taps the camera setting control 903. In response to the user operation, the foldable screen mobile phone displays a camera setting interface 904, as shown in FIG. 10B. The camera setting interface 904 includes a selfie entry manner option (also referred to as a first option) 905. The selfie entry manner option 905 is currently displayed as "a sliding manner".

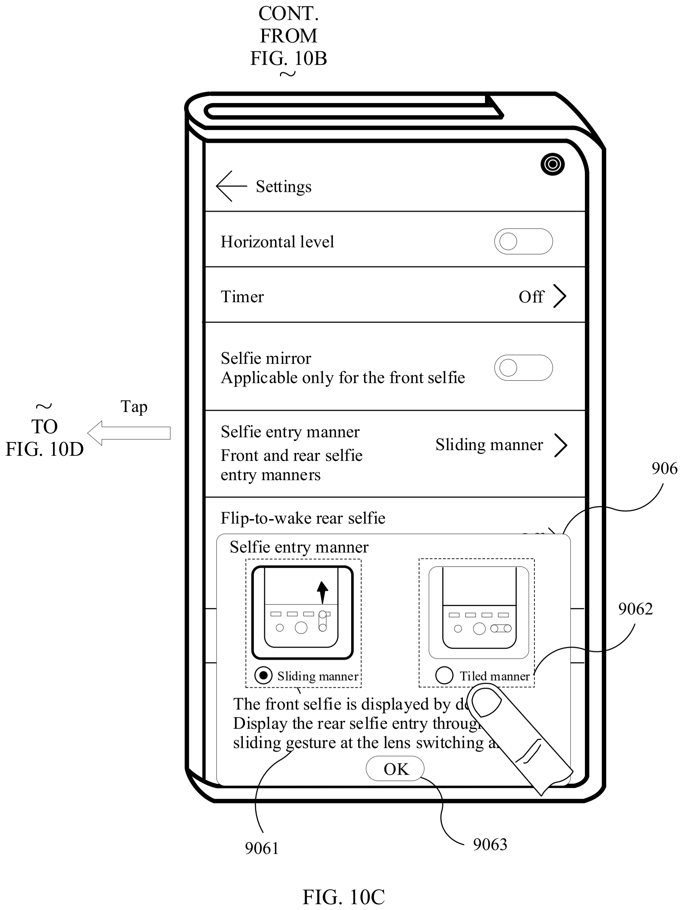

The user taps the selfie entry manner option 905. In response to the user operation, the foldable screen mobile phone displays a selfie entry manner setting pop-up window (also referred to as a first pop-up window) 906, as shown in FIG. 10C.

The selfie entry manner setting pop-up window 906 includes a sliding option (also referred to as a second option) 9061, a tiled option (also referred to as a third option) 9062, and an OK control 9063. As shown in FIG. 10C, the sliding option 9061 is currently in a selected state and is highlighted, and the tiled option 9062 is in an unselected state and is unhighlighted.

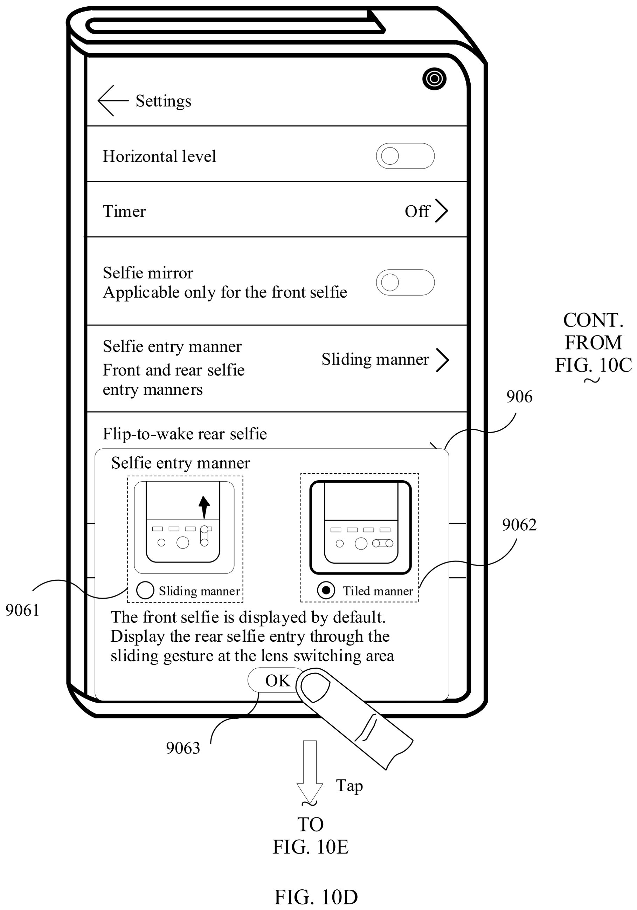

The user taps the tiled option 9062. In response to the user operation, the foldable screen mobile phone highlights the tiled option 9062 and unhighlights the sliding option 9061, as shown in FIG. 10D.

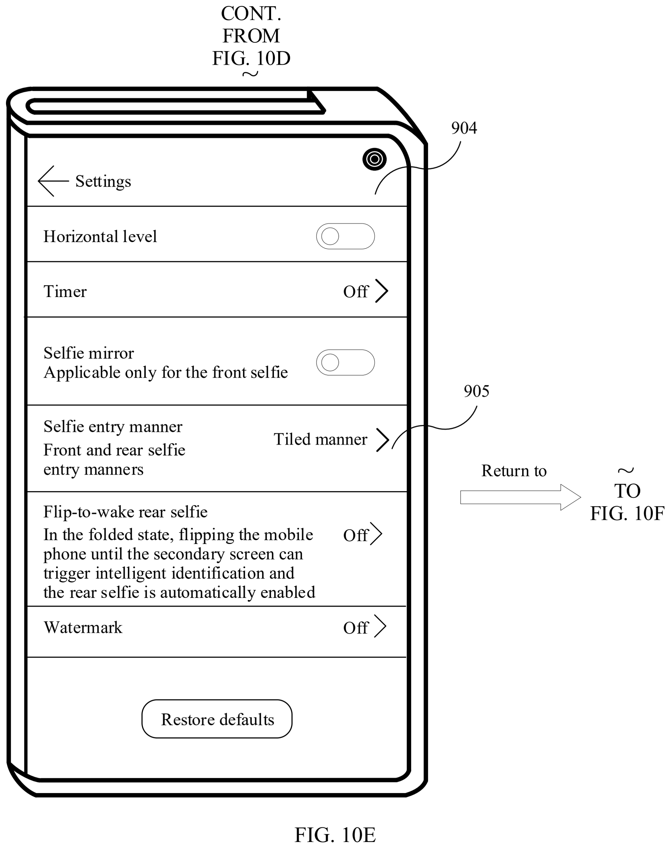

Then, the user taps the OK control 9063. The foldable screen mobile phone switches the selfie entry manner to a tiled manner in response to the user operation. The selfie entry manner setting pop-up window 906 is closed, and the foldable screen mobile phone displays the camera setting interface 904. In this case, the selfie entry manner option 905 on the camera setting interface 904 is displayed as a "tiled manner", as shown in FIG. 10E.

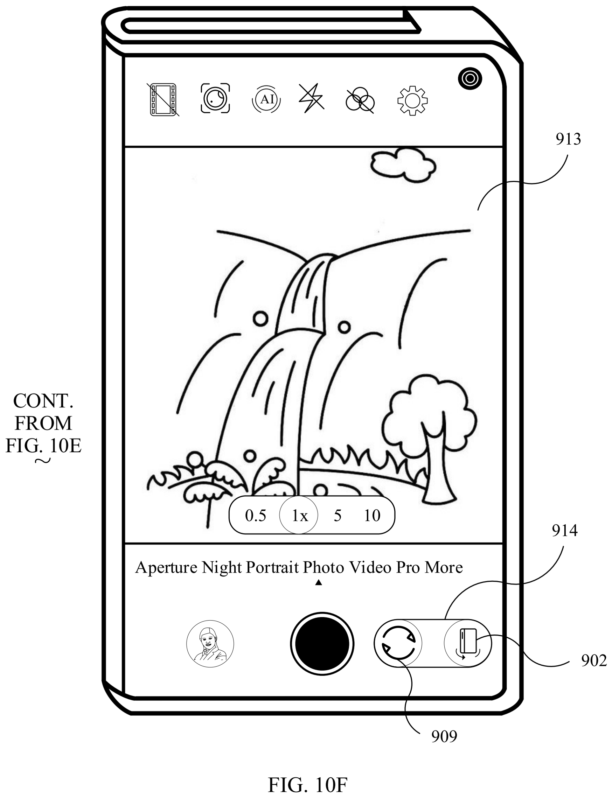

Then, the user performs a return operation, and the foldable screen mobile phone displays the image shooting preview interface 913 in response to the user operation. The image shooting preview interface 913 includes the second capsule 914. The flip camera control 909 and the rear selfie control 902 are displayed in the second capsule 914 in a tiled manner, as shown FIG. 10F. Optionally, the return operation may be, for example, a side-sliding operation (that is, sliding inward from a screen side), tapping a return key in a three-key navigation bar, or tapping a return control on the interface. This is not limited in embodiments of this application. This is also applicable to subsequent embodiments. Details are not described again.

A process of switching the selfie entry manner from a tiled manner to a sliding manner is similar to the foregoing process. Details are not described again.

It should be noted that the selfie entry manner is effective for both the front selfie and the rear non-selfie scene in a folded state. In other words, the selfie entry manner is synchronized for the front selfie scene and the rear non-selfie scene in a folded state.

In this embodiment, the user may autonomously switch a selfie entry manner as required in camera setting, meeting use requirements of different users. This meets use requirements of different users, facilitates a user operation, and improves user experience.

### II. Setting of a flip-to-wake function

In embodiments of this application, the camera application of the foldable screen mobile phone may further have a "flip-to-wake rear selfie function", which is briefly referred to as the flip-to-wake function, and is also referred to as a first function. The flip-to-wake function is in an off state by default, and the user may manually enable the function. After the flip-to-wake function is enabled, according to a flip-to-wake requirement, when the user lifts the mobile phone and looks at a screen, the foldable screen mobile phone recognizes the face by using the front-facing camera, and then the user flips the mobile phone. After the foldable screen mobile phone detects, by using a sensor, that the user flips the mobile phone, and recognizes the face by using the rear-facing camera, the rear selfie function is automatically accessed in the camera application.

The following briefly describes a setting process of the flip-to-wake function with reference to the accompanying drawings.

### 1. Enabling of the flip-to-wake function

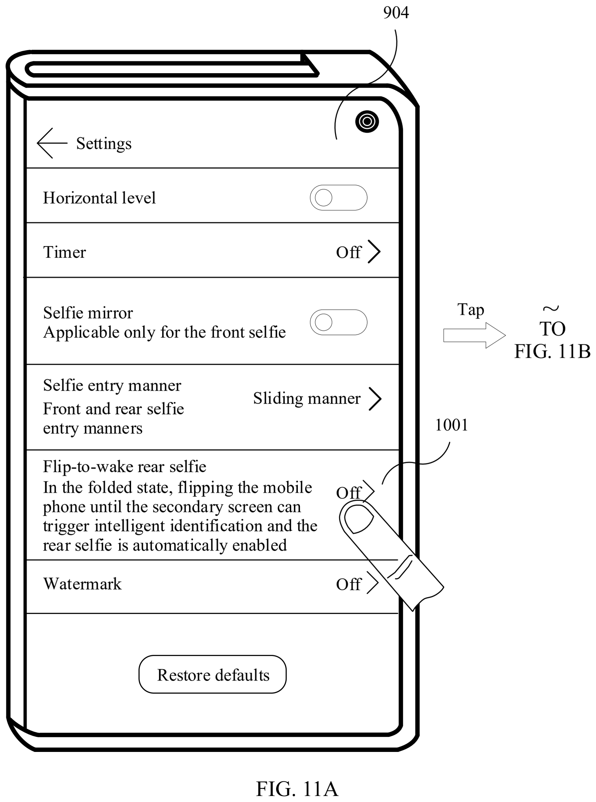

For example, FIG. 11A to FIG. 11D are a diagram of an example of interface changes for setting a flip-to-wake function according to an embodiment of this application. As shown in FIG. 11A, when the foldable screen mobile phone is in a folded state, after the camera application is started, the user may access the camera setting interface 904 based on a process shown in FIG. 10A to FIG. 10B. For a specific process, refer to the embodiment shown in FIG. 10A to FIG. 10F. Details are not described again.

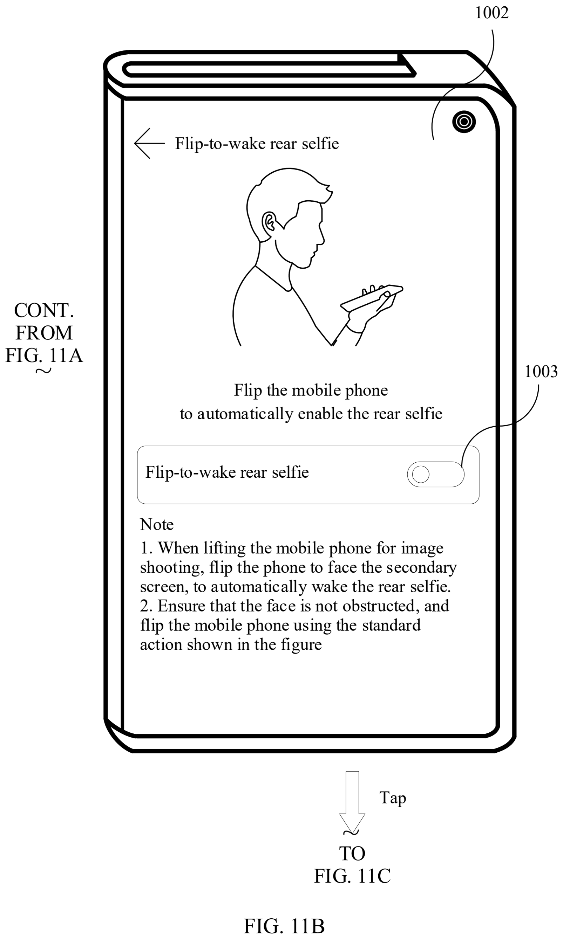

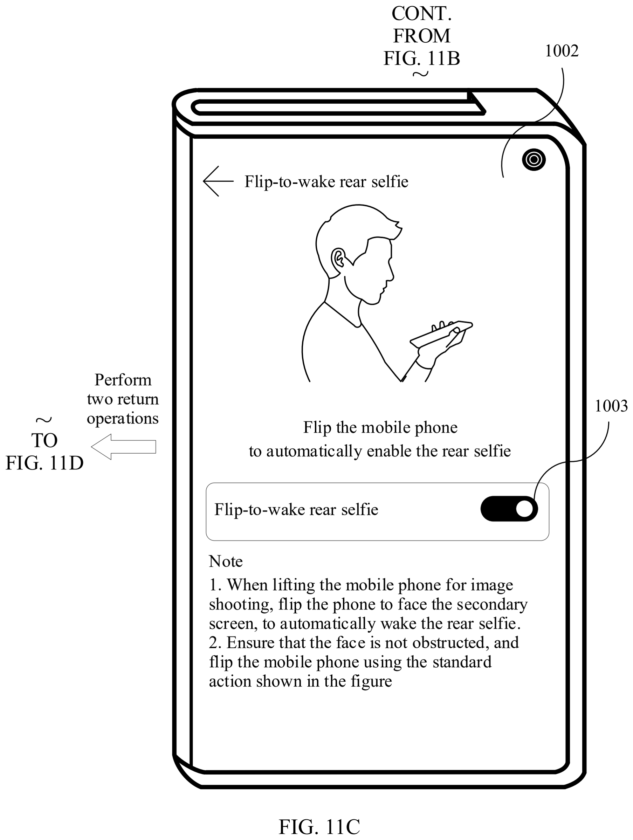

The camera setting interface 904 includes a flip-to-wake rear selfie option 1001. The user taps the option 1001 to access a flip-to-wake rear selfie setting interface (briefly referred to as a flip-to-wake setting interface) 1002, as shown in FIG. 11B. The flip-to-wake setting interface 1002 includes a flip-to-wake rear selfie function switch control (briefly referred to as a flip-to-wake switch) 1003. The flip-to-wake switch 1003 is in an off state by default and is grayed out. The user taps the flip-to-wake switch 1003, the foldable screen mobile phone enables the flip-to-wake function in response to the user operation, and the flip-to-wake switch 1003 is highlighted, as shown in FIG. 11C.

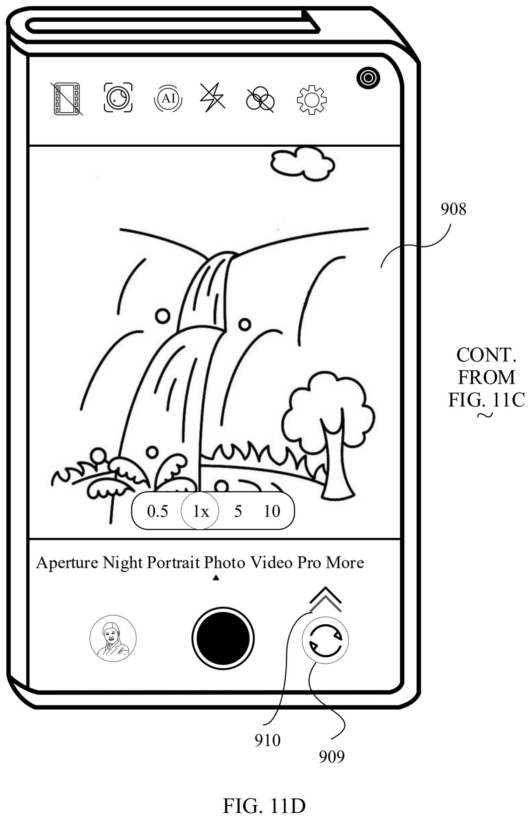

Then, the user performs two return operations, and the foldable screen mobile phone successively exits the flip-to-wake setting interface 1002 and the camera setting interface 904 to restore display of the image shooting preview interface 908, as shown in FIG. 11D.

### 2. Disabling of the flip-to-wake function

A disabling process of the flip-to-wake function is similar to the foregoing enabling process. A difference lies in that the disabling process is switching the flip-to-wake switch 1003 from an on state to an off state. Details are not described herein again.

In this embodiment, a user may autonomously set enabling or disabling of the flip-to-wake function as required. This meets different use habits of the user and use requirements in different scenes, facilitates a user operation, and improves user experience.

### III. Entry and exit of the rear selfie function

When using the camera application, the user may access the rear selfie function through a corresponding operation (that is, enabling the rear selfie function). After the rear selfie function is accessed, the primary screen of the foldable screen mobile phone is turned off, and the secondary screen is turned on. The foldable screen mobile phone obtains an image by using the rear-facing camera, and displays an image shooting preview interface 1106 (also referred to as a second image shooting preview interface) on the secondary screen. The image shooting preview interface 1106 includes the image obtained by using the rear-facing camera. In other words, the image shooting preview interface 1106 is an image shooting preview interface in the rear selfie scene, namely, an image shooting preview interface present when the rear selfie function is used. When the foldable screen mobile phone displays the image shooting preview interface 1106, after flipping the mobile phone, the user may take a selfie by using the rear-facing camera, so that quality and effect of an obtained selfie image are better, and user experience is improved. In addition, during use of the rear selfie function, the user may perform a selfie-related operation through the secondary screen. This facilitates use and further improves user experience.

After accessing the rear selfie function, the user may alternatively exit the rear selfie function through a corresponding operation. After the rear selfie function is exited, the rear non-selfie scene in a folded state is accessed in the camera application. The foldable screen mobile phone turns off the secondary screen, and displays a corresponding image shooting preview interface through the primary screen, as shown by an interface in FIG. 8A or in FIG. 9. In other words, after accessing the rear selfie function, the user may exit the function at any time. This facilitates an operation and use of the user and improves user experience.

Embodiments of this application provide several manners for accessing and exiting the rear selfie function, which are separately described in the following.

### 1. Accessing and exiting the rear selfie function by using a control

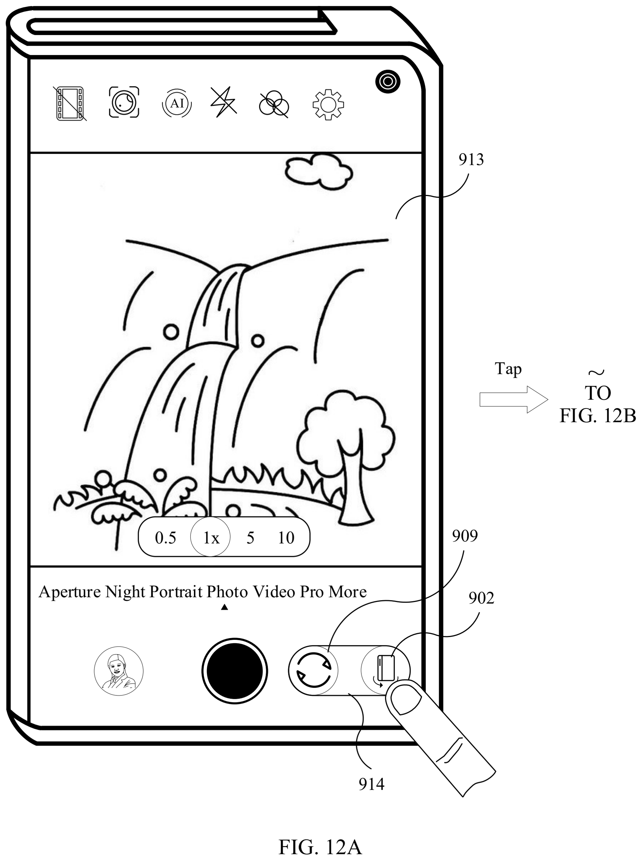

For example, FIG. 12A to FIG. 12C are a diagram of an example of interface changes for accessing a rear selfie function according to an embodiment of this application. As shown in FIG. 12A, when the foldable screen mobile phone is in a folded state, the secondary screen of the foldable screen mobile phone is in a screen-off state and the primary screen is in a screen-on state. For example, a selfie entry manner selected by the user is a tiled manner. The image shooting preview interface 913 is displayed on the primary screen.

It should be noted that, in a folded state, when the primary screen is turned on, and the secondary screen is turned off, the user usually faces a side on which the primary screen of the foldable screen mobile phone is located, and faces away from a side on which the secondary screen is located (namely, a side on which the rear-facing camera is located). This is used as an example for describing all embodiments of this application, for ease of descriptions of scenes present before and after the user flips the foldable screen mobile phone.

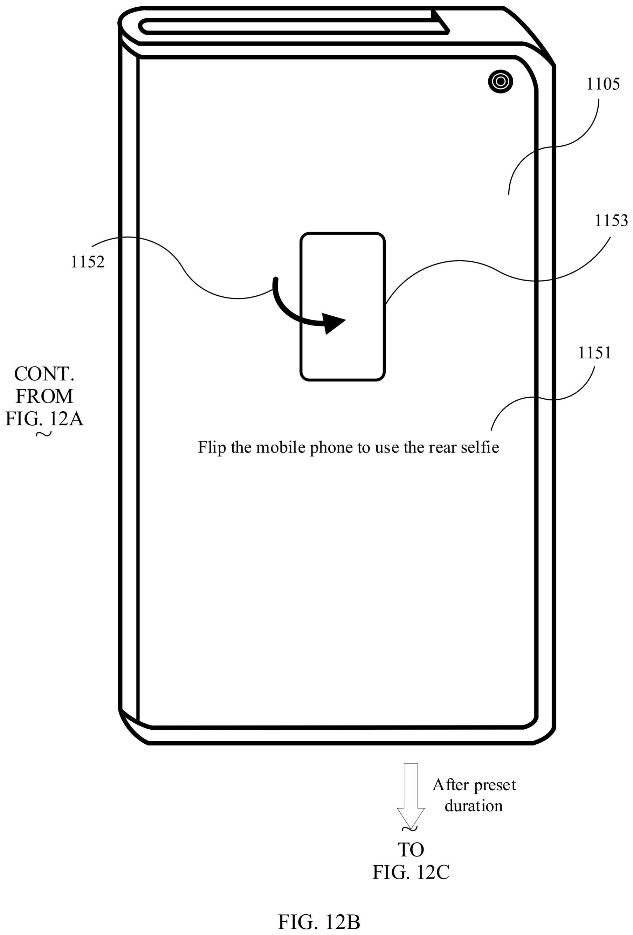

The user taps the rear selfie control 902 in FIG. 12A. In response to the user operation, the foldable screen mobile phone displays, through the primary screen, a flip guide interface 1105 (also referred to as a first flip guide interface), as shown in FIG. 12B. The flip guide interface 1105 is used to guide the user to flip the foldable screen mobile phone, so that the side on which the secondary screen is located (namely, the side on which the rear-facing camera is located) faces the user, and the side on which the primary screen is located faces away from the user. Optionally, the flip guide interface 1105 may include text prompt information 1151, an arrow 1152 indicating a flip direction, and a foldable screen mobile phone diagram 1153. Optionally, the flip guide interface 1105 may continuously display a plurality of foldable screen mobile phone diagrams 1153 from a plurality of different angles, to present dynamic images of flipping the mobile phone. This helps better guide the user to flip the mobile phone, and improves user experience. Optionally, the text prompt information 1151 may be, for example, "flip the mobile phone and use the rear selfie".

Optionally, in embodiments of this application, when the flip guide interface is displayed on the primary screen or the secondary screen, a screen touch function used to display the flip guide interface may be hidden (that is, shielded), that is, the screen does not respond to a touch operation of the user. This can avoid affecting accessing or exiting the rear selfie function due to an accidental screen touch of the user, and improve user experience.

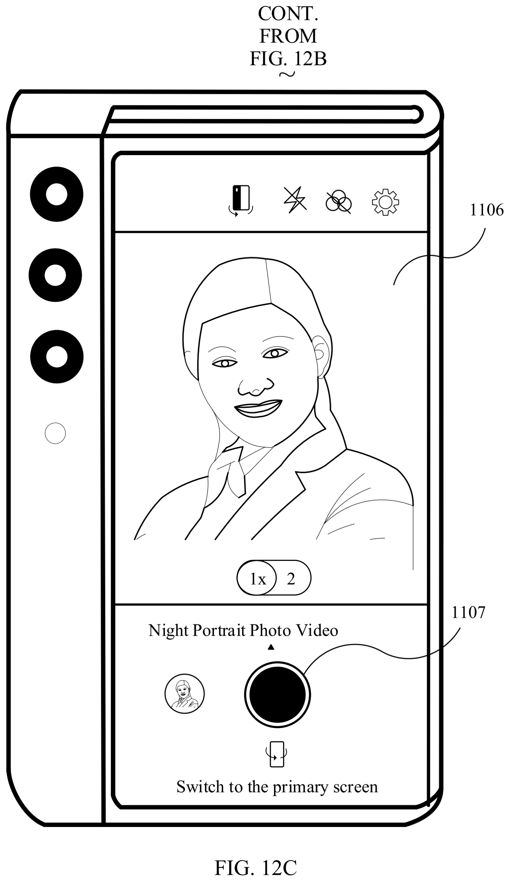

After the flip guide interface 1105 is displayed for preset duration (for example, 3 seconds), the rear selfie function is accessed in the camera application. Specifically, the foldable screen mobile phone turns off the primary screen, and controls the secondary screen to be turned on. Simultaneously, an image is obtained by using the rear-facing camera, and the image shooting preview interface 1106 is displayed through the secondary screen. The image shooting preview interface 1106 includes the image obtained by using the rear-facing camera. After the user flips the foldable screen mobile phone, the side on which the secondary screen is located (namely, the side on which the rear-facing camera is located) faces the user, and the side on which the primary screen is located faces away from the user. In this way, an image of the user obtained by using the rear-facing camera (namely, a selfie image) can be displayed on the image shooting preview interface 1106, as shown in FIG. 12C.

Optionally, in some other embodiments, when the flip guide interface 1105 is displayed on the primary screen, the secondary screen may be simultaneously turned on, the image is obtained by using the rear-facing camera, and the image shooting preview interface 1106 is displayed through the secondary screen. In other words, after the user taps the rear selfie control, the flip guide interface 1105 is displayed on the primary screen, the secondary screen is simultaneously turned on, and the image shooting preview interface 1106 is displayed on the secondary screen.

Optionally, when the flip guide interface 1105 is displayed on the secondary screen, the foldable screen mobile phone may shield touch functions of both the primary screen and the secondary screen. That is, the touch functions of the primary screen and the secondary screen are shielded within preset duration (for example, 3s) after the user taps the rear selfie control 902. This can avoid an accidental touch of the user, and improve user experience.

The image shooting preview interface 1106 includes image shooting control 1107. The user taps the image shooting control 1107, and the camera application stores the image obtained by using the rear-facing camera.

Optionally, an image shooting mode supported by the rear selfie function may include a photo mode, a video mode, a portrait mode, a night mode, and the like. In a possible implementation, after the user accesses the rear selfie function by using the foregoing process, a default image shooting mode is consistent with an image shooting mode used before the rear selfie function is accessed, that is, an image shooting mode in the image shooting preview interface 1106 is consistent with an image shooting mode in the image shooting preview interface 913. This can inherit a selection of the user, and improve user experience. Certainly, after accessing the rear selfie function, the user may alternatively switch the image shooting mode to another mode as required.

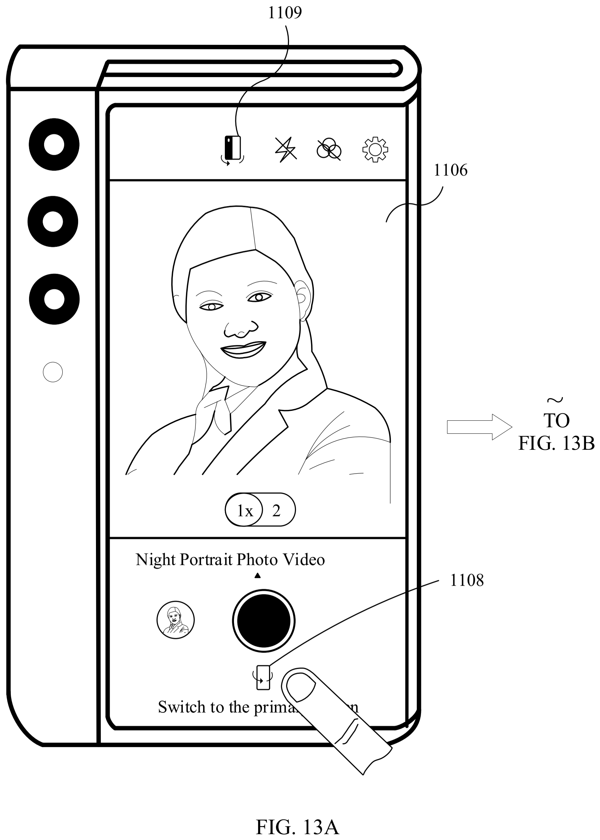

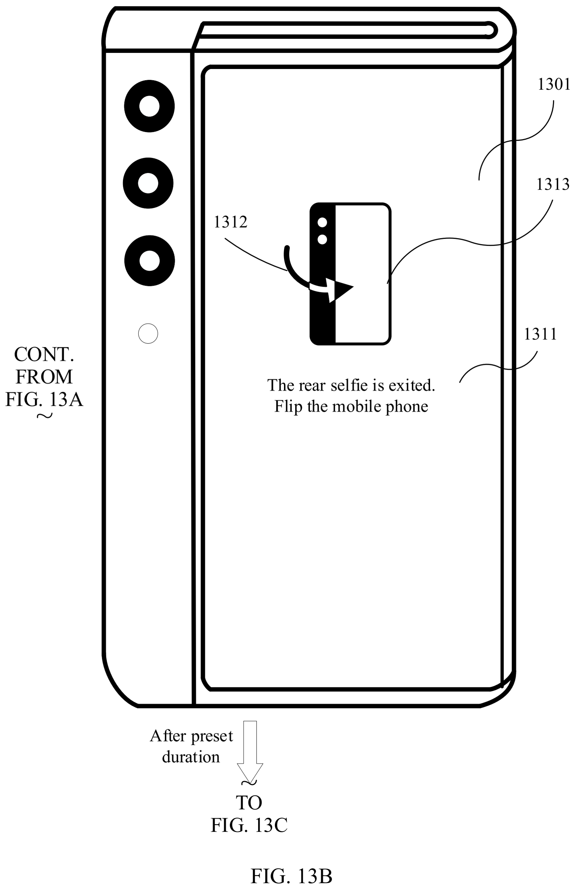

For example, FIG. 13A to FIG. 13C are a diagram of an example of interface changes for exiting a rear selfie function according to an embodiment of this application. Following FIG. 12C, refer to FIG. 13A. The image shooting preview interface 1106 includes a primary screen switching control (also referred to as a fifth control) 1108 and a rear selfie exit control (also referred to as a sixth control) 1109. The user taps the primary screen switching control 1108 or the rear selfie exit control 1109. In response to the user operation, the foldable screen mobile phone displays, through the secondary screen, a flip guide interface 1301 (also referred to as a second flip guide interface), as shown in FIG. 13B. The flip guide interface 1301 is used to guide the user to flip the foldable screen mobile phone, so that the side on which the primary screen is located faces the user, and the side on which the secondary screen is located (namely, the side on which the rear-facing camera is located) faces away from the user. Optionally, the flip guide interface 1301 may include text prompt information 1311, an arrow 1312 indicating a flip direction, and a foldable screen mobile phone diagram 1313. Optionally, a plurality of foldable screen mobile phone diagrams from a plurality of different angles may be continuously displayed, to present, on the flip guide interface 1301, dynamic images of flipping the mobile phone. This helps better guide the user to flip the mobile phone, and improves user experience. Optionally, on this interface, the text prompt information 1311 may be, for example, "the rear selfie is exited. Flip the mobile phone".

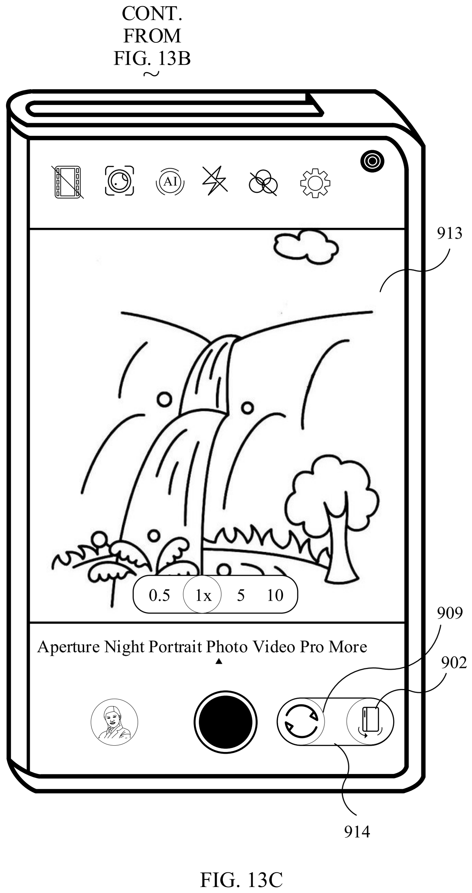

After the flip guide interface 1301 is displayed for preset duration, the rear selfie function is exited in the camera application. Specifically, the foldable screen mobile phone turns off the secondary screen, and controls the primary screen to be turned on. Simultaneously, an image is obtained by using the rear-facing camera, and the image shooting preview interface 913 is displayed through the primary screen. The image shooting preview interface 908 includes the image obtained by using the rear-facing camera. After the user flips the mobile phone, an image of a surrounding person or object may be displayed on the image shooting preview interface 913, as shown in FIG. 13C.

In this implementation, during use of the rear selfie function, the user may exit the function through one tap on the primary screen switching control 1108 or the rear selfie exit control 1109. This facilitates and simplifies an operation, and improves user experience.

In another embodiment, in the front selfie scene, the user may access the rear selfie function by using a rear selfie switch (also referred to as a permanent rear selfie control or a third control). Specifically, when the camera application is in the front selfie scene, the image shooting preview interface may further include the rear selfie switch. The rear selfie switch may be used to control enabling of the rear selfie function. The following provides descriptions with reference to an accompanying drawing.

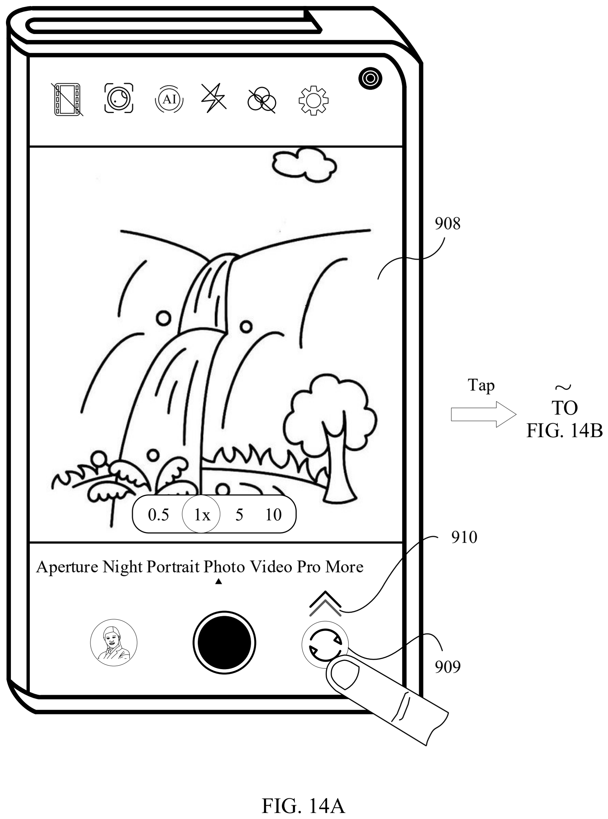

For example, FIG. 14A to FIG. 14D are a diagram of an example of interface changes in a process of accessing a rear selfie function by using a rear selfie switch according to an embodiment of this application. As shown in FIG. 14A, for example, the selfie entry manner is a sliding manner. The foldable screen mobile phone is in a folded state, the primary screen is in a screen-on state, the secondary screen is in a screen-off state, the camera application is started, and the image shooting preview interface 908 is displayed on the primary screen. The image shooting preview interface 908 includes an image obtained by using the rear-facing camera.

The image shooting preview interface 908 includes the flip camera control 909. The user taps the flip camera control 909. In response to the user operation, the front selfie scene in a folded state is accessed, and an image shooting preview interface 1401 (also referred to as a seventh image shooting preview interface) is displayed. The image shooting preview interface 1401 includes an image obtained by using the front-facing camera, the flip camera control 909, and the sliding indication arrow 910, as shown in FIG. 14B. In addition, the image shooting preview interface 1401 further includes a rear selfie switch (also referred to as a third control) 1402.

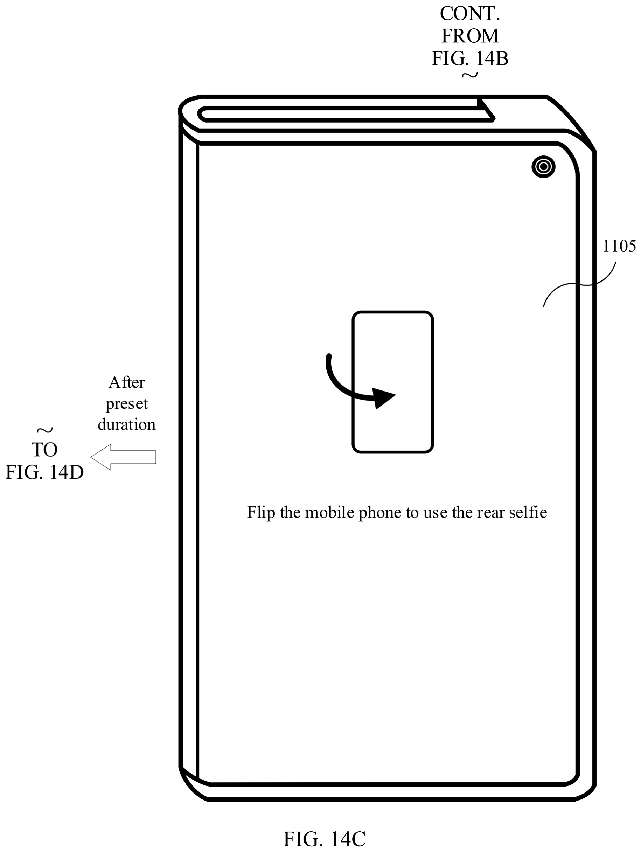

The user taps the rear selfie switch 1402. In response to the user operation, the foldable screen mobile phone displays the flip guide interface 1105 through the primary screen, as shown in FIG. 14C.

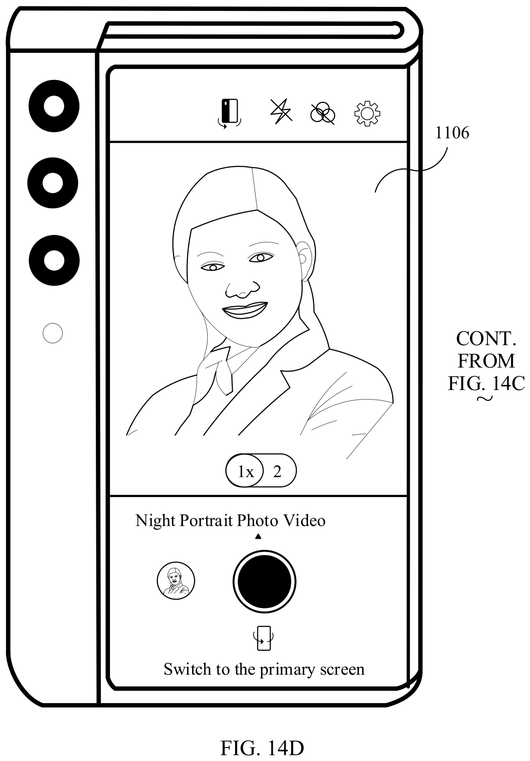

After the flip guide interface 1105 is displayed for the preset duration, the rear selfie function is accessed in the camera application. Specifically, the foldable screen mobile phone turns off the primary screen and controls the secondary screen to be turned on. Simultaneously, an image is obtained by using the rear-facing camera, and the image shooting preview interface 1106 is displayed through the secondary screen. The image shooting preview interface 1106 includes the image obtained by using the rear-facing camera, as shown in FIG. 14D.

In this embodiment, in the front selfie scene, the interface includes the rear selfie switch, and the user may directly tap the rear selfie switch to access the rear selfie function. This facilitates the user operation and improves user experience.

In this embodiment of this application, the image shooting preview interface 908 and the image shooting preview interface 1401 may also be collectively referred to as a third image shooting preview interface.

### 2. Waking or exiting the rear selfie function by flipping the mobile phone

As described above, the camera application of the foldable screen mobile phone may have the flip-to-wake function. When the flip-to-wake function is enabled (referring to FIG. 11A to FIG. 11D for the enabling process), the foldable screen mobile phone can automatically detect a user operation. If the user operation meets the flip-to-wake requirement, the rear selfie function is automatically accessed in the camera application. After accessing the rear selfie function, the user may also exit the rear selfie function by flipping the mobile phone. In this way, the user can quickly and conveniently access or exit the rear selfie function without performing an operation like tapping the rear selfie control or the rear selfie exit control on the interface. This improves intelligence of the mobile phone, and improves user experience. The following provides descriptions with reference to the accompanying drawings.

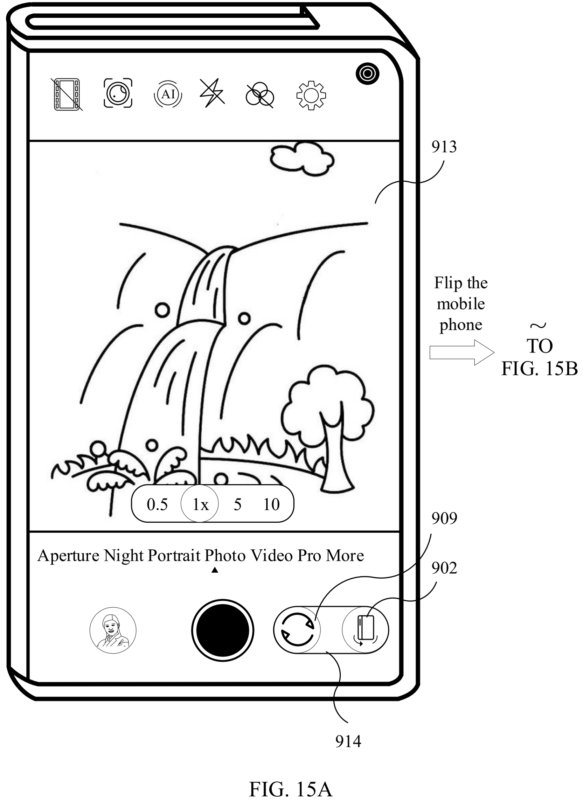

For example, FIG. 15A to FIG. 15C are a diagram of an example of interface changes for accessing and exiting a rear selfie by using a flip-to-wake function according to an embodiment of this application. As shown in FIG. 15A, when the foldable screen mobile phone is in a folded state, the secondary screen of the foldable screen mobile phone is in a screen-off state and the primary screen is in a screen-on state. When the foldable screen mobile phone starts the camera application and does not access the rear selfie function, the image shooting preview interface 913 is displayed on the primary screen. In this case, the side on which the primary screen of the foldable screen mobile phone is located faces the user, and the side on which the secondary screen is located faces away from the user.

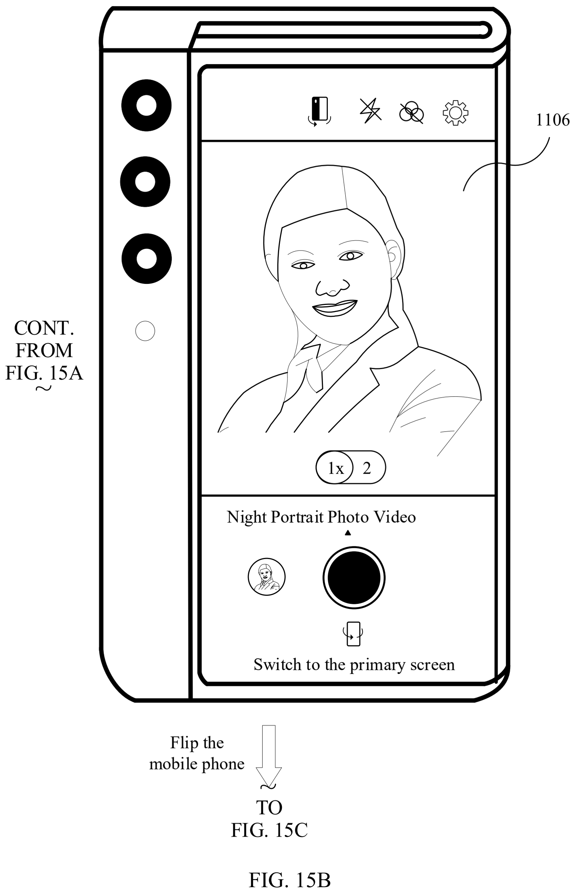

If the user wants to use the rear selfie function, the user may lift the foldable screen mobile phone according to the flip-to-wake requirement, so that the primary screen of the foldable screen mobile phone faces the face and the user looks at the screen. Then, the user flips the foldable screen mobile phone, so that the side on which the secondary screen is located faces the user, and the side on which the primary screen is located faces away from the user. In this process, the foldable screen mobile phone recognizes the face by using the front-facing camera, detects, by using the sensor, that the user flips the mobile phone, and then recognizes the face by using the rear-facing camera. The rear selfie function is directly accessed in the camera application. The foldable screen mobile phone controls the primary screen to be turned off and the secondary screen to be turned on, and displays the image shooting preview interface 1106 on the secondary screen, as shown in FIG. 15B.

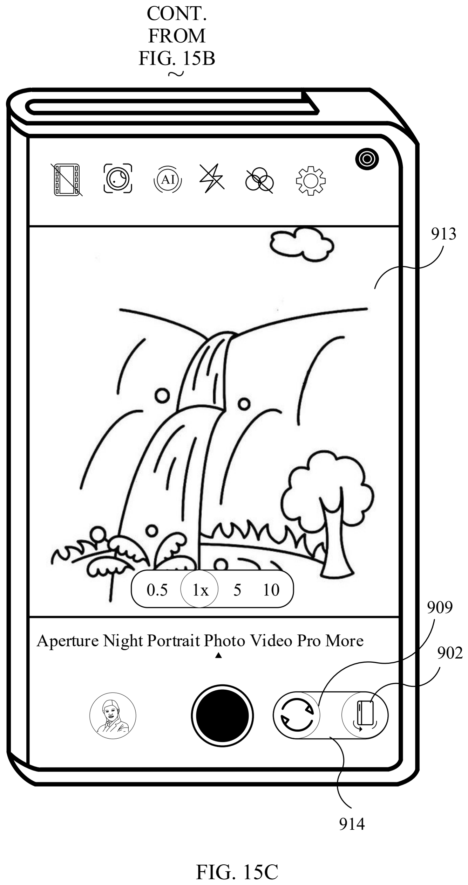

When the user wants to exit the rear selfie function, the user may perform operations based on a reverse process of the foregoing steps, that is, the user lifts the foldable screen mobile phone according to the flip-to-wake requirement, so that the secondary screen of the foldable screen mobile phone faces the face and the user looks at the screen. Then, the user flips the foldable screen mobile phone, so that the side on which the primary screen is located faces the user, and the side on which the secondary screen is located faces away from the user. After the foldable screen mobile phone recognizes the face by using the rear-facing camera, detects that the user flips the mobile phone, and recognizes the face by using the front-facing camera, the rear selfie function is exited, the secondary screen is turned off, the primary screen is turned on, and the image shooting preview interface 913 is displayed on the primary screen, as shown in FIG. 15C.

### IV. Use guide for functions

In embodiments of this application, when the user does not use some functions of the camera application, guide information may be selectively displayed to the user, to guide the user to understand and use these functions, improving user experience. With reference to use scenes, the following describes use guides on the rear selfie function and related functions.

### 1. Use guide on using the camera application in a folded state for the first time

When the user starts the camera application of the foldable screen mobile phone in a folded state for the first time, the foldable screen mobile phone can guide the user to use the rear selfie function, and guide the user to slide to access the rear selfie control in a slide-up selfie entry manner.

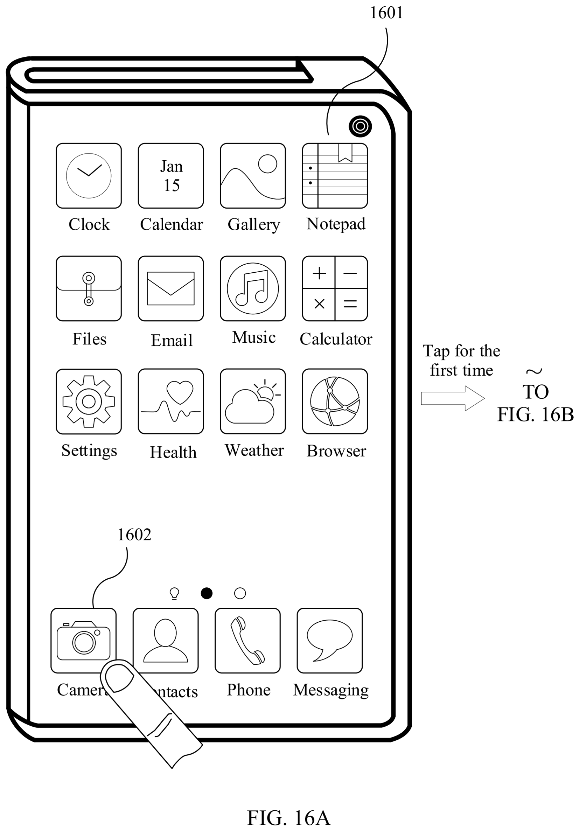

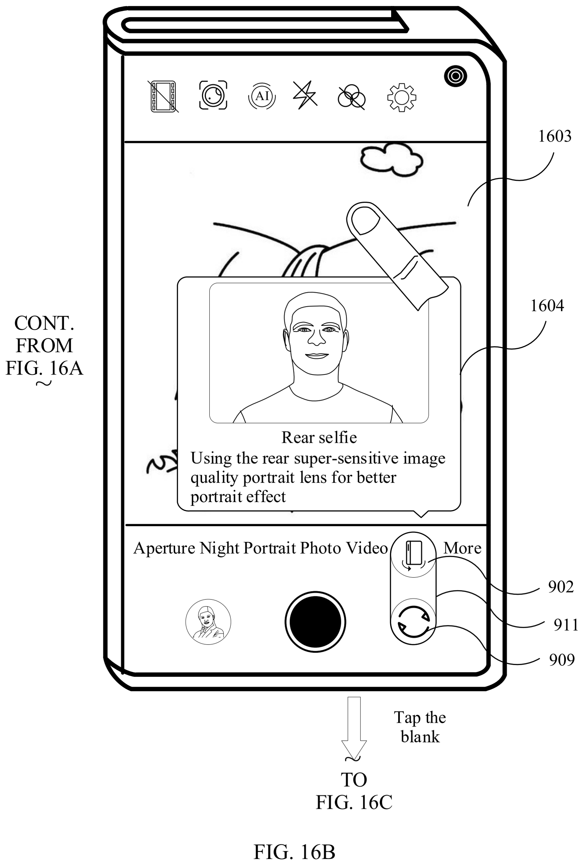

For example, FIG. 16A to FIG. 16D are a diagram of an example of an interface in a process of using a camera application in a folded state for the first time according to an embodiment of this application. For example, a selfie entry manner set by default at delivery of the foldable screen mobile phone is a sliding manner. As shown in FIG. 16A, when the foldable screen mobile phone is in a folded state, the secondary screen of the foldable screen mobile phone is in a screen-off state, the primary screen is in a screen-on state, and a home screen 1601 is displayed on the primary screen. The home screen 1601 includes a camera application icon 1602. The user taps the camera application icon 1602. This operation is the user triggering to start the camera application in a folded state for the first time. In response to the user operation, the foldable screen mobile phone accesses the rear non-selfie scene in a folded state by default, starts the rear-facing camera to obtain an image, and displays an image shooting preview interface 1603 on the primary screen, as shown in FIG. 16B. The image shooting preview interface 1603 is different from the image shooting preview interface 908 in that when the user does not perform a slide-up operation at the flip camera control 909, the flip camera control 909 and the rear selfie control 902 are directly displayed in the first capsule 911, which is similar to FIG. 8B. Simultaneously, rear selfie function guide information (briefly referred to as rear selfie guide information, also referred to as first guide information) 1604 is displayed at the rear selfie control 902. The rear selfie guide information 1604 is used to guide the user to use the rear selfie function. This helps the user understand a method for using the rear selfie function, and improves user experience.

Optionally, the rear selfie guide information 1604 may be displayed in a form of a bubble, a card, a capsule, or the like. The rear selfie guide information 1604 may include a prompt text, a prompt image, and the like that are used to describe the rear selfie function. For example, in FIG. 16B, the rear selfie guide information 1604 may include the prompt image (a person selfie image) and the prompt text like "using the rear selfie super-sensitive image quality portrait lens for better portrait effect".

Certainly, if a default selfie entry manner set at delivery of the foldable screen mobile phone is a tiled manner, the rear selfie guide information 1604 may also be displayed at the rear selfie control. Details are not described herein again.

It may be understood that when the user does not use the camera in a folded state for the first time (for the second time and each subsequent time), the rear selfie guide information 1604 may no longer be displayed, and the interface shown in (a) in FIG. 9 or in FIG. 8A to FIG. 8C may be directly displayed, to avoid disturbance to the user and further improve user experience. This is also applicable to other guide information or prompt information described in subsequent embodiments. The information may no longer be displayed after being displayed for a specific preset quantity of times, may be no longer displayed after the user used a function indicated in this guide, or the like. Details are not described in subsequent embodiments.

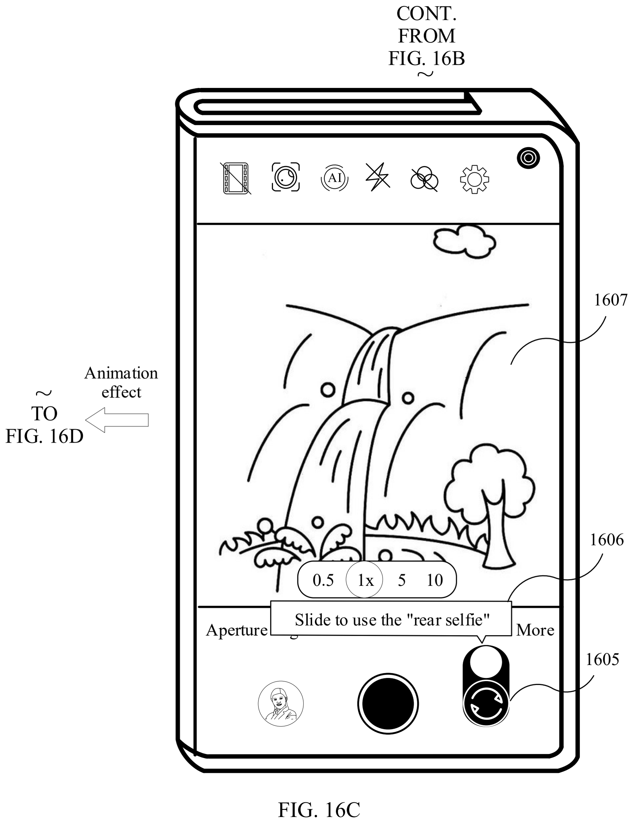

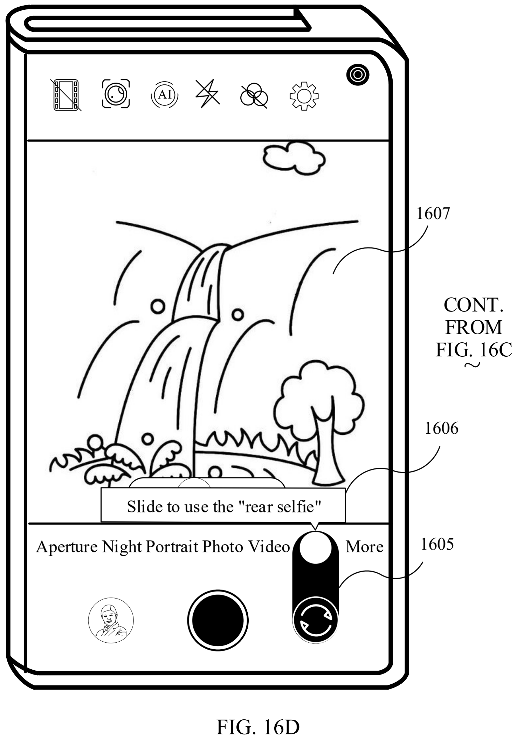

Still refer to FIG. 16A to FIG. 16D. As shown in FIG. 16B, when the user taps on a blank area (a location in which a control or guide information does not exist) on the image shooting preview interface 1603, the rear selfie guide information 1604 disappears, slide-up guide animation effect (also referred to as a sliding guide animation) 1605 is displayed, and sliding selfie entry use guide information (briefly referred to as sliding guide information, also referred to as second guide information) 1606 is displayed, as shown by an image shooting preview interface 1607 (also referred to as a fifth image shooting preview interface)in FIG. 16C and FIG. 16D.

The slide-up guide animation effect 1605 is animation effect of sliding up from the flip camera control 909, and simulates a process in which the user slides up to bring up the rear selfie control. Both the slide-up guide animation effect 1605 and the sliding guide information 1606 are used to guide the user to understand a method for using a slide-up selfie entry by the user, to improve user experience.

Optionally, the sliding guide information 1606 may be displayed in a form of a bubble, a card, a capsule, or the like. The sliding guide information 1606 may include a prompt text that is used to describe a method for using the slide-up selfie entry, and the like. For example, in FIG. 16C and FIG. 16D, the sliding guide information 1606 may include a prompt text such as "slide to use the "rear selfie"".

If the user taps the blank area on the image shooting preview interface 1607, the slide-up guide animation effect 1605 and the sliding guide information 1606 disappear, and the image shooting preview interface 908 shown in FIG. 8A is displayed.

If the user refers to the slide-up guide animation effect 1605 to perform the slide-up operation, the slide-up guide animation effect 1605 and the sliding guide information 1606 disappear, and the rear selfie control is brought up, and the image shooting preview interface 912 shown in FIG. 8B is displayed.

### 2. Use guide on using the front selfie function in a folded state for the first time

When the user uses the front selfie function of the camera in a folded state for the first time, the user may also be guided to use the slide-up selfie entry to bring up the rear selfie control.

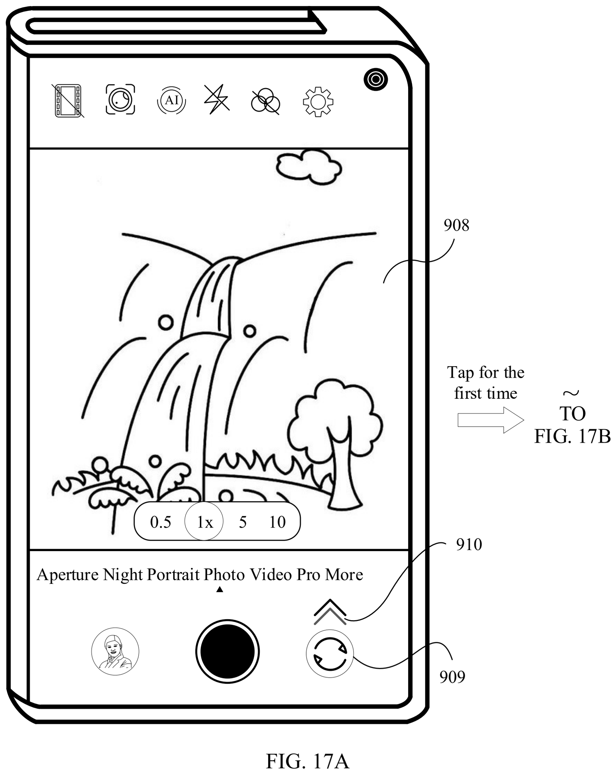

For example, FIG. 17A to FIG. 17D are a diagram of an example of interface changes for using a front selfie function in a folded state for the first time according to an embodiment of this application. As shown in FIG. 17A, the foldable screen mobile phone is in a folded state, the primary screen is in a screen-on state, the secondary screen is in a screen-off state, the camera application is started, and the image shooting preview interface 908 is displayed on the primary screen. The image shooting preview interface 908 includes an image obtained by using the rear-facing camera.

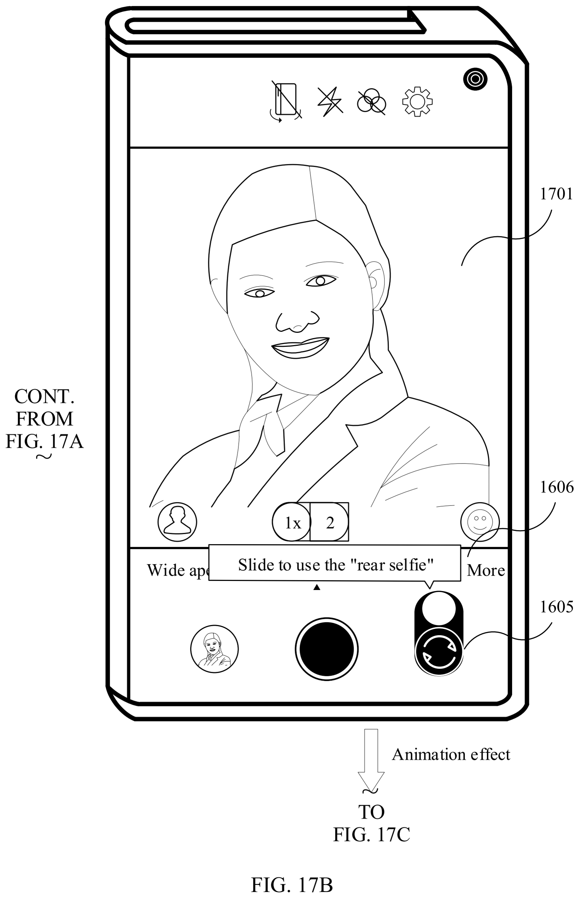

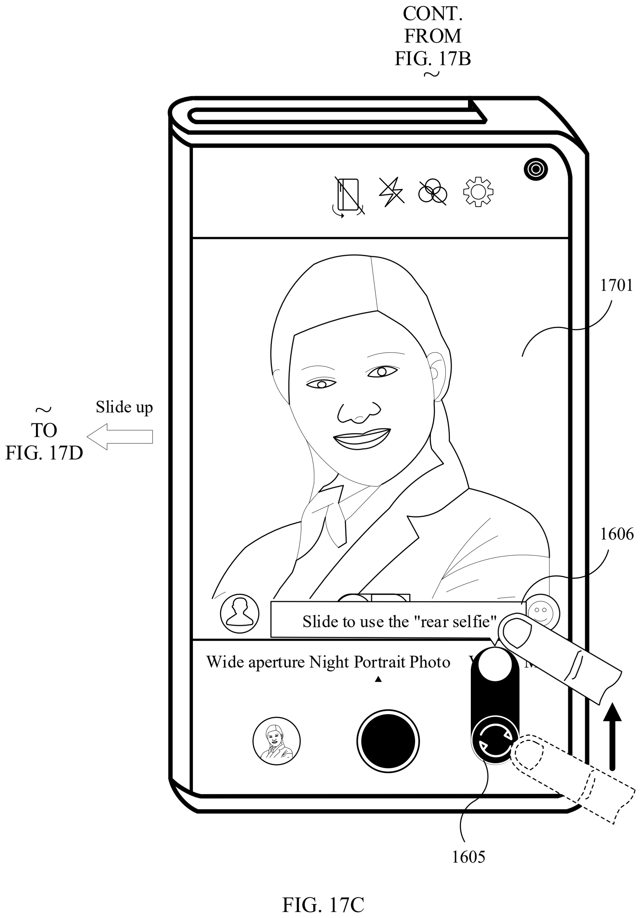

The image shooting preview interface 908 further includes the flip camera control 909, and the user taps the flip camera control 909. This operation is an operation of accessing the front selfie function in a folded state for the first time. As shown in FIG. 17B and FIG. 17C, in response to the user operation, the foldable screen mobile phone accesses the front selfie scene in a folded state for the first time, and an image shooting preview interface 1701 (also referred to as a sixth image shooting preview interface) is displayed. The image shooting preview interface 1701 includes an image obtained by using the front-facing camera. The image shooting preview interface 1701 is different from the image shooting preview interface 1401 shown in FIG. 14B in that the slide-up guide animation effect 1605 and the sliding guide information 1606 are displayed.

If the user taps the blank area on the image shooting preview interface 1701, the slide-up guide animation effect 1605 and the sliding guide information 1606 disappear, and the image shooting preview interface 1401 shown in FIG. 14B is displayed.

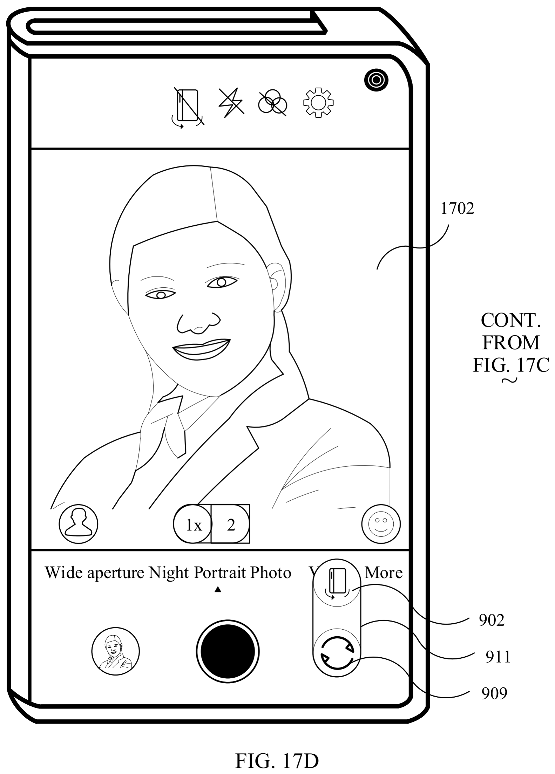

If the user refers to the slide-up guide animation effect 1605 to perform the slide-up operation, the slide-up guide animation effect 1605 and the sliding guide information 1606 disappear, and the rear selfie control is brought up, and an image shooting preview interface 1702 shown in FIG. 17D is displayed. The image shooting preview interface 1702 includes the first capsule 911. The first capsule 911 includes the rear selfie control 902 and the flip camera control 909. The user may select, as required, to tap the rear selfie control 902 to access the rear selfie function, or tap the flip camera control 909 to return to the rear non-selfie scene in a folded state, to re-display the image shooting preview interface 908 shown in FIG. 17A.

The user uses the front selfie function, which indicates that the user is taking a selfie, and there is a high probability of using the rear selfie function. Therefore, in this implementation, when the user uses the front selfie function for the first time, the user is guided to slide up to bring up the rear selfie control. This helps the user understand the rear selfie function and a manner for accessing the rear selfie function, helps the user access the rear selfie function, and thus improves selfie effect and user experience.

In some other embodiments, when the user switches the image shooting mode, the slide-up guide animation effect 1605 and the sliding guide information 1606 may also be displayed. For example, the user switches the image shooting mode from a photo mode to a portrait mode, or the like. In this case, there is a high probability that the user uses the rear selfie function. Therefore, the user is guided to slide up to bring up the rear selfie control. This helps the user understand the rear selfie function and a manner for accessing the rear selfie function, and improves user experience.

### 3. Use guide for the user on switching the selfie entry manner for the first time

As described in the foregoing embodiment, the user may switch the selfie entry manner in the camera setting. In an embodiment, after switching the selfie entry manner for the first time, the user may be guided to use the rear selfie function.

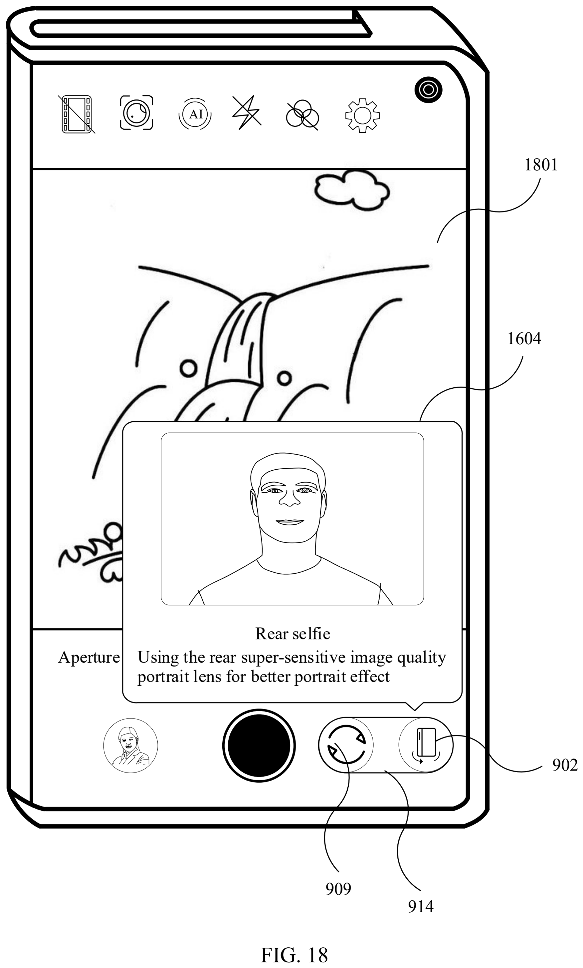

For example, FIG. 18 is a diagram of an example of a use guide interface present after switching a selfie entry manner for the first time according to an embodiment of this application. Refer to FIG. 10A to FIG. 10F. If a process shown in FIG. 10A to FIG. 10E is that the user switches the tiled selfie entry manner for the first time, the user performs a return operation on the interface shown in FIG. 10E. In response to the user operation, the foldable screen mobile phone displays an image shooting preview interface 1801 shown in FIG. 18. The image shooting preview interface 1801 includes an image obtained by using the rear-facing camera. The image shooting preview interface 1801 is different from the image shooting preview interface 913 shown in FIG. 10F in that there is rear selfie guide information 1604.

If the user taps the blank area on the image shooting preview interface 1801, the rear selfie guide information 1604 disappears, and the image shooting preview interface 913 shown in FIG. 10F is displayed.

If the user taps the flip camera control 909 on the image shooting preview interface 1801, the user accesses the front selfie scene, and the image shooting preview interface 1401 shown in FIG. 14B is displayed.

If the user taps the rear selfie control 902 on the image shooting preview interface 1801, the user accesses the rear selfie function. For a specific process, refer to FIG. 12A to FIG. 12C. Details are not described again.

### 4. Use guide on a front selfie in a low light environment

In an embodiment, if the user has not used the rear selfie function and is currently in the front selfie scene, when it is detected that ambient light is low, the user may be guided to use the rear selfie function.

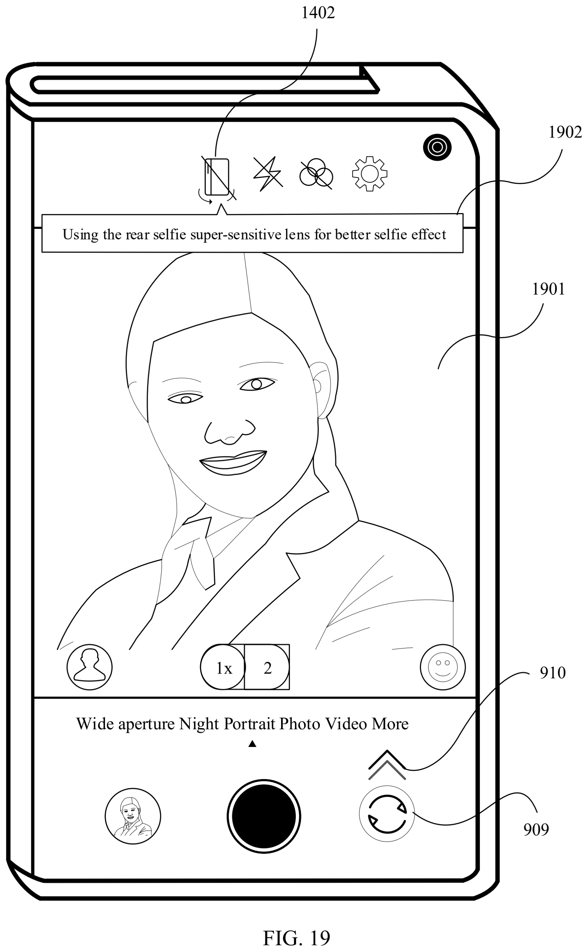

For example, FIG. 19 is a diagram of an example of a use guide interface of a front selfie in a low light environment according to an embodiment of this application. As shown in FIG. 19, the foldable screen mobile phone is in a folded state, the primary screen is in a screen-on state, the secondary screen is in a screen-off state, the camera application is started and is in the front selfie scene, and an image shooting preview interface 1901 is displayed on the primary screen. The image shooting preview interface 1901 includes an image obtained by using the front-facing camera.

Currently, the user has not used the rear selfie function. In addition, the foldable screen mobile phone detects a current low light environment. Therefore, the image shooting preview interface 1901 further includes rear selfie prompt information 1902. Optionally, the rear selfie prompt information 1902 may be displayed at the rear selfie switch 1402. Optionally, the rear selfie prompt information 1902 may display preset duration in a form of a bubble or the like. Content of the rear selfie prompt information 1902 may be, for example, "using the rear super-sensitive lens for better selfie effect".

If the user taps the blank area on the image shooting preview interface 1901, the rear selfie prompt information 1902 disappears, and the image shooting preview interface 1401 shown in FIG. 14B is displayed.

If the user refers to the rear selfie prompt information 1902 to tap the rear selfie switch 1402, the user accesses the rear selfie function. For a specific process, refer to FIG. 14B to FIG. 14D. Details are not described again.

In the front selfie scene, if the ambient light is low, image shooting effect is worse. Therefore, in this implementation, the user is prompted to use the rear selfie function, and is guided to capture a selfie image with better effect by using the rear selfie function, improving user experience.

### 5. Eye gaze guide on using the rear selfie function for the first time

When the user uses the rear selfie function for the first time, eye gaze guide information (also referred to as third guide information) may be displayed on the secondary screen, to guide the user to look at the rear-facing camera, so that effect of an obtained rear selfie image is better.

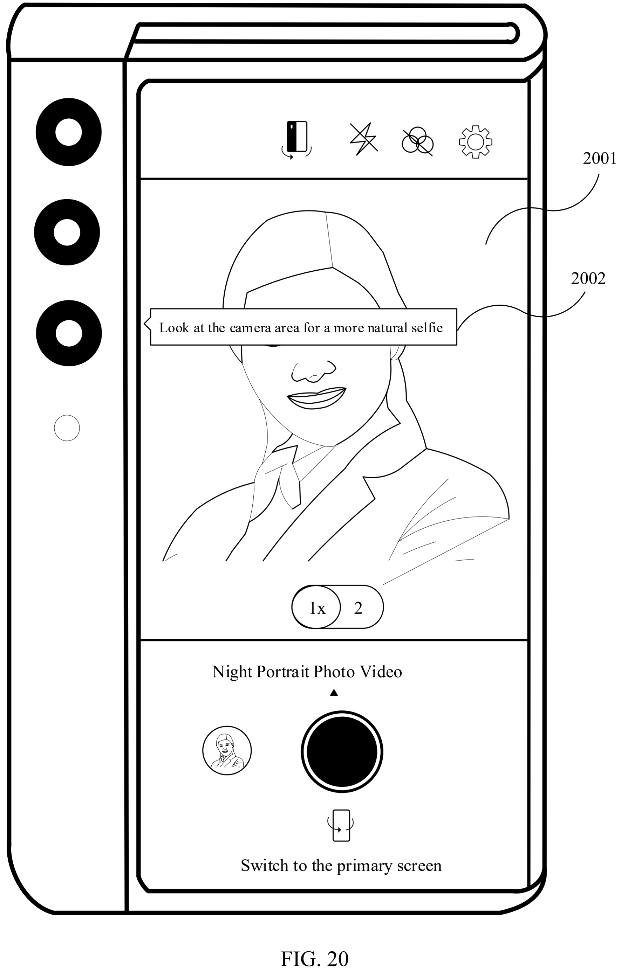

For example, FIG. 20 is a diagram of an example of an eye gaze guide interface according to an embodiment of this application. As shown in FIG. 20, the foldable screen mobile phone accesses the rear selfie function for the first time, the primary screen is in a screen-off state, the secondary screen is turned on, and an image shooting preview interface 2001 is displayed on the secondary screen. The image shooting preview interface 2001 includes the image captured by using the rear-facing camera. The image shooting preview interface 2001 is different from the image shooting preview interface 1106 in FIG. 12C in that there is eye gaze guide information 2002. Optionally, the eye gaze guide information 2002 may be displayed near the rear-facing camera. Optionally, the eye gaze guide information 2002 may be displayed in a form of a bubble or the like. Content of the eye gaze guide information 2002 may be, for example, "look at the camera area for a more natural selfie".

If the user taps the blank area on the image shooting preview interface 2001, the eye gaze guide information 2002 disappears, and the image shooting preview interface 1106 shown in FIG. 12C is displayed.

### 6. Querying whether to enable the flip-to-wake function after exiting the rear selfie function

In an embodiment, when the user has not enabled the flip-to-wake function, after the user uses the rear selfie function for the first time and exits, the user is queried whether to enable the flip-to-wake function. In this way, for a user who does not frequently use the camera setting control, and is not familiar with a camera function, this helps the user learn of the flip-to-wake function in time, helps the user enable the flip-to-wake function, and helps the user use the rear selfie function. That the user has enabled the flip-to-wake function means that, the user enables the flip-to-wake function before a current moment, and then disables the flip-to-wake function; or the user enables the flip-to-wake function before a current moment, and then does not disable the flip-to-wake function.

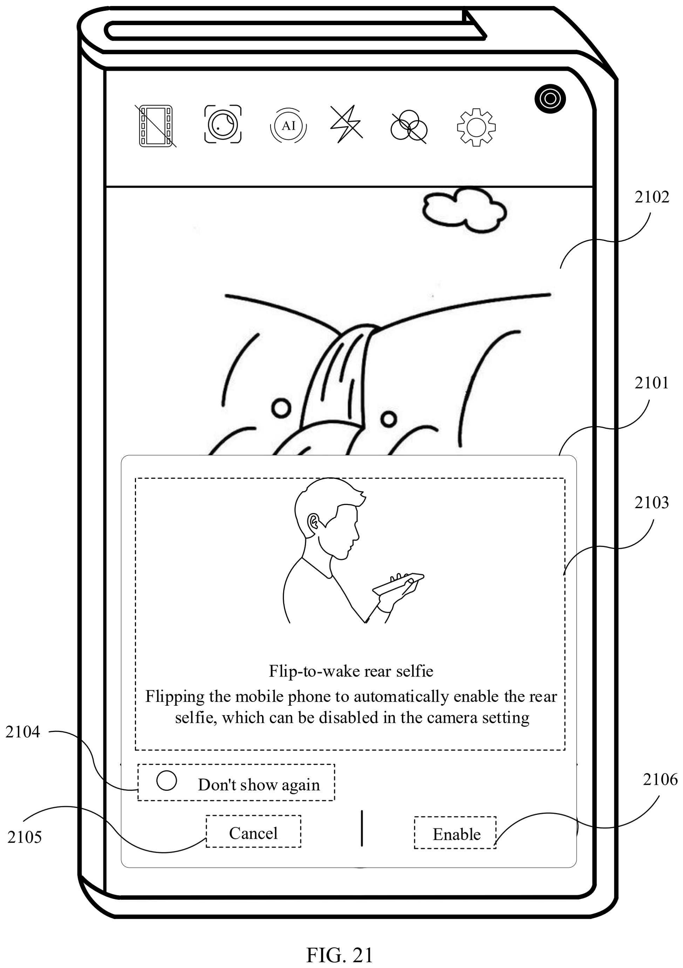

For example, FIG. 21 is a diagram of an example of an interface for querying whether to enable a flip-to-wake function according to an embodiment of this application. Refer to FIG. 13A to FIG. 13C. After the user uses the rear selfie function for the first time and exits the rear selfie function based on a process shown in FIG. 13A to FIG. 13C, the image shooting preview interface 913 shown in FIG. 13C is displayed. In this case, if the foldable screen mobile phone determines that the user has not enabled the flip-to-wake function, the foldable screen mobile phone pops up a query window that queries whether to enable the flip-to-wake function (briefly referred to as a flip-to-wake query window, also referred to as a second pop-up window) 2101, and displays the interface 2102 shown in FIG. 21.

The flip-to-wake query window 2101 may include flip-to-wake function introduction information 2103, a don't-show-again option 2104, a cancel control 2105, and an enable control 2106.

If the user taps the enable control 2106, in response to the user operation, the foldable screen mobile phone closes the flip-to-wake query window 2101, and enables the flip-to-wake function. Then, the user may access or exit the rear selfie function by flipping the mobile phone. For details, refer to a process shown in FIG. 15A to FIG. 15C. Details are not described again.

It may be understood that, after the user taps the enable control 2106, the flip-to-wake switch 1003 on the flip-to-wake rear selfie interface 1002 is in an on state and is highlighted, as shown in FIG. 11C.

If the user does not tick the don't-show-again option 2104, and directly taps the cancel control 2105, in response to the user operation, the foldable screen mobile phone closes the flip-to-wake query window 2101, and does not enable the flip-to-wake function. Optionally, after the user taps the cancel control 2105, the foldable screen mobile phone may further pop up the flip-to-wake query window 2101 again according to preset pop-up window logic after the user exits the rear selfie function. The preset pop-up window logic may include: for example, a time interval between two consecutive pop-ups being not less than one week, and a maximum of three pop-ups. Certainly, a prerequisite for each pop-up of the flip-to-wake query window 2101 includes: The user does not tick the don't-show-again option 2104, and the user has not enabled the flip-to-wake function (whether enabling in the camera setting or enabling by using the flip-to-wake query window 2101). Each pop-up of the flip-to-wake query window 2101 occurs after the rear selfie function is exited.

If the user ticks the don't-show-again option 2104 and taps the cancel control 2105, in response to the user operation, the foldable screen mobile phone closes the flip-to-wake query window 2101, does not enable the flip-to-wake function, and does not subsequently pop up the flip-to-wake query window 2101.

After enabling the flip-to-wake function by using the flip-to-wake query window 2101, the user may disable the function in the camera setting. For details, refer to FIG. 11A to FIG. 11D. Details are not described again.

### 7. Guiding to switch the selfie entry manner after exiting the rear selfie function

In an embodiment, when the user has not switched the selfie entry manner, after the user uses the rear selfie function for the second time and exits, the user is guided to switch the selfie entry manner. In this way, for a user who does not frequently use the camera setting control, and is not familiar with a camera function, this helps the user learn in time that the selfie entry manner is switchable, helps the user directly switch the selfie entry manner, and helps the user use the rear selfie function. In addition, in this embodiment, after the user uses the rear selfie function for the second time, the user is guided to switch the selfie entry manner. This guide follows querying about the flip-to-wake function in the foregoing embodiment, to avoid affecting user experience due to simultaneously recommending a plurality of functions.

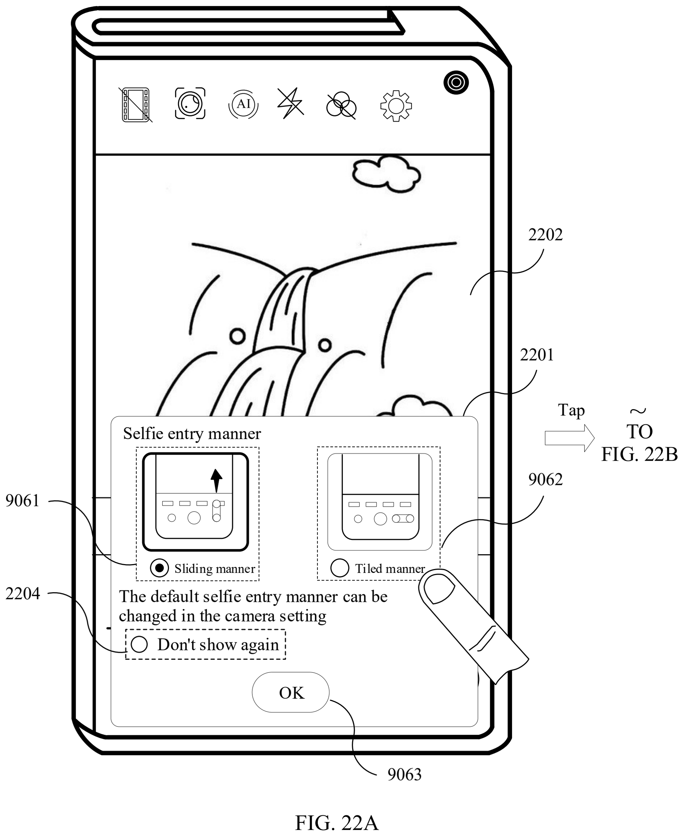

For example, FIG. 22A to FIG. 22D are a diagram of an example of an interface for guiding to switch a selfie entry manner according to an embodiment of this application. Refer to FIG. 13A to FIG. 13C. After the user uses the rear selfie function for the second time and exits the rear selfie function based on the process shown in FIG. 13A to FIG. 13C, the image shooting preview interface 913 shown in FIG. 13C is displayed. In this case, if the foldable screen mobile phone determines that the user has not switched the selfie entry manner, the foldable screen mobile phone pops up a selfie entry manner switching guide window (briefly referred to as an entry guide pop-up window, also referred to as a third pop-up window) 2201, and displays an interface 2202 shown in FIG. 22A.

Similar to the selfie entry manner setting pop-up window 906 shown in FIG. 10C, the entry guide pop-up window 2201 also includes the sliding option 9061, the tiled option 9062, and the OK control 9063. Different from the selfie entry manner setting pop-up window 906, the entry guide pop-up window 2201 includes modification location prompt information 2203 and a don't-show-again option 2204. The modification location prompt information 2203 is used to inform the user that the selfie entry manner may be modified in the camera setting.

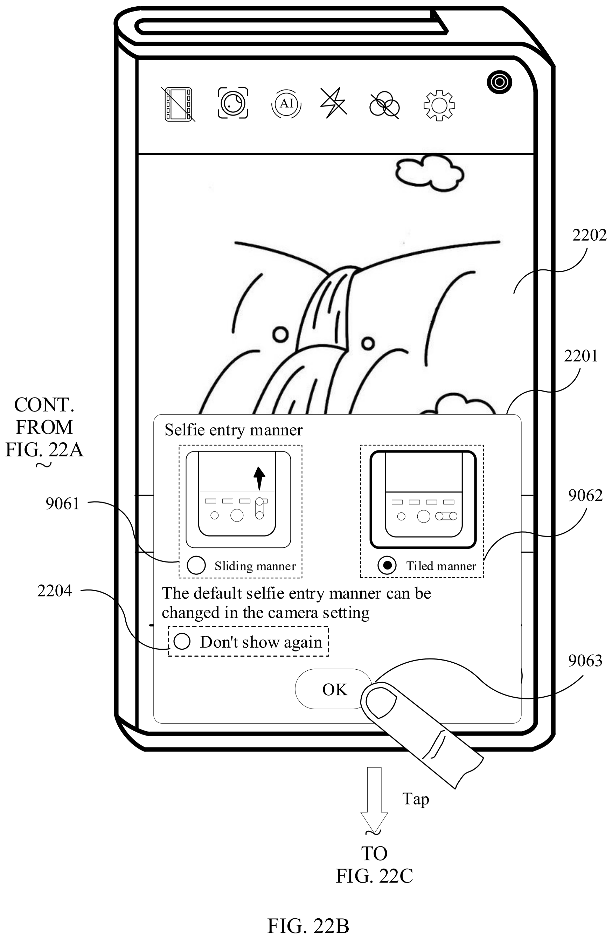

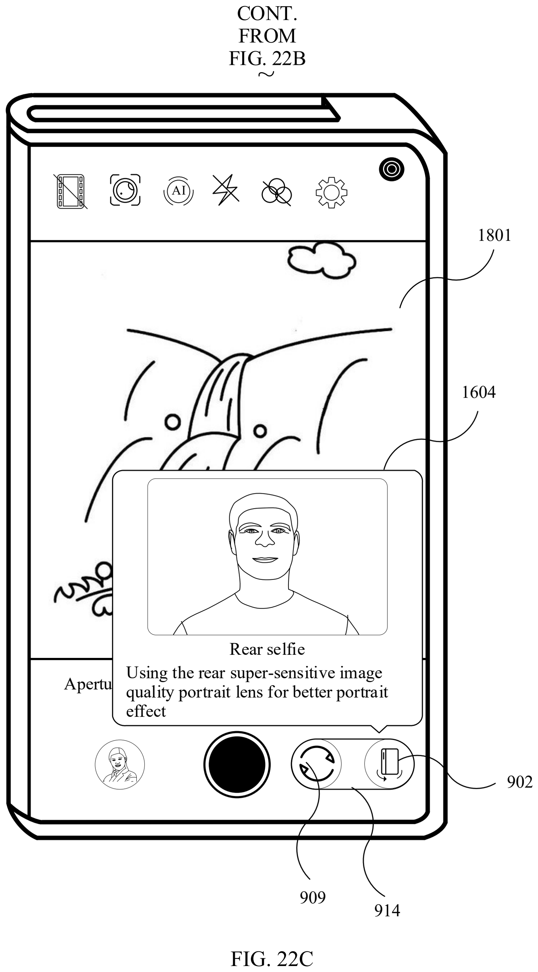

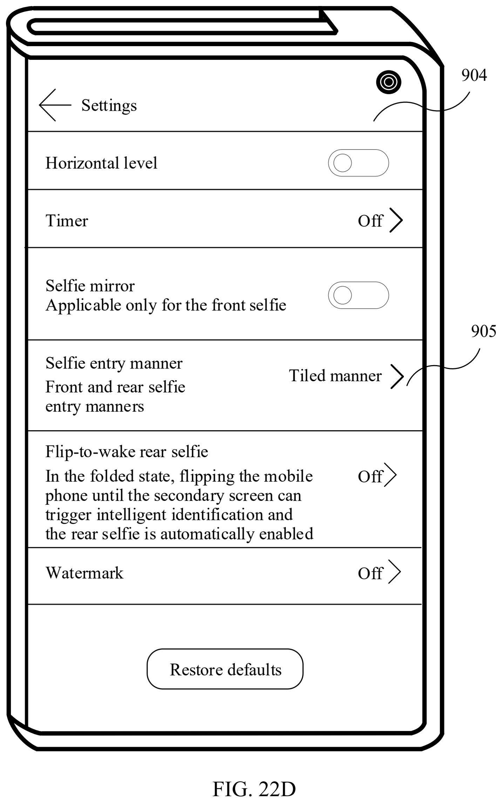

If the user taps the tiled option 9062, the tiled option 9062 is highlighted, and the sliding option 9061 is unhighlighted, as shown in FIG. 22B. Then, the user taps the OK control 9063, and in response to the user operation, the foldable screen mobile phone closes the entry guide pop-up window 2201, and switches the selfie entry manner to a tiled manner. Simultaneously, the rear selfie guide information 1604, namely, the image shooting preview interface 1801 shown in FIG. 22C, is displayed on the interface. It may be understood that, after the foregoing operation, the selfie entry manner option 905 on the camera setting interface 904 is displayed as a tiled manner, as shown in FIG. 22D.

In this implementation, before the user switches the selfie entry manner by using the foregoing process, the user has not switched the selfie entry manner, that is, the user switches the selfie entry manner for the first time. Therefore, after the user completes switching, the rear selfie guide information 1604 is further displayed, to guide the user to use the rear selfie function, improving user experience.

If the user does not tap the tiled option 9062, that is, the user neither changes the selfie entry manner nor ticks the don't-show-again option 2204, and directly taps the OK control 9063. In response to the user operation, the foldable screen mobile phone closes the entry guide pop-up window 2201, the selfie entry manner remains the same, still keeping a sliding manner, and the interface is restored to the image shooting preview interface 913 shown in FIG. 13C.

Optionally, in this case, the foldable screen mobile phone may further pop up the entry guide pop-up window 2201 again according to the preset pop-up window logic after the user exits the rear selfie function. The preset pop-up window logic may include: for example, a time interval between two consecutive pop-ups being not less than one week, and a maximum of three pop-ups. Certainly, a prerequisite for each pop-up of the entry guide pop-up window 2201 includes: The user does not tick the don't-show-again option 2204, and the user has not switched the selfie entry manner (whether switched in the camera setting or switched by using the entry guide pop-up window 2201). Each pop-up of the entry guide pop-up window 2201 occurs after the rear selfie function is exited.

If the user does not tap the tiled option 9062, that is, the user does not change the selfie entry manner, ticks the don't-show-again option 2204, and then taps the OK control 9063. In response to the user operation, the foldable screen mobile phone closes the entry guide pop-up window 2201, the selfie entry manner remains the same, still keeping a sliding manner, and the entry guide pop-up window 2201 does not pop up subsequently.

After the user switches the selfie entry manner to a tiled manner by using the entry guide pop-up window 2201, the user may re-switch the selfie entry manner to a sliding manner in the camera setting. For details, refer to FIG. 10A to FIG. 10F. Details are not described again.

### V. Super strong fill light during the use of the rear selfie function

In this embodiment of this application, when the rear selfie function is enabled, the super strong fill light is supported. During use of the rear selfie function, the user may enable a super strong fill light function through one tap, so that the rear selfie effect is better, and user experience is further improved. The following provides descriptions with reference to the accompanying drawings.

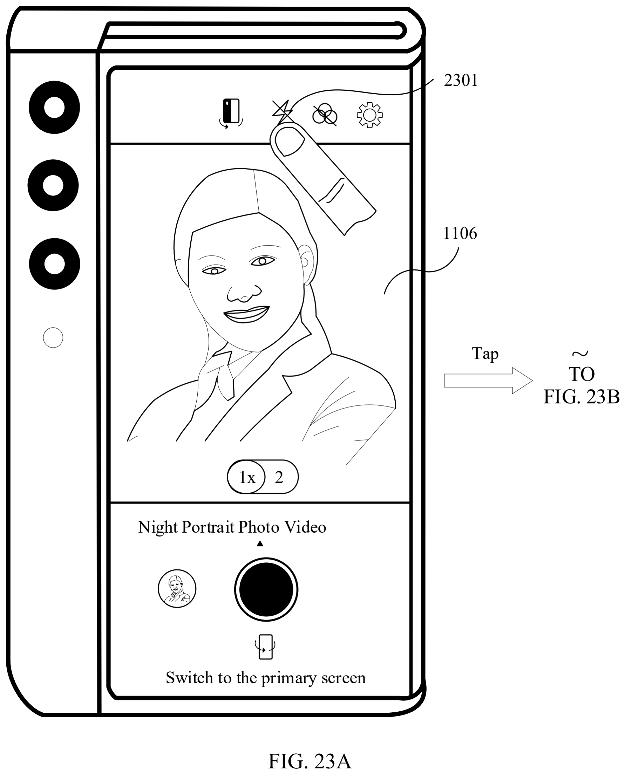

For example, FIG. 23A to FIG. 23E are a diagram of an example of interface changes for using super strong fill light according to an embodiment of this application. As shown in FIG. 23A, the foldable screen mobile phone is in a folded state, and the rear selfie function is enabled, the primary screen is in a screen-off state, the secondary screen is turned on, and an image obtained by using the rear-facing camera is displayed on the secondary screen. That is, the image shooting preview interface 1106 is displayed on the secondary screen.

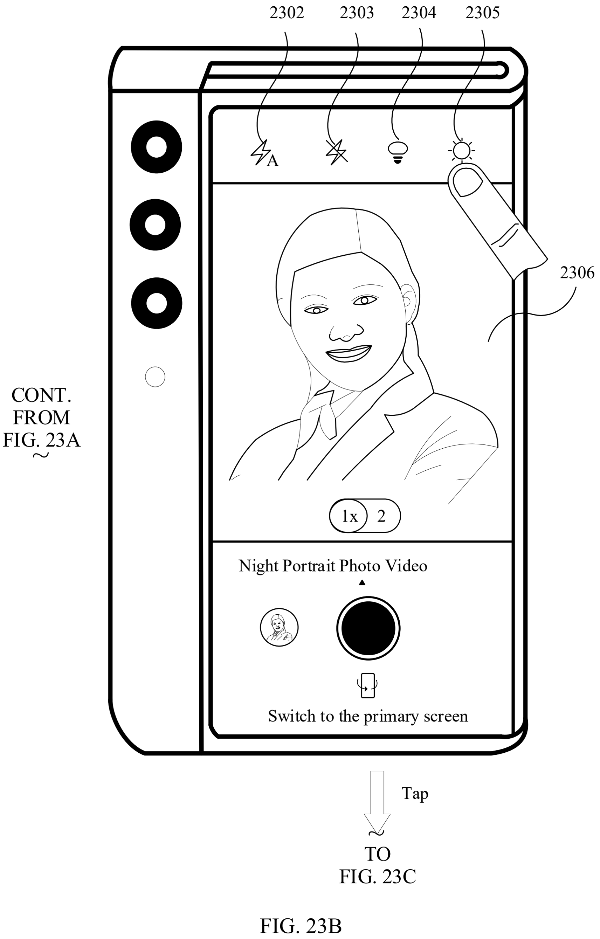

The image shooting preview interface 1106 includes a flash option 2301. The user taps the flash option 2301. In response to the user operation, the foldable screen mobile phone expands the flash option to display an auto flash 2302, a flash off control 2303, a flash always-on switch 2304, and a super strong fill light switch (also referred to as a fourth control) 2305. Refer to an image shooting preview interface 2306 (also referred to as an eighth image shooting preview interface) in FIG. 23B. The auto flash 2302 is used to enable an automatic flash mode. After this mode is enabled, a flash is enabled automatically according to a surrounding light condition. The flash off control 2303 is used to disable the flash. After the flash is disabled, the flash does not work. The flash always-on switch 2304 is used to control the flash to always remain on (that is, screen fill light always remains on) for fill light during image shooting. The super strong fill light switch 2305 is used to control enabling of the super strong fill light function. The super strong fill light function means that the flash always remains on, and screen luminance of the secondary screen is increased, to provide a strong fill light function. Optionally, functions corresponding to the four controls are independent and mutually exclusive. The user may select one of the four controls as required.

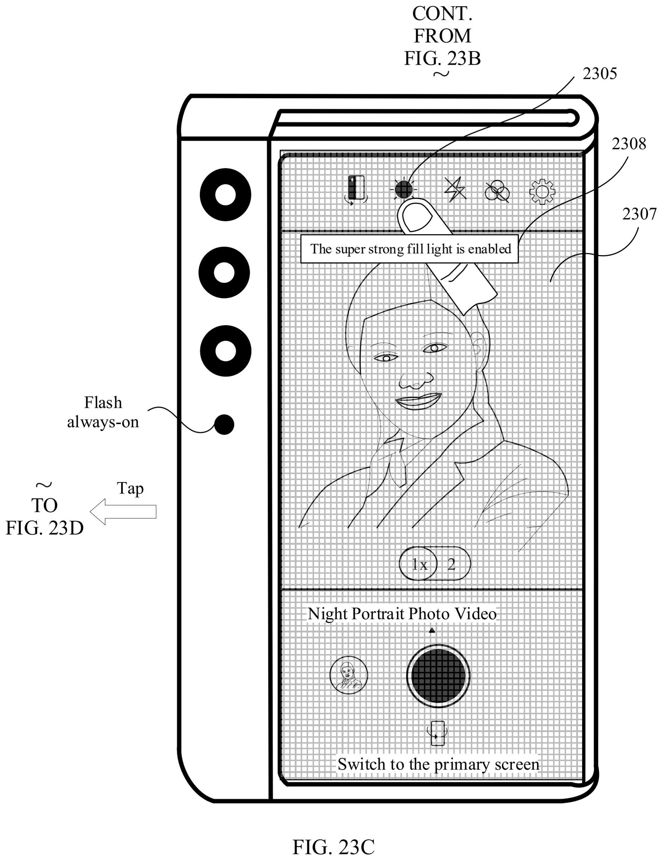

The user taps the super strong fill light switch 2305, and the foldable screen mobile phone enables the super strong fill light function in response to the user operation. A flash of the rear-facing camera always remains on, and the luminance of the secondary screen is increased (filled grids are shown in the figure). Simultaneously, an image shooting preview interface 2307 shown in FIG. 23C is displayed on the secondary screen. The image shooting preview interface 2307 includes the super strong fill light switch 2305, and this switch control is in a highlighted state, which indicates that the super strong fill light function is currently enabled. In addition, the image shooting preview interface 2307 further includes super strong fill light enabling prompt information 2308.

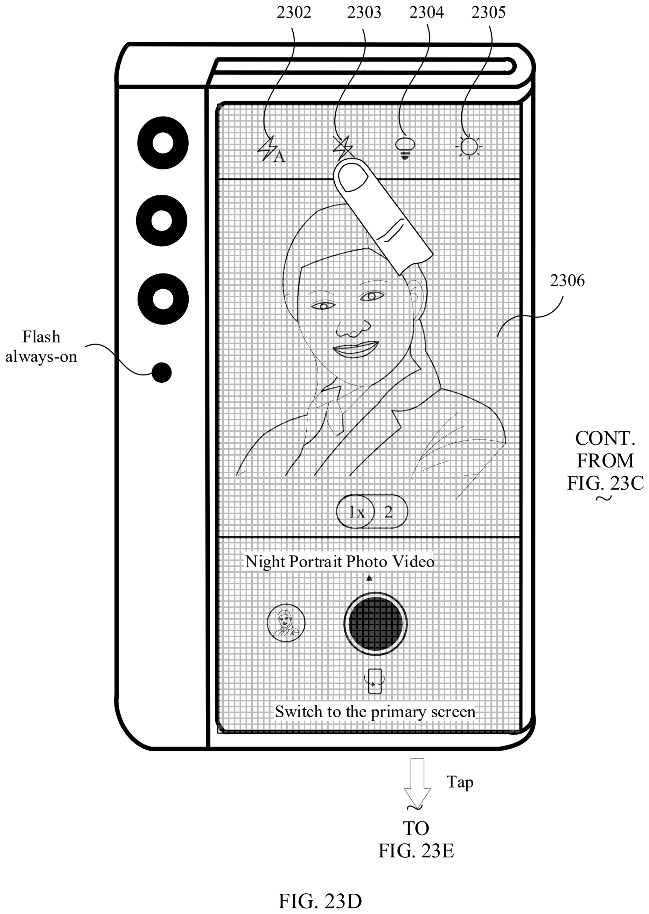

If the user needs to disable the super strong fill light function, the user may tap the super strong fill light switch 2305 on the image shooting preview interface 2307. In response to the user operation, the foldable screen mobile phone displays the image shooting preview interface 2306, as shown in FIG. 23D. The image shooting preview interface 2306 is the same as FIG. 23B, and a difference lies in that the super strong fill light function in FIG. 23D is in an on state. Therefore, the flash of the rear-facing camera is in an always-on state, and the luminance of the secondary screen is high.

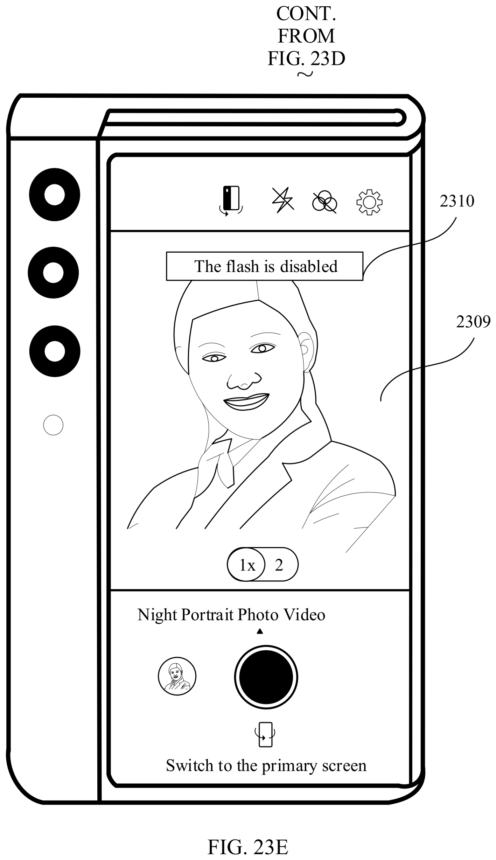

Then, the user taps the flash off control 2303 on the image shooting preview interface 2306, to disable the super strong fill light function. An image shooting preview interface 2309 is displayed, as shown in FIG. 23E. The image shooting preview interface includes flash off prompt information 2310 that is used to inform the user that the flash is currently disabled.

### VI. Exiting the camera application to the background after accessing the rear selfie function

After the user accesses the rear selfie function by using the control, if the user exits the camera application to the background application, the foldable screen mobile phone may keep a memory of running the camera application within preset duration (for example, 15 minutes), that is, when the user re-starts the camera application within the preset duration, the rear selfie function continues to run. In this way, the user does not need to repeat the operation to access the rear selfie function. This simplifies the user operation and improves user experience.

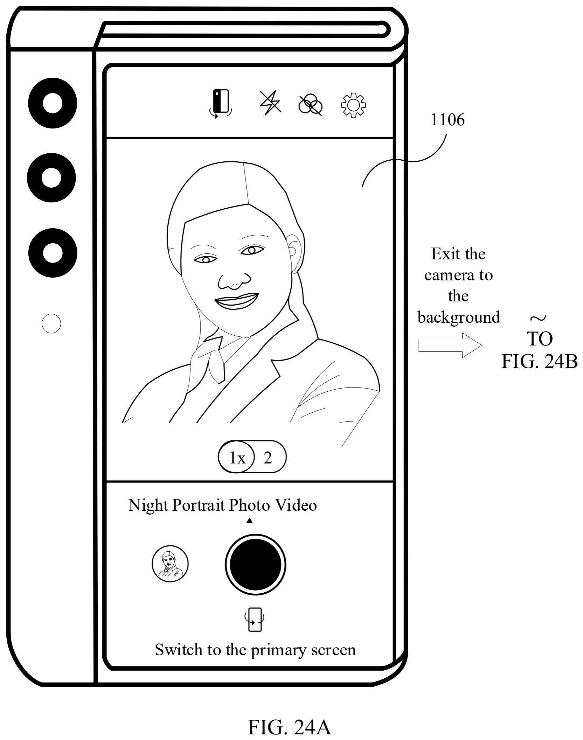

For example, FIG. 24A to FIG. 24D are a diagram of an example of interface changes for exiting a camera application in a process of accessing a rear selfie function according to an embodiment of this application. As shown in FIG. 24A, the rear selfie function is currently accessed in the camera application, and the image shooting preview interface 1106 is displayed through the secondary screen. Then, the user performs an operation of exiting the camera to the background. For example, the operation of exiting the camera to the background may include: a. tapping a home page key in a three-key navigation bar, or sliding up from the bottom of a screen; and after the user performs the operation, the foldable screen mobile phone exits the camera application to the background and displays a home screen (also referred to as a desktop, a home page, or the like); and b. sliding up a specific distance from the bottom of the screen and pausing to access a multi-task interface, and the user taps an interface thumbnail of another task (application) in the multi-task interface; and after the user performs the operation, the foldable screen mobile phone exits the camera application to the background, and displays an interfaces of the another application. The operation of exiting the camera to the background is not limited in embodiments of this application.

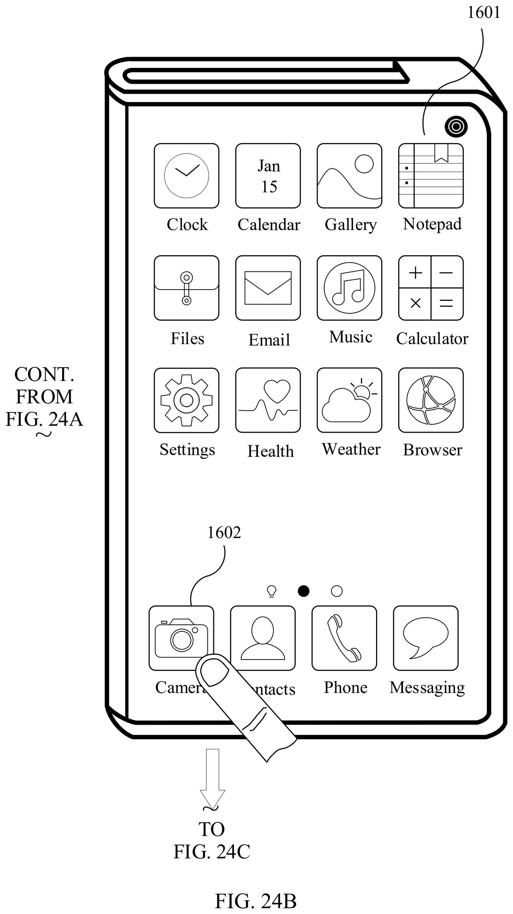

For example, the user taps the home page key (not shown in FIG. 24A to FIG. 24D) in the three-key navigation bar. In response to the user operation, the foldable screen mobile phone controls the secondary screen to be turned off, controls the primary screen to be turned on, and displays the home screen 1601 through the primary screen, as shown in FIG. 24B.

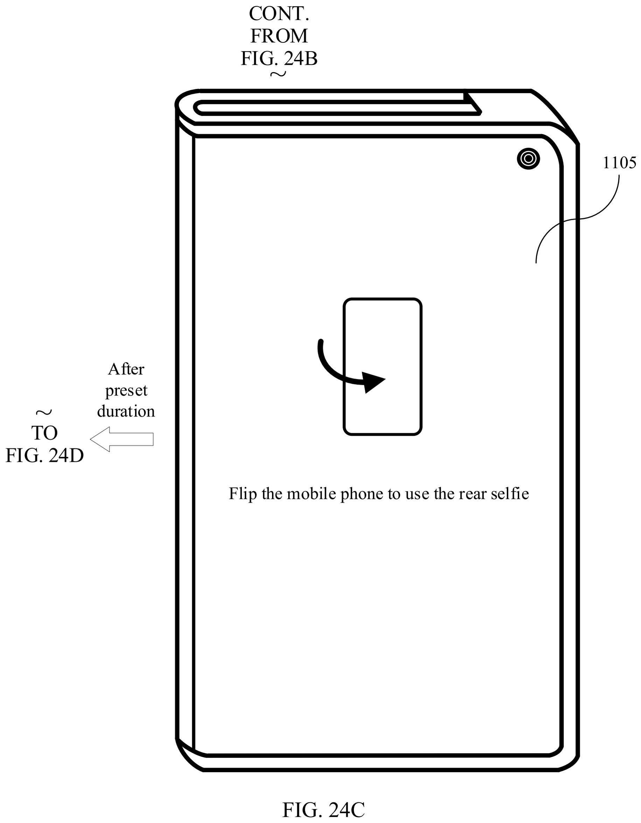

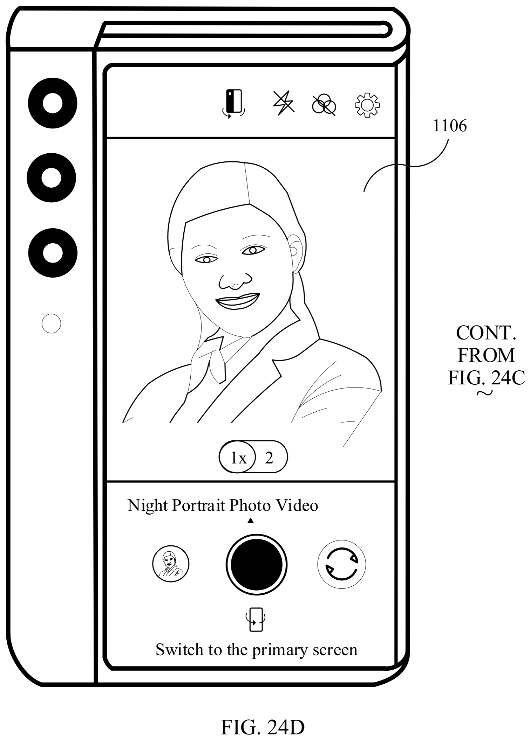

After performing some other operations on the primary screen, the user re-taps the camera application icon 1602 on the home screen 1601 within preset duration (for example, 15 minutes). In response to the user operation, the foldable screen mobile phone starts the camera application, directly accesses the rear selfie function, and displays the flip guide interface 1105, as shown in FIG. 24C. After the flip guide interface 1105 is displayed for the preset duration, the rear selfie function is accessed in the camera application. The foldable screen mobile phone controls the primary screen to be turned off and the secondary screen to be turned on, and displays the image shooting preview interface 1106 on the secondary screen. As shown in FIG. 24D, the image shooting preview interface 1106 includes an image obtained by using the rear-facing camera.

In some other embodiments, after accessing the rear selfie function, if the user taps a physical lock screen button to lock the screen, the foldable screen mobile phone exits the rear selfie function in response to the user operation. Then, the user re-taps the lock screen button to turn on the screen, and the rear non-selfie scene is automatically accessed in the camera application. The image shooting preview interface 908 shown in FIG. 8A or the image shooting preview interface 913 shown in FIG. 9 is displayed, specifically depending on the selfie entry manner set by the user. Optionally, a mode of accessing the rear non-selfie scene may inherit an image shooting mode in the rear selfie scene before the user locks the screen, improving user experience.

### VII. Unfolding the mobile phone during use of the rear selfie function

In this embodiment, during use of the rear selfie function, if the user unfolds the foldable screen mobile phone, the rear selfie function is exited and the front selfie scene in an unfolded state is accessed in the camera application. The front selfie scene in an unfolded state means that the foldable screen mobile phone obtains an image by using the front-facing camera, and displays an image shooting preview interface 2501 (also referred to as a tenth image shooting preview interface) jointly through the primary screen and the secondary screen. The image shooting preview interface 2501 includes the image obtained by using the front-facing camera. In other words, the image shooting preview interface 2501 is an image shooting preview interface of the front selfie scene in an unfolded state. During use of the rear selfie function, the user unfolds the foldable screen mobile phone to an unfolded state, which indicates that the user needs to take a selfie in an unfolded state. Therefore, directly accessing the front image shooting scene in an unfolded state is highly likely to meet a use requirement of the user, and user experience is improved.

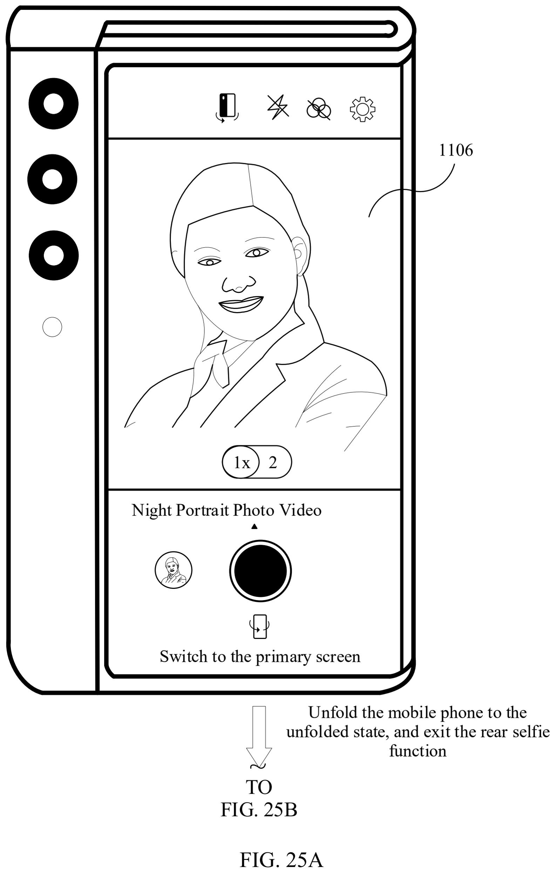

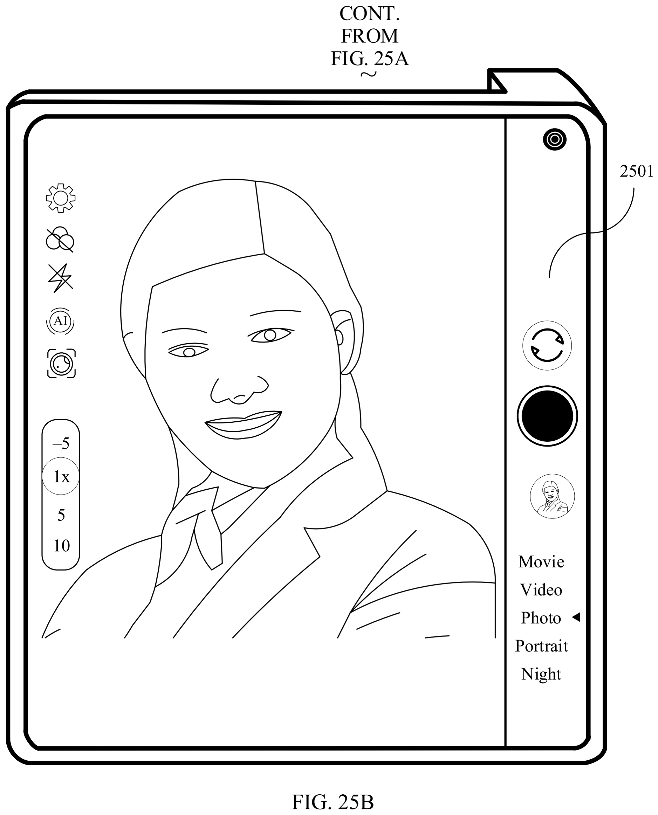

For example, FIG. 25A and FIG. 25B are a diagram of an example of interface changes for unfolding a mobile phone in a process of using a rear selfie function according to an embodiment of this application. As shown in FIG. 25A, the user is using the rear selfie function, the foldable screen mobile phone displays the image shooting preview interface 1106 on the secondary screen, and the image shooting preview interface 1106 includes an image obtained by using the rear-facing camera. In this case, for the foldable screen mobile phone, the side on which the secondary screen is located (namely, the side on which the rear-facing camera is located) faces the user, and the side on which the primary screen is located faces away from the user.

The user unfolds the foldable screen mobile phone, to switch the foldable screen mobile phone to an unfolded state. In this case, both the primary screen and the secondary screen of the foldable screen mobile phone face the user, and a first back housing, a second back housing, and the rear-facing camera face away from the user. In response to the user operation, the foldable screen mobile phone obtains an image by using the front-facing camera. Simultaneously, the secondary screen is turned on, and the image shooting preview interface 2501 is displayed jointly through the primary screen and the secondary screen. The image shooting preview interface 2501 includes the image obtained by using the front-facing camera, as shown in FIG. 25B.

Optionally, the user unfolds the foldable screen mobile phone by using the foregoing process. After the foldable screen mobile phone accesses the front selfie scene in an unfolded state, an image shooting mode may be consistent with an image shooting mode used when the rear selfie function is used, that is, the image shooting mode in the image shooting preview interface 2501 is consistent with the image shooting mode in the image shooting preview interface 1106. This can inherit a selection of the user and improve user experience.

### VIII. Viewing an image during use of the rear selfie function

In this embodiment, during use of the rear selfie function, the user may view a captured image by using an image thumbnail (also referred to as a seventh control) on the image shooting preview interface 1106. The image can be displayed through the secondary screen, and functions such as adding to favorites, deletion, and zoom for display are supported. In this way, the user may view the image at any time without exiting the rear selfie function. This facilitates use of the user and improves user experience.

In addition, during viewing of the image by the user, if the foldable screen mobile phone is unfolded, the foldable screen mobile phone displays the image jointly through the primary screen and the secondary screen, and functions such as sharing, adding to favorites, editing, and deletion are supported. In other words, when viewing the image through the secondary screen, the user may unfold the foldable screen at any time, to simultaneously display the image through the primary screen and the secondary screen, that is, a large image preview is supported. This facilitates use of the user and improves user experience.

The following provides descriptions with reference to an accompanying drawing.

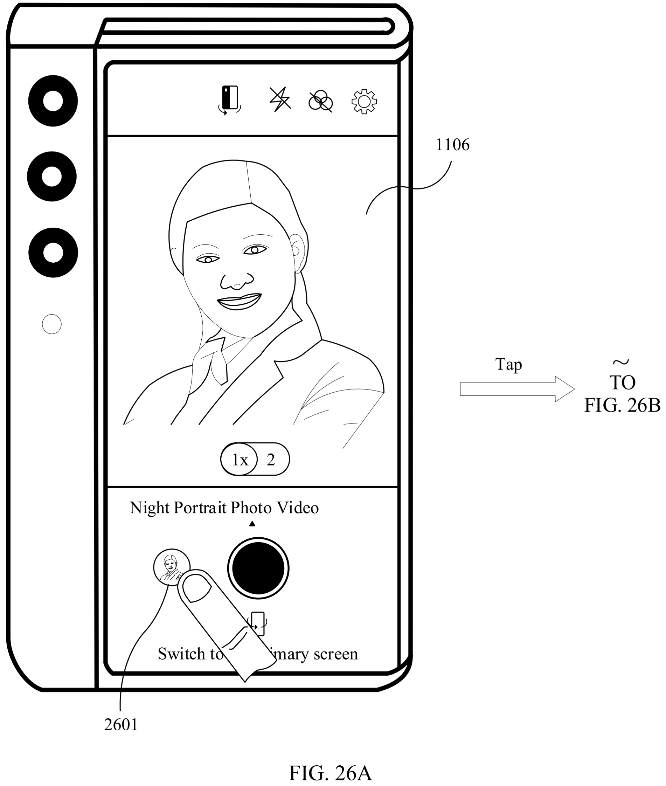

For example, FIG. 26A to FIG. 26D are a diagram of an example of interface changes for viewing an image in a process of using a rear selfie function according to an embodiment of this application. As shown in FIG. 26A, the user is using the rear selfie function, and the foldable screen mobile phone displays the image shooting preview interface 1106 on the secondary screen. The image shooting preview interface 1106 includes a thumbnail 2601 of an image captured by the user.

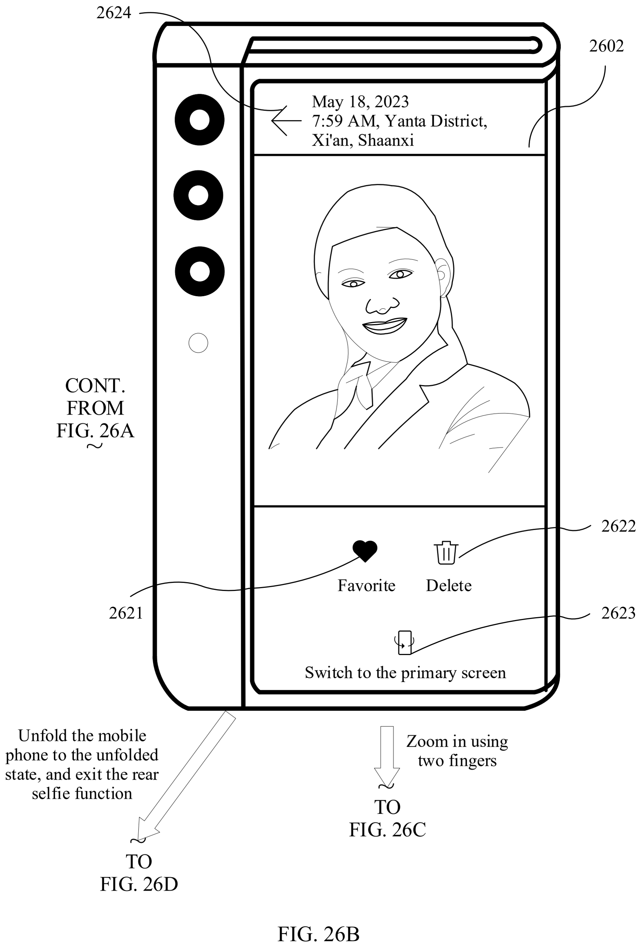

The user taps the thumbnail 2601. In response to the user operation, the foldable screen mobile phone displays an image preview interface 2602 (also referred to as a first interface) through the secondary screen. The image preview interface 2602 includes an image corresponding to the thumbnail 2601, as shown in FIG. 26B. In addition, the image preview interface 2602 includes a favorite control 2621, a delete control 2622, a primary screen switching control 2623, a return control 2624, and the like. The user taps the favorite control 2621, and the foldable screen mobile phone adds the image to favorites. The user taps the delete control 2622, and the foldable screen mobile phone deletes the image. When the user taps the primary screen switching control 2623, the rear selfie function is exited and the rear non-selfie scene in a folded state is accessed in the camera application. The foldable screen mobile phone displays the image shooting preview interface 908 or the image shooting preview interface 913 (depending on the selfie entry manner set by the user). The user taps the return control 2624, and the foldable screen mobile phone exits the current image preview interface 2602 and restores display of the image shooting preview interface 1106.

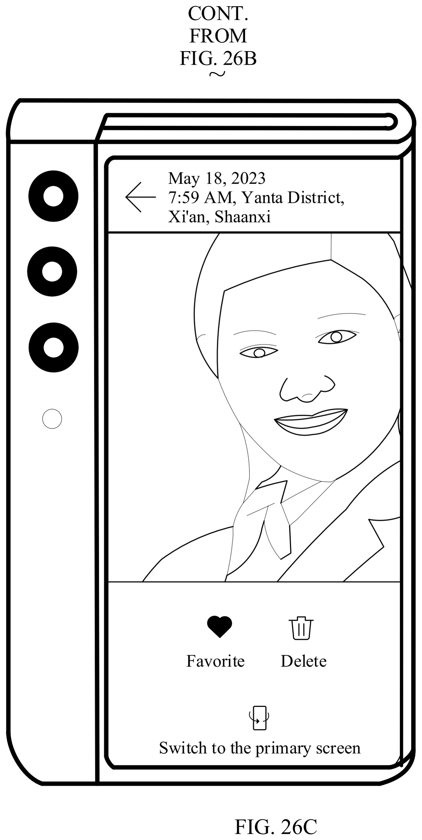

In addition, if the user performs a two-finger zoom operation on the image displayed on the image preview interface 2602, the foldable screen mobile phone zooms out or in the image in response to the user operation. For example, the user performs a two-finger zoom-in operation. The foldable screen mobile phone displays the zoomed-in image through the secondary screen, as shown in FIG. 26C. The two-finger zoom operation may include, for example, a two-finger pinch operation.

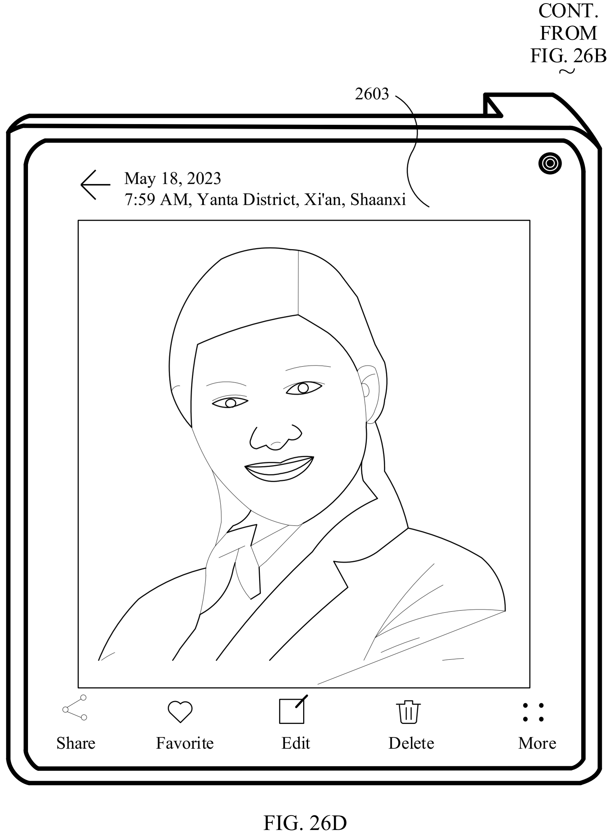

In another embodiment, when the foldable screen mobile phone displays the interface shown in FIG. 26B, if the user unfolds the foldable screen to an unfolded state, the primary screen and the secondary screen simultaneously display an image preview interface 2603 (also referred to as a second interface), as shown in FIG. 26D.

### IX. Folding the mobile phone during front image shooting in an unfolded state

In this embodiment, in the front selfie scene in an unfolded state, the mobile phone is directly folded, and the foldable screen mobile phone accesses the front selfie scene in a folded state in response to the user operation. Then, the user may access the rear selfie function by tapping the rear selfie control or using a flip-to-wake manner.

The user takes a front selfie in an unfolded state, and both the primary screen and the secondary screen face the user. After the user folds the mobile phone, the user usually tends to face the primary screen. Therefore, after the mobile phone is folded, the front selfie scene is accessed, and the primary screen is turned on. This better meets a use habit of the user, and improves user experience.

The following provides descriptions with reference to an accompanying drawing.

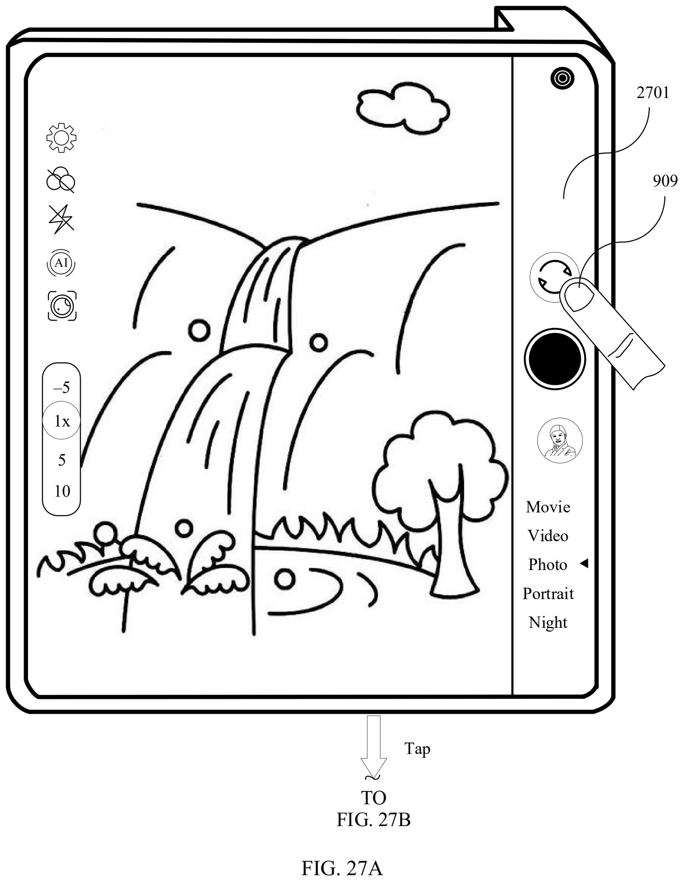

For example, FIG. 27A to FIG. 27C are a diagram of an example of interface changes of a foldable mobile phone in an unfolded state for front image shooting according to an embodiment of this application. As shown in FIG. 27A, the foldable screen mobile phone is in an unfolded state, the user is using the rear-facing camera for image shooting, and an image shooting preview interface 2701 is displayed jointly on the primary screen and the secondary screen. The image shooting preview interface 2701 includes an image obtained by using the rear-facing camera.

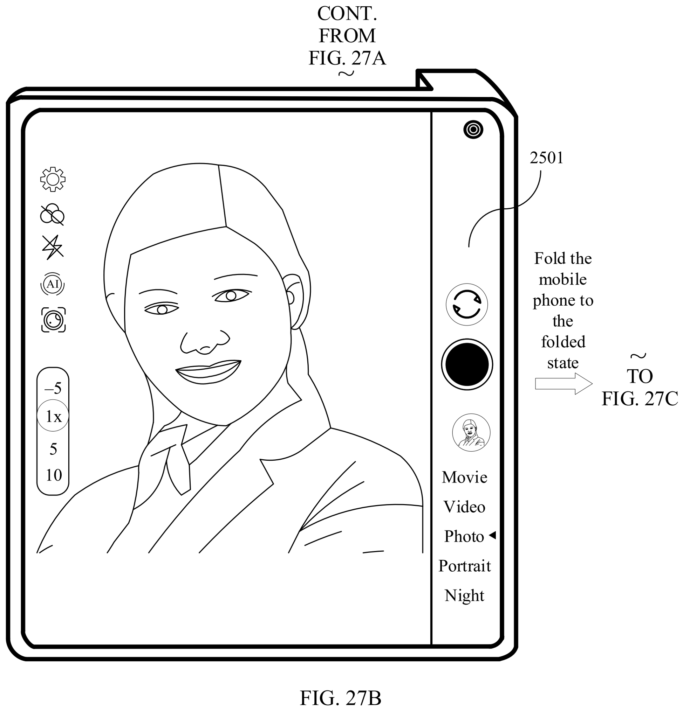

The image shooting preview interface 2701 further includes the flip camera control 909, and the user taps the flip camera control 909. In response to the user operation, the foldable screen mobile phone flips a camera, obtains the image by using the front-facing camera, and displays the image shooting preview interface 2501 jointly through the primary screen and the secondary screen, as shown in FIG. 27B.

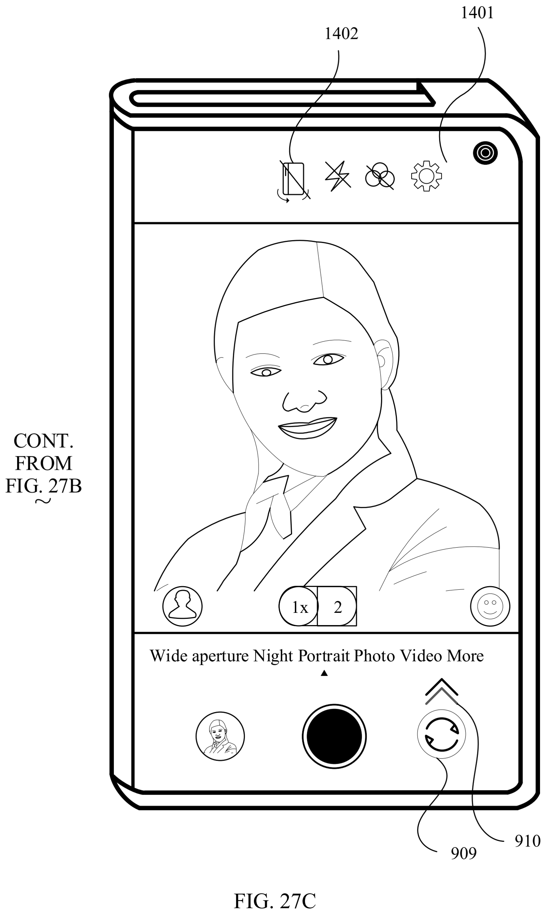

Then, the user folds the mobile phone to a folded state. For example, the selfie entry manner set by the user is a sliding manner. In response to the user operation, the secondary screen of the foldable screen mobile phone is turned off, and the image shooting preview interface 1401 is displayed through the primary screen. The image shooting preview interface 1401 includes an image obtained by using the front-facing camera, as shown in FIG. 27C.

It may be understood that if the selfie entry manner set by the user is a tiled manner, the flip camera control 909 and the sliding indication arrow 910 on the image shooting preview interface 1401 are replaced with the second capsule 914 and the flip camera control 909 and the rear selfie control 902 that are displayed in the second capsule 914 in a tiled manner shown in FIG. 9. Details are not described again.

Based on the image shooting preview interface 1401, the user may slide up from the flip camera control 909 to bring up the rear selfie control, and tap to access the rear selfie function, or tap the rear selfie switch to access the rear selfie function. For details, refer to the foregoing embodiment. Details are not described again.

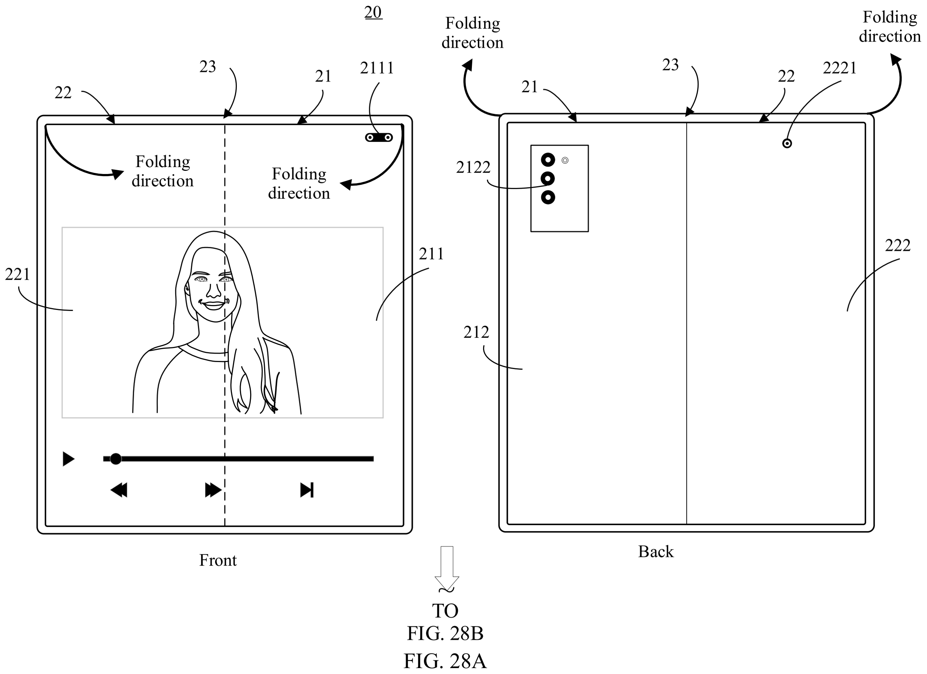

In the foregoing embodiments, an outward foldable screen mobile phone is used as an example to describe a method provided in this application. In some other embodiments, the foregoing method may also be applied to an inward foldable screen mobile phone. Structures of the inward foldable screen mobile phone and the outward foldable screen mobile phone are different. For example, FIG. 28A to FIG. 28C are a diagram of a structure of an example of a foldable screen mobile phone 20 according to an embodiment of this application, and the foldable screen mobile phone 20 is an inward foldable screen mobile phone. As shown in FIG. 28A to FIG. 28C, the foldable screen mobile phone 20 includes a first mechanical part 21, a second mechanical part 22, and a connection component 23 (located at a location shown by a dashed line in FIG. 28A) that connects the first mechanical part 21 and the second mechanical part 22. The first mechanical part 21 and the second mechanical part 22 implement flip folding by using the connection component 23.

The first mechanical part 21 may include a first internal display screen 211 and a back housing 212. A first front-facing camera 2111 is disposed on the first internal display screen 211. The first back housing 212 is disposed on a back of the first internal display screen 211. A rear-facing camera 2122 may be disposed on the back housing 212.

The second mechanical part 12 may include a second internal display screen 221 and an external display screen 222. The second internal display screen 221 and the external display screen 222 face away from each other. A second front-facing camera 2221 may be disposed on the external display screen 222.

During use, an included angle between the first mechanical part 21 and the second mechanical part 22 is changed by using the connection component 23, to implement a plurality of states of the foldable screen mobile phone 20. It may be understood that the second internal display screen 221 and the first internal display screen 211 may be essentially an integrally formed flexible display screen (namely, a foldable screen, also referred to as an internal display screen of an inward foldable screen mobile phone). When the foldable screen mobile phone 20 is folded by using the connection component 23, the connection component 23 divides a screen into two parts: the second internal display screen 221 and the first internal display screen 211.

As shown in FIG. 28A, when the included angle between the first mechanical part 21 and the second mechanical part 22 is approximately 180°, the foldable screen mobile phone 20 is in an unfolded state. In this case, a surface of the first back housing 212 and a surface of the external display screen 222 are approximately on a same plane. In this case, the external display screen 222 and the rear-facing camera 2122 are on a same side. A surface of the first internal display screen 211 and a surface of the second internal display screen 221 are approximately on a same plane. In an unfolded state, an outgoing light direction of the external display screen 222 is opposite to an incoming light direction of the rear-facing camera 2122. In an unfolded state, the external display screen 222 is in a screen-off state, and the foldable screen mobile phone 20 simultaneously displays, by using the first internal display screen 211 and the second internal display screen 221, to-be-displayed content. It should be noted that in a screen-off state, the external display screen 222 cannot receive a touch operation of a user.

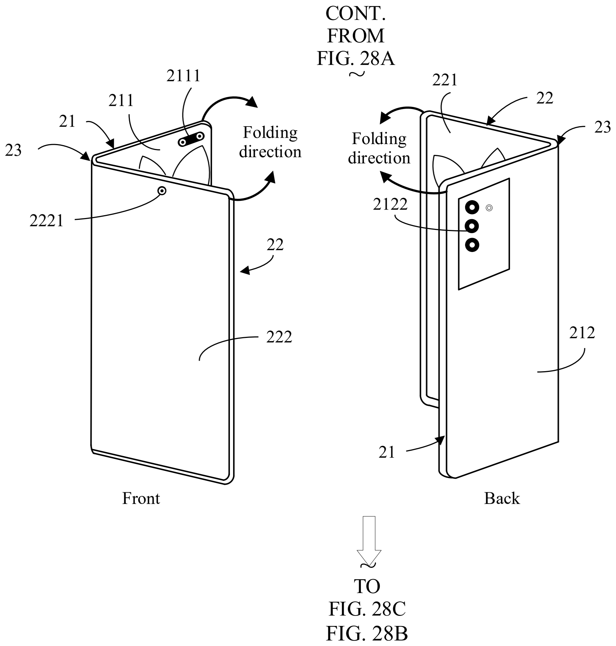

When the foldable screen mobile phone 20 is in the unfolded state shown in FIG. 28A, and the first internal display screen 211 and the second internal display screen 221 are simultaneously turned on, the user may gradually fold the foldable screen mobile phone 20 inward (in a direction shown by an arrow in FIG. 28A), so that the foldable screen mobile phone 20 is in a standing state, as shown in FIG. 28B.

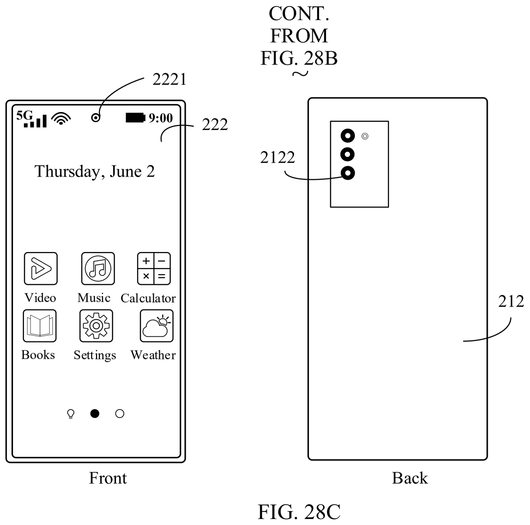

When the foldable screen mobile phone 20 is in a standing state, if the included angle between the first mechanical part 21 and the second mechanical part 22 is greater than 45°, the first internal display screen 211 and the second internal display screen 221 are simultaneously turned on. When the included angle between the first mechanical part 21 and the second mechanical part 22 gradually decreases to approximately 45°, the first internal display screen 211 and the second internal display screen 221 are turned off, the external display screen 222 is turned on, and the external display screen 222 displays the to-be-displayed content. During subsequent folding, only the external display screen 222 is always turned on, until the included angle between the first mechanical part 21 and the second mechanical part 22 is approximately 0° and a folded state shown in FIG. 28C is presented.

As shown in FIG. 28C, when the foldable screen mobile phone 20 is in a folded state, the first internal display screen 211 and the second internal display screen 221 face each other, and are folded inside, and the external display screen 222 is located outside. In a folded state, the outgoing light direction of the external display screen 222 is the same as the incoming light direction of the rear-facing camera 2122.

When the inward foldable screen mobile phone implements the functions described in the foregoing embodiments, a difference between the inward foldable screen mobile phone and the outward foldable screen mobile phone lies in that the inward foldable screen mobile phone in an unfolded state displays, jointly through the first internal display screen and the second internal display screen, an interface of a primary screen of the outward foldable screen mobile phone in a folded state. After a rear selfie function is accessed in the camera application, the first internal display screen and the second internal display screen are turned off, the external display screen is turned on, and an image shooting preview interface of the rear selfie function is displayed through the external display screen. In addition, in the foregoing embodiments, interface changes triggered by unfolding the outward foldable screen mobile phone to an unfolded state may be triggered by folding the inward foldable screen mobile phone to a folded state.

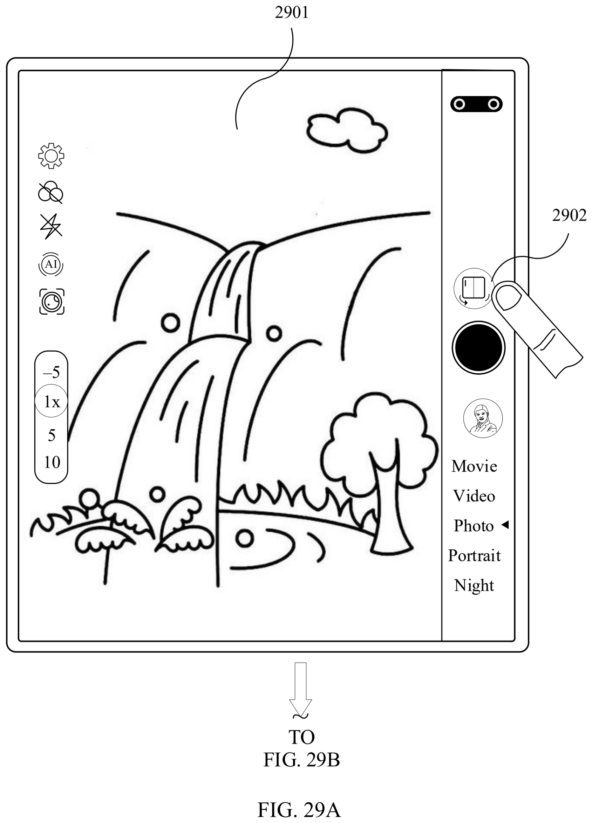

For example, FIG. 29A to FIG. 29C are a diagram of an example of interface changes based on an inward foldable screen mobile phone accessing a rear selfie function according to an embodiment of this application. As shown in FIG. 29A, when the foldable screen (inward foldable screen) mobile phone is in an unfolded state, the first internal display screen and the second internal display screen of the foldable screen mobile phone are simultaneously in a screen-on state, the external display screen is in a screen-off state, and an image shooting preview interface 2901 is displayed on the first internal display screen and the second internal display screen. The image shooting preview interface 2901 includes a rear selfie control 2902.

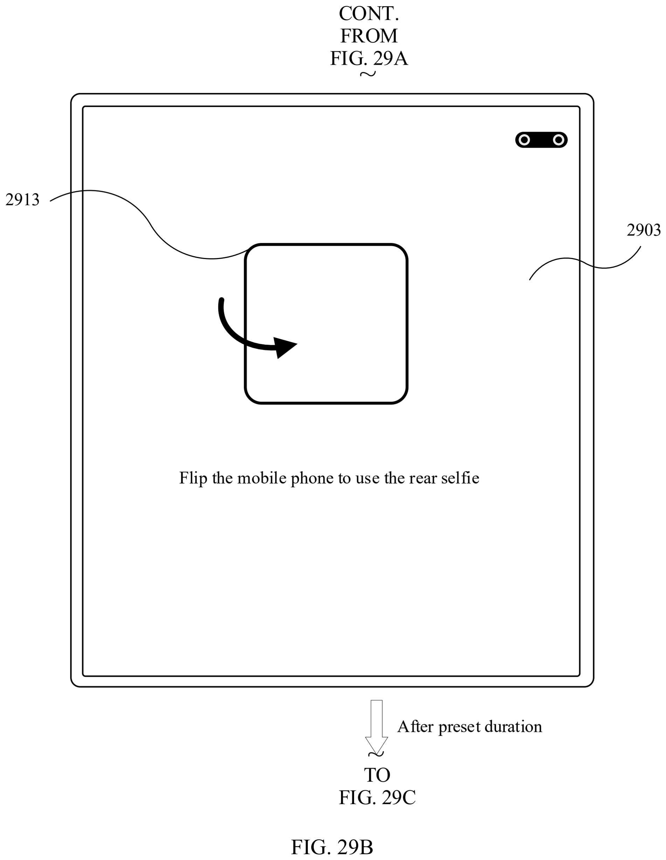

The user taps the rear selfie control 2902. In response to the user operation, the foldable screen mobile phone displays the flip guide interface 2903 jointly through the first internal display screen and the second internal display screen, as shown in FIG. 29B. Content of a flip guide interface 2903 may be similar to content of the flip guide interface 1105. A difference lies in that a structural state of a foldable screen mobile phone diagram 2913 is different.

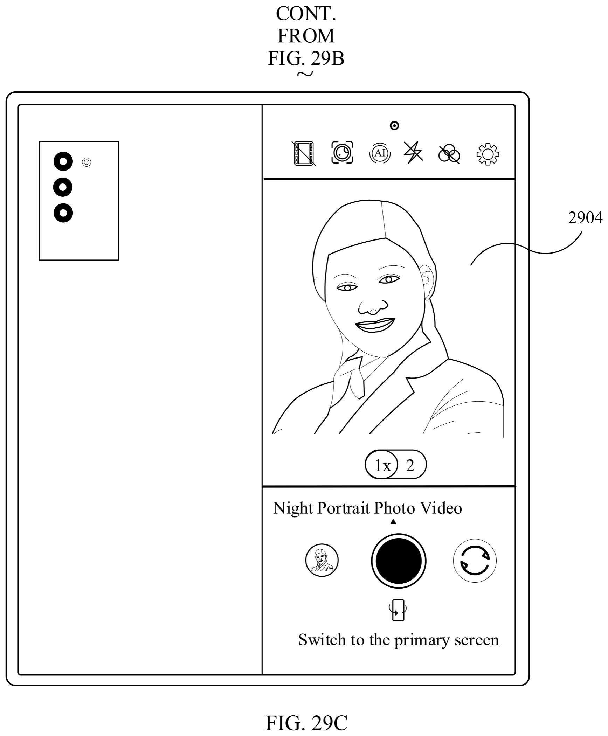

After the flip guide interface 2903 is displayed for preset duration (for example, 3 seconds), the rear selfie function is accessed in the camera application. Specifically, the first internal display screen and the second internal display screen of the foldable screen mobile phone are turned off, and the external display screen is controlled to be turned on. Simultaneously, an image is obtained by using the rear-facing camera, and an image shooting preview interface 2904 is displayed through the external display screen. The image shooting preview interface 2904 includes the image obtained by using the rear-facing camera. After the user flips the foldable screen mobile phone, a side on which the external display screen is located (namely, a side on which the rear-facing camera is located) faces the user, and a side on which the first internal display screen and the second internal display screen are located faces away from the user. In this way, an image of the user obtained by using the rear-facing camera (namely, a selfie image) can be displayed on the image shooting preview interface 2904, as shown in FIG. 29C.

The foregoing describes in detail examples of the image shooting method provided in embodiments of this application. It may be understood that, to implement the foregoing functions, the electronic device includes corresponding hardware and/or software modules for performing the functions. A person skilled in the art should be easily aware that, with reference to units and algorithm steps in examples described in embodiments disclosed in this specification, this application can be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the electronic device may be divided into functional modules based on the foregoing method embodiments. For example, each functional module may be obtained through division based on each corresponding function, for example, a detection unit, a processing unit, or a display unit, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

It should be noted that all related content of the steps in the foregoing method embodiments may be cited in function descriptions of corresponding functional modules. Details are not described herein again.

The electronic device provided in embodiments is configured to execute the foregoing image shooting method, and therefore can achieve the same effect as the foregoing implementation method.

During use of an integrated unit, the electronic device may further include a processing module, a storage module, and a communication module. The processing module may be configured to control and manage an action of the electronic device. The storage module may be configured to support the electronic device in executing storage program code, data, and the like. The communication module can be configured to support communication between the electronic device and another device.

The processing module may be a processor or a controller. The processing module may implement or execute logical blocks, modules, and circuits in various examples described with reference to content disclosed in this application. The processor may be alternatively a combination for implementing a computing function, for example, a combination including one or more microprocessors or a combination of a digital signal processor (digital signal processing, DSP) and a microprocessor. The storage module may be a memory. The communication module may be specifically a device that interacts with another electronic device by using a radio frequency circuit, a Bluetooth chip, a Wi-Fi chip, or the like.

In an embodiment, when the processing module is a processor, and the storage module is a memory, the electronic device in embodiments may be a device having the structure shown in FIG. 6.

An embodiment of this application further provides a computer-readable storage medium. The computer-readable storage medium stores a computer program. When the computer program is executed by a processor, the processor is enabled to perform the image shooting method of any one of the foregoing embodiments.

An embodiment of this application further provides a computer program product. When the computer program product runs on a computer, the computer performs the foregoing related steps, to implement the image shooting method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the image shooting method in the foregoing method embodiments.

The electronic device, the computer-readable storage medium, the computer program product, or the chip provided in embodiments can be configured to perform the corresponding method provided above. Therefore, for beneficial effects that can be achieved, refer to the beneficial effects of the corresponding method provided above. Details are not described herein again.

Based on descriptions of the foregoing implementations, a person skilled in the art may understand that, for a purpose of convenient and brief description, division into the foregoing functional modules is used as an example for illustration. In actual application, the foregoing functions may be allocated to different functional modules and implemented as required. In other words, an inner structure of an apparatus is divided into different functional modules to implement all or some of the functions described above.

In the several embodiments provided in this application, it should be understood that the disclosed apparatuses and methods may be implemented in other manners. For example, the described apparatus embodiment is only an example. For example, division into the modules or the units is only logical function division and may be other division in an actual implementation. For example, a plurality of units or components may be combined or integrated into another apparatus, or some characteristics may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions in embodiments.

In addition, functional units in embodiments of this application can be integrated into one processing unit, or each of the units can exist alone physically, or two or more units can be integrated into one unit. The integrated unit can be implemented in a form of hardware, or can be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application should be subject to the protection scope of the claims.

## Claims

1. An image shooting method, wherein the method is performed by an electronic device, the electronic device comprises a foldable screen, a front-facing camera, and a rear-facing camera, the foldable screen comprises a first screen and a second screen, the front-facing camera and the first screen are on a same side, the rear-facing camera and the first screen face away from each other, when the electronic device is in an unfolded state, the first screen and the second screen are on a same side, and when the electronic device is in a folded state, the second screen and the rear-facing camera are on a same side, and the method comprises:
when the electronic device is in a folded state, the first screen is in a screen-on state, and the second screen is in a screen-off state, displaying a first image shooting preview interface through the first screen, wherein the first image shooting preview interface comprises a first control and a second control, and the second control is used to control switching between the front-facing camera and the rear-facing camera;
receiving a first operation performed by a user on the first control; and
in response to the first operation, controlling the first screen to be turned off, controlling the second screen to be turned on, and displaying a second image shooting preview interface through the second screen, wherein the second image shooting preview interface comprises an image obtained by using the rear-facing camera.

2. The method according to claim 1, wherein displaying the first image shooting preview interface through the first screen comprises:
displaying a third image shooting preview interface through the first screen, wherein the third image shooting preview interface comprises the second control;
receiving a second operation on the second control performed by the user on the third image shooting preview interface; and
in response to the second operation, displaying the first image shooting preview interface through the first screen.

3. The method according to claim 2, wherein the third image shooting preview interface further comprises an operation guide indicator, and the second operation is an operation, performed on the second control, of sliding toward the operation guide indicator.

4. The method according to claim 3, wherein the operation guide indicator is displayed above the second control, and the second operation is a slide-up operation.

5. The method according to any one of claims 2 to 4, wherein the third image shooting preview interface further comprises a camera setting control, and the method further comprises:
in response to a third operation performed by the user on the camera setting control, displaying a camera setting interface through the first screen, wherein the camera setting interface comprises a first option, the first option is used to set a layout of the first control and the second control on an image shooting preview interface to a first manner or a second manner, and a current layout is the first manner; and
displaying a fourth image shooting preview interface through the first screen in response to an operation of switching the layout to the second manner by using the first option and exiting the camera setting interface by the user, wherein the fourth image shooting preview interface comprises the first control and the second control that are displayed in a tiled manner.

6. The method according to claim 5, wherein displaying a fourth image shooting preview interface through the first screen in response to an operation of switching the layout to the second manner by using the first option and exiting the camera setting interface by the user comprises:
displaying a first pop-up window in response to a fourth operation performed by the user on the first option, wherein the first pop-up window comprises a second option corresponding to the first manner and a third option corresponding to the second manner, the second option is in a selected state, and the third option is in an unselected state;
in response to a fifth operation performed by the user on the third option, displaying the second option in an unselected state, and displaying the third option in a selected state; and
in response to closing the first pop-up window and exiting the camera setting interface by the user, displaying the fourth image shooting preview interface through the first screen.

7. The method according to claim 1, wherein displaying the first image shooting preview interface through the first screen comprises:
in response to starting a camera application in a folded state by the user for the first time, displaying the first image shooting preview interface, wherein the first image shooting preview interface further comprises an image obtained by using the rear-facing camera and first guide information, wherein the first guide information is used to guide the user to take a selfie by using the rear-facing camera.

8. The method according to claim 7, wherein the method further comprises:
in response to a sixth operation performed by the user on a blank area on the first image shooting preview interface, enabling the first guide information to disappear, and displaying a fifth image shooting preview interface through the first screen, wherein the fifth image shooting preview interface comprises an image obtained by using the rear-facing camera, the second control, second guide information, and a sliding guide animation, and the second guide information and the sliding guide animation are used to guide the user to perform a sliding operation on the second control.

9. The method according to claim 8, wherein the method further comprises:
in response to a seventh operation performed by the user on the second control on the fifth image shooting preview interface, displaying a sixth image shooting preview interface through the first screen, wherein the sixth image shooting preview interface displays an image obtained by using the front-facing camera, the second control, the second guide information, and the sliding guide animation.

10. The method according to claim 1, wherein displaying the first image shooting preview interface through the first screen comprises:
in response to an operation of starting a camera application by the user, displaying the first image shooting preview interface, wherein the first control and the second control are displayed on the first image shooting preview interface in a tiled manner.

11. The method according to claim 10, wherein the first image shooting preview interface comprises an image obtained by using the rear-facing camera, and the method further comprises:
in response to an eighth operation performed by the user on the second control on the first image shooting preview interface, displaying a seventh image shooting preview interface, wherein the seventh image shooting preview interface comprises an image obtained by using the front-facing camera, the first control, the second control, and a third control, and the first control and the second control are displayed on the seventh image shooting preview interface in a tiled manner; and
in response to a ninth operation performed by the user on the third control, controlling the first screen to be turned off, controlling the second screen to be turned on, and displaying the second image shooting preview interface through the second screen.

12. The method according to claim 11, wherein the method further comprises:
if it is detected that ambient light luminance is less than a preset threshold, displaying first guide information on the seventh image shooting preview interface, wherein the first guide information is used to guide the user to take a selfie by using the rear-facing camera.

13. The method according to any one of claims 1 to 12, wherein controlling the first screen to be turned off, controlling the second screen to be turned on, and displaying the second image shooting preview interface through the second screen in response to the first operation comprises:
in response to the first operation, displaying a first flip guide interface through the first screen, wherein the first flip guide interface is used to guide the user to flip the electronic device; and
after the first flip guide interface is displayed for first preset duration, controlling the first screen to be turned off, controlling the second screen to be turned on, and displaying the second image shooting preview interface through the second screen.

14. The method according to any one of claims 1 to 13, wherein an image shooting mode in the second image shooting preview interface is the same as an image shooting mode in the first image shooting preview interface.

15. The method according to any one of claims 1 to 14, wherein the second image shooting preview interface further comprises third guide information, and the third guide information is used to guide the user to look at the rear-facing camera.

16. The method according to any one of claims 1 to 15, wherein the electronic device further comprises a flash, the flash and the rear-facing camera are disposed on a same side, the second image shooting preview interface further comprises a flash switch, and the method further comprises:
in response to an operation performed by the user on the flash switch, displaying an eighth image shooting preview interface through the second screen, wherein the eighth image shooting preview interface comprises an image obtained by using the rear-facing camera and a fourth control; and
in response to an operation performed by the user on the fourth control, controlling the flash to always remain on, and controlling screen luminance of the second screen to be increased.

17. The method according to any one of claims 1 to 16, wherein the second image shooting preview interface comprises a fifth control and a sixth control, and after displaying the second image shooting preview interface through the second screen, the method further comprises:
in response to an operation performed by the user on the fifth control or the sixth control, displaying a second flip guide interface through the second screen, wherein the second flip guide interface is used to guide the user to flip the electronic device; and
after the second flip guide interface is displayed for second preset duration, controlling the second screen to be turned off, controlling the first screen to be turned on, and displaying a ninth image shooting preview interface through the first screen, wherein the ninth image shooting preview interface comprises an image obtained by using the rear-facing camera and the second control.

18. The method according to claim 17, wherein after controlling the second screen to be turned off, controlling the first screen to be turned on, and displaying the ninth image shooting preview interface through the first screen, the method further comprises:
if a first function has not been enabled, displaying a second pop-up window through the first screen, wherein the second pop-up window is used for the user to select whether to enable the first function.

19. The method according to claim 17 or 18, wherein after controlling the second screen to be turned off, controlling the first screen to be turned on, and displaying the ninth image shooting preview interface through the first screen, the method further comprises:
if the layout of the first control and the second control on the image shooting preview interface has not been switched, displaying a third pop-up window through the first screen, wherein the third pop-up window is used for the user to select whether to switch the layout.

20. The method according to any one of claims 1 to 19, wherein the method further comprises:
when the second image shooting preview interface is displayed on the second screen, in response to unfolding the electronic device to an unfolded state by the user, controlling the first screen to be turned on, and displaying a tenth image shooting preview interface jointly through the first screen and the second screen, wherein the tenth image shooting preview interface comprises an image obtained by using the front-facing camera.

21. An electronic device, comprising a processor, a memory, and an interface, wherein
the processor, the memory, and the interface cooperate with each other, to enable the electronic device to perform the method according to any one of claims 1 to 20.

22. A computer-readable storage medium, wherein the computer-readable storage medium stores a computer program, and when the computer program is executed by a processor, the processor calls instructions, to enable the electronic device to perform the method according to any one of claims 1 to 20.
